(19) Europäisches Patentamt
European Patent Office
Office européen des brevets

(11) EP 3 847 220 B1

(12) **EUROPEAN PATENT SPECIFICATION**

(45) Date of publication and mention of the grant of the patent:
**05.03.2025 Bulletin 2025/10**

(21) Application number: **19772920.5**

(22) Date of filing: **05.09.2019**

(51) International Patent Classification (IPC):
***C09J 7/35*** *(2018.01)*

(52) Cooperative Patent Classification (CPC):
**C09J 7/35;** C09J 2301/416; C09J 2433/00

(86) International application number:
**PCT/US2019/049682**

(87) International publication number:
**WO 2020/051290 (12.03.2020 Gazette 2020/11)**

(54) **UV-CURABLE HOT MELT ADHESIVE COMPOSITIONS FOR FLOORING APPLICATIONS**

UV-HÄRTBARE HEISSSCHMELZKLEBSTOFFZUSAMMENSETZUNGEN FÜR FUSSBODENANWENDUNGEN

COMPOSITIONS ADHÉSIVES THERMOFUSIBLES DURCISSABLES PAR UV POUR DES APPLICATIONS DE REVÊTEMENT DE SOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2018 US 201862728495 P**

(43) Date of publication of application:
**14.07.2021 Bulletin 2021/28**

(73) Proprietor: **BASF SE**
**67056 Ludwigshafen am Rhein (DE)**

(72) Inventors:
- **CUCALA, Augusto, Ramos**
  **Southfield, MI 48034 (US)**
- **CUNKLE, Glen**
  **Southfield, MI 48033 (US)**
- **TOBING, Singa, D.**
  **Southfield, MI 48033 (US)**
- **CHACKO, Sujith**
  **Southfield, MI 48033 (US)**
- **LU, Limei**
  **Southfield, MI 48034 (US)**
- **GERST, Matthias**
  **67056 Ludwigshafen (DE)**

(74) Representative: **Altmann Stößel Dick Patentanwälte PartG mbB**
**Isartorplatz 1**
**80331 München (DE)**

(56) References cited:
**EP-A1- 1 809 717**
**EP-A1- 3 514 213**
**DE-U1- 202010 001 353**
**US-A- 5 128 386**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 847 220 B1

## Description

### FIELD

The present technology is generally related to the field of flooring applications. More particularly, the technology relates to floor coverings that have a UV-curable hot melt adhesive composition applied to the back of the desired floor covering and allows the user to directly place the floor covering at the desired place after removing the protective liner covering the adhesive.

US 5,128,386 A relates to UV curable hotmelt adhesives and it discloses a UV crosslinkable copolymer of an ester of (meth)acrylic acid and a C1-C24 alkanol, and from 0.01 to 20% by weight, based on the copolymer, of at least one copolymerized monomer of a specific formula R-C(=O)-$R^1$.

### SUMMARY

In one aspect, provided herein is an article of manufacture containing:

a floor covering element having an obverse face and a reverse face;
an adhesive layer applied to the reverse face; and
a release liner in adherence to the adhesive layer;
wherein:
the adhesive layer contains a UV-curable hot melt adhesive composition comprising a UV-curable acrylic co-polymer derived from a (meth)acrylic co-polymer covalently bound to a compound of Formula (I), (II), or (III) through the olefinic moiety of the compound:

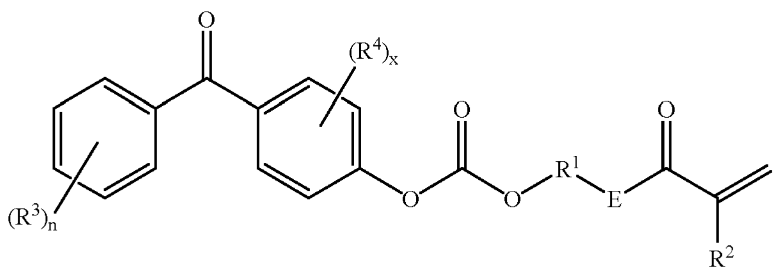

(I);

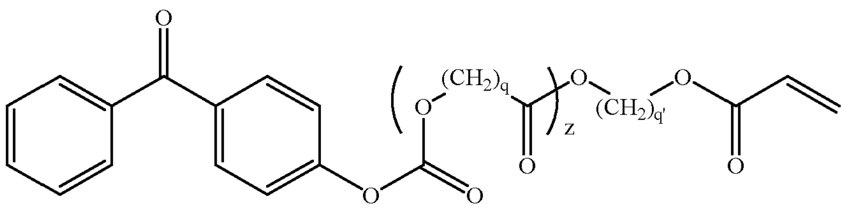

(II);

or

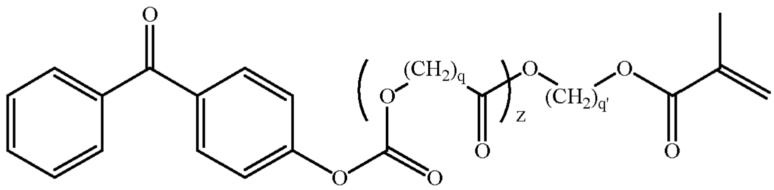

(III);

wherein:
$R^1$ is a linker group, wherein:

$R^1$ is arylene, cycloalkylenyl, $-[C(R^6)(R^7)]_{n'}-$, or $-\{[C(R^6)(R^7)]_{n'}C(O)\}_{x'}[O(C(R^6)(R^7))_y]_p-$;
each $R^6$ is individually H, $OR^{10}$, alkyl, aryl, or C(O)OH;
each $R^7$ is individually H, $OR^{10}$, alkyl, or aryl;

each $R^{10}$ is individually H or alkyl;
n' is 1-12;
y is 1, 2, or 3;
p is 1, 2, or 3; and
x' is 1-10;
$R^2$ is H or alkyl;
E is O or $NR^5$
each $R^3$ is individually a substituent selected from the group consisting of halogen, alkyl, O-alkyl, cycloalkyl, and an alkyl group containing a heteroatom, a halogen, a carbonyl group, alkoxy, or amino group;
each $R^4$ is individually a substituent selected from the group consisting of halogen, alkyl, O-alkyl, cycloalkyl, and an alkyl group containing a heteroatom, a halogen, a carbonyl group, alkoxy, or amino group;
$R^5$ is H or alkyl;
n is 0-5;
x is 0-4; and
each of q, q', and z are individually 1-10.

In some embodiments, $R^1$ is $-(CH_2)_{n'}-$, cyclohexan-1,4-yl, phenylen-1,4-yl, $-[(CH_2)_3C(O)]_2-O-(CH_2)_y-$, $-C(CH_3)(C(O)OH)-$, $-C(H)(phenyl)C(CH_3)(H)-$, or $-CH_2C(CH_3)_2CH_2-$. In some embodiments, $R^1$ is $-(CH_2)_3-$; E is O; n is 0, x is 0, and $R^2$ is H or methyl.

In some embodiments, the compound of Formula (I), (II), or (III) is:

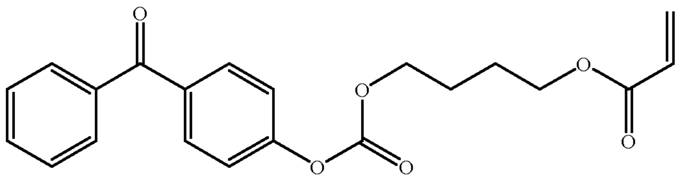

4-(((4-benzoylphenoxy)carbonyl)oxy)butyl acrylate;

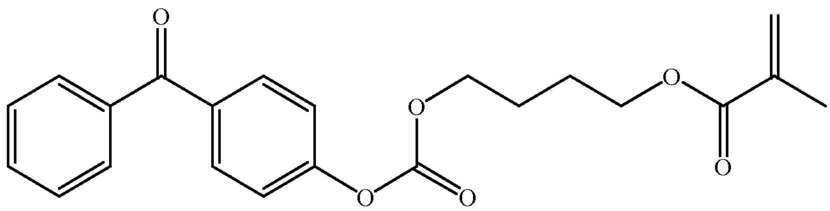

4-(((4-benzoylphenoxy)carbonyl)oxy)butyl methacrylate;

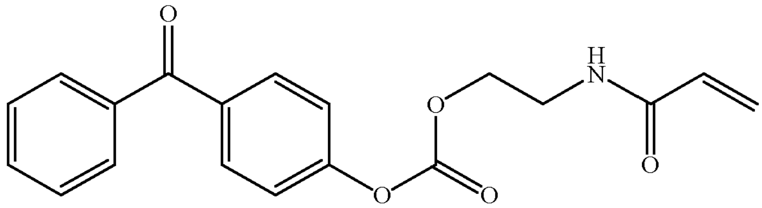

2-acrylamidoethyl (4-benzoylphenyl) carbonate;

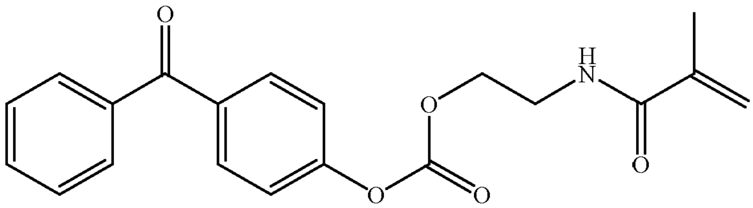

4-benzoylphenyl (2-methacrylamidoethyl) carbonate;

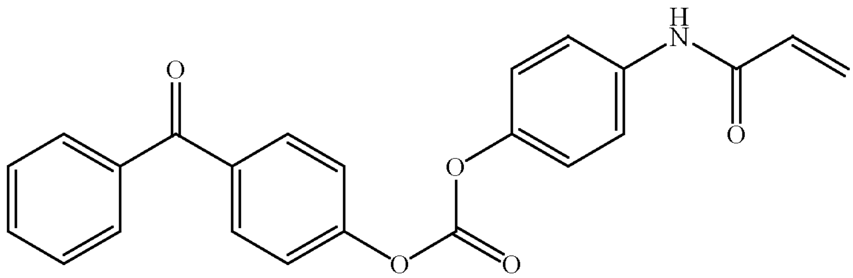

4-acrylamidophenyl (4-benzoylphenyl) carbonate;

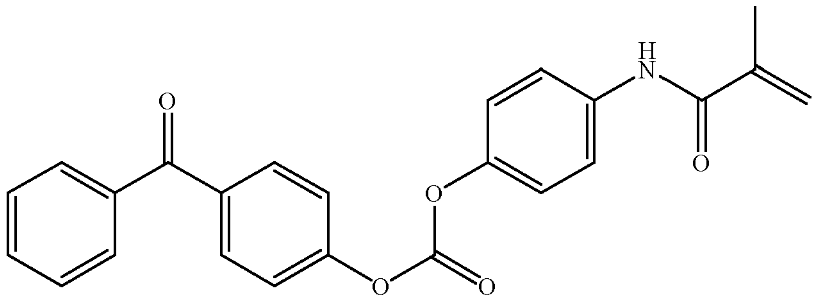

4-benzoylphenyl (4-methacrylamidophenyl) carbonate;

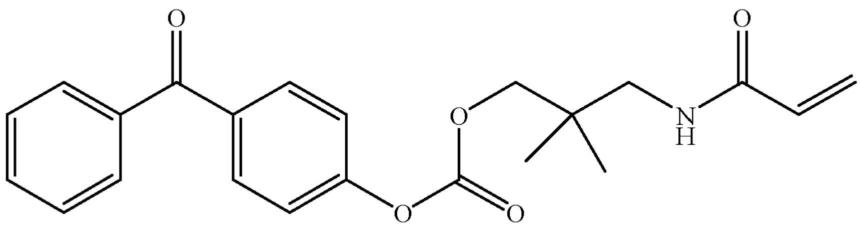

3-acrylamido-2,2-dimethylpropyl (4-benzoylphenyl) carbonate;

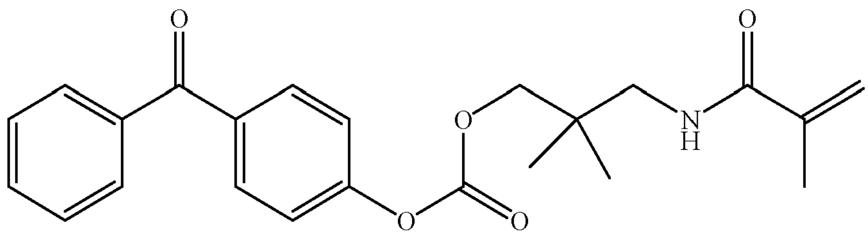

4-benzoylphenyl (3-methacrylamido-2,2-dimethylpropyl) carbonate;

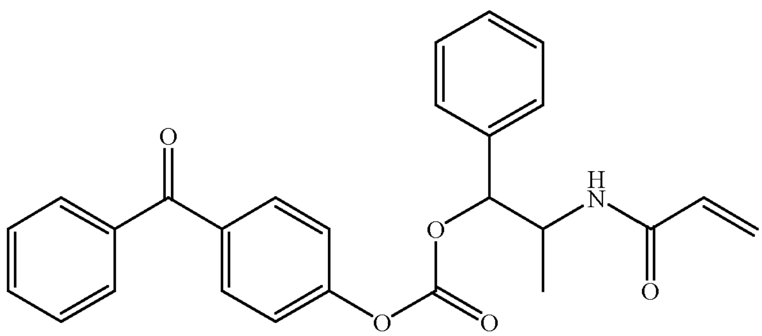

2-acrylamido-1-phenylpropyl (4-benzoylphenyl) carbonate;

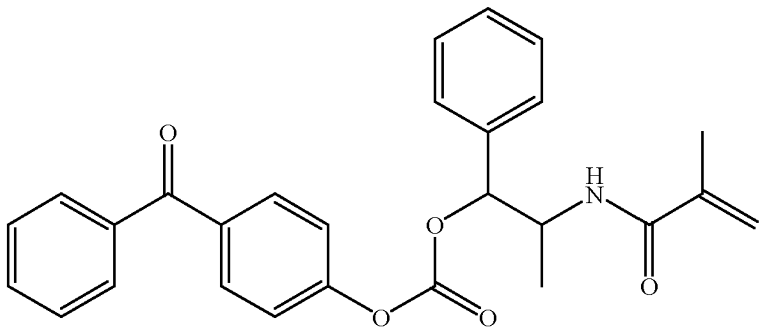

4-benzoylphenyl (2-methacrylamido-1-phenylpropyl) carbonate;

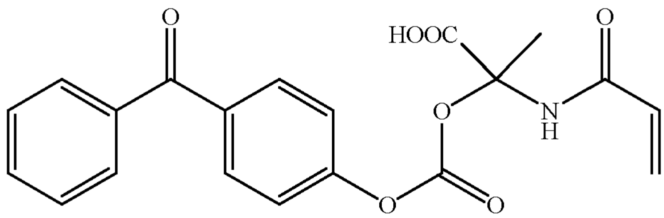

2-acrylamido-2-(((4-benzoylphenoxy)carbonyl)oxy)propanoic acid;

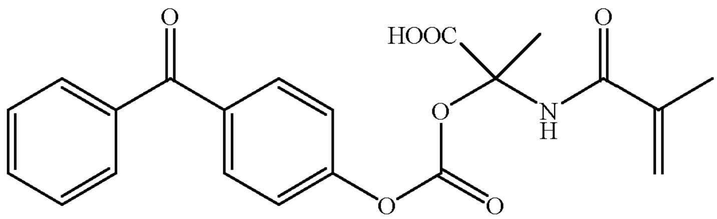

2-(((4-benzoylphenoxy)carbonyl)oxy)-2-methacrylamidopropanoic acid;

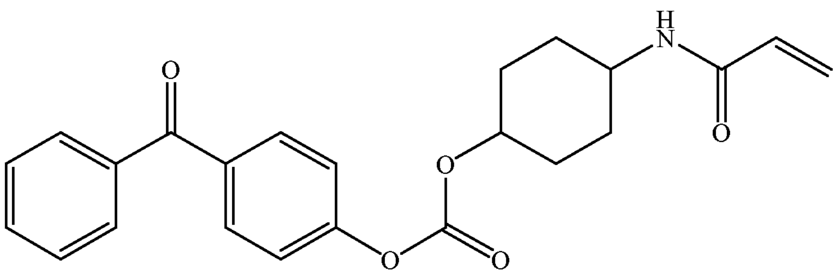

4-acrylamidocyclohexyl (4-benzoylphenyl) carbonate;

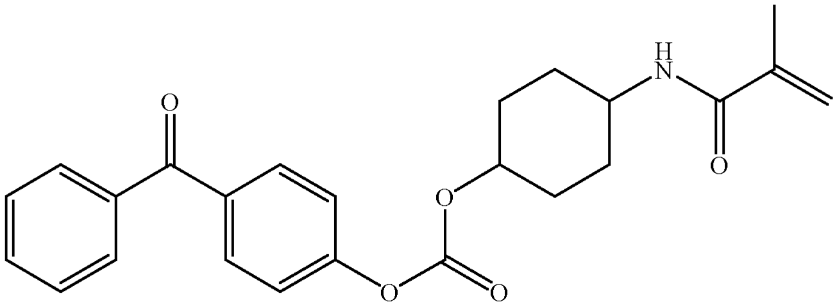

4-benzoylphenyl (4-methacrylamidocyclohexyl) carbonate;

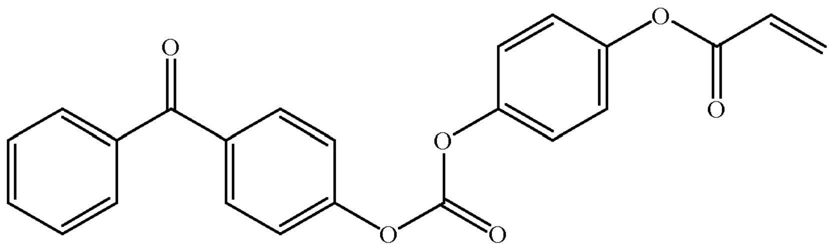

4-(((4-benzoylphenoxy)carbonyl)oxy)phenyl acrylate; or

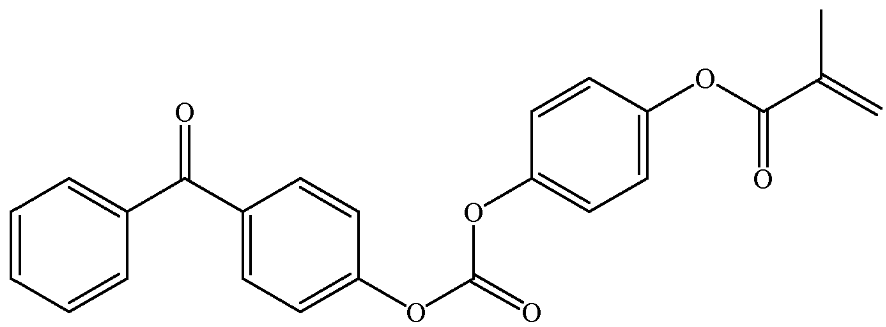

4-(((4-benzoylphenoxy)carbonyl)oxy)phenyl methacrylate.

In some embodiments, the compound of Formula (I), (II), or (III) is present from 0.01 wt% to 5 wt%, based on the solids of the adhesive composition. In some embodiments, the (meth)acrylic co-polymer is derived from a (meth)acrylic monomer containing acrylic acid, methacrylic acid, methylmethacrylic acid, methylmethacrylate, ethylmethacrylate, a hydroxy vinyl ether, methyl acrylate, ethyl acrylate, n-propyl acrylate, isopropyl acrylate, n-butyl acrylate (BA), n-decyl acrylate, isobutyl acrylate, n-amyl acrylate, n-hexyl acrylate, isoamyl acrylate, 2-hydroxyethyl acrylate, 2-hydroxypropyl acrylate, N,N-dimethylaminoethyl acrylate, N,N-diethylaminoethyl acrylate, t-butylaminoethyl acrylate, 2-sulfoethyl acrylate, trifluoroethyl acrylate, glycidyl acrylate, benzyl acrylate, allyl acrylate, 2-n-butoxyethyl acrylate, 2-chloroethyl acrylate, sec-butyl-acrylate, tert-butyl acrylate, 2-ethylbutyl acrylate, cinnamyl acrylate, crotyl acrylate, cyclohexyl acrylate, cyclopentyl acrylate, 2-ethoxyethyl acrylate, furfuryl acrylate, hexafluoroisopropyl acrylate, methallyl acrylate, 3-methoxybutyl acrylate, 2-methoxybutyl acrylate, 2-nitro-2-methylpropyl acrylate, n-octylacrylate, 2-ethylhexyl acrylate, 2-phenoxyethyl acrylate, 2-phenylethyl acrylate, phenyl acrylate, propargyl acrylate, tetrahydrofurfuryl acrylate and tetrahydropyranyl acrylate, methyl methacrylate, ethyl methacrylate, n-propyl methacrylate, n-butyl methacrylate (BMA), isopropyl methacrylate, isobutyl methacrylate, n-amyl methacrylate, n-hexyl methacrylate, isoamyl methacrylate, 2-hydroxyethyl methacrylate, 2-hydroxypropyl methacrylate, N,N-dimethylaminoethyl methacrylate, N,N-diethylaminoethyl methacrylate, t-butylaminoethyl methacrylate, 2-sulfoethyl methacrylate, trifluoroethyl methacrylate, glycidyl methacrylate (GMA), benzyl methacrylate, allyl methacrylate, 2-n-butoxyethyl methacrylate, 2-chloroethyl methacrylate, sec-butyl-methacrylate, tert-butyl methacrylate, 2-ethylbutyl methacrylate, cinnamyl methacrylate, crotyl methacrylate, cyclohexyl methacrylate, cyclopentyl methacrylate, 2-ethoxyethyl methacrylate, furfuryl methacrylate, hexafluoroisopropyl methacrylate, methallyl methacrylate, 3-methoxybutyl methacrylate, 2-methoxybutyl methacrylate, 2-nitro-2-methylpropyl methacrylate, n-octylmethacrylate, 2-ethylhexyl methacrylate, 2-phenoxyethyl methacrylate, 2-phenylethyl methacrylate, phenyl methacrylate, propargyl methacrylate, tetrahydrofurfuryl methacrylate, tetrahydropyranyl methacrylate, hydroxyalkyl acrylates and methacrylates, acrylic acid and its salts, acrylonitrile, acrylamide, methyl alpha-chloroacrylate, methyl 2-cyanoacrylate, N-ethylacrylamide, N,N-diethylacrylamide, acrolein, methacrylic acid and its salts, methacrylonitrile, methacrylamide, N-methylmethacrylamide, N-ethylmethacrylamide, N,N-diethylmethacrylamide, N,N-dimethylmethacrylamide, N-phenylmethacrylamide, methacrolein, or a mixture of any two or more thereof.

In some embodiments, the UV-curable acrylic polymer has a weight average molecular weight ($M_W$) from 30,000 g/mol to 300,000 g/mol. In some embodiments, the weight average molecular weight ($M_W$) is from 40,000 g/mol to 300,000 g/mol. In some embodiments, the weight average molecular weight ($M_W$) is from 50,000 g/mol to 300,000 g/mol. In some embodiments, the weight average molecular weight ($M_W$) is from 100,000 g/mol to 300,000 g/mol. The weight average molecular weight ($M_W$) is determined by the GPC method defined herein.

In some embodiments, the UV-curable hot melt adhesive composition further contains an antioxidant. In some embodiments, the UV-curable hot melt adhesive composition further contains a tackifier. In some embodiments, the UV-curable hot melt adhesive composition is essentially free of solvents and volatile components.

In another aspect, provided herein is a method for preparing a floor covering element, the method containing:

heating a UV-curable hot melt adhesive composition to a molten state at a temperature from 80 °C to 160 °C to provide a molten UV-curable hot melt adhesive;

applying the molten UV-curable hot melt adhesive to a reverse face of the floor covering element to provide an adhesive-coated floor covering;

exposing the UV-curable hot melt adhesive on the reverse face of the floor covering to ultraviolet radiation having a wavelength of 250 nm to 260 nm to photoinitiate curing of the disposed UV-curable hot melt adhesive to the floor covering element to form a cured floor covering element having cured adhesive; and

applying a release liner to cured adhesive;

wherein:

the UV-curable hot melt adhesive composition contains a UV-curable acrylic co-polymer derived from a (meth)acrylic co-polymer covalently bound to a compound of Formula (I), (II), or (III) through the olefinic moiety of the compound:

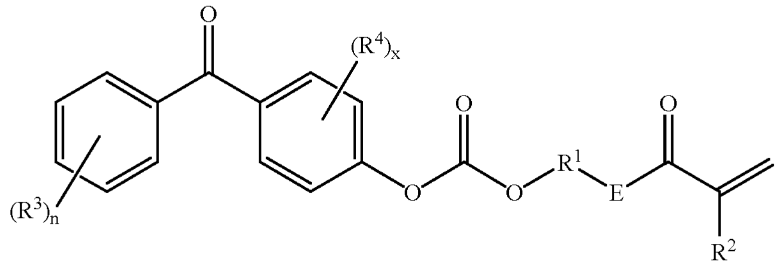

(I);

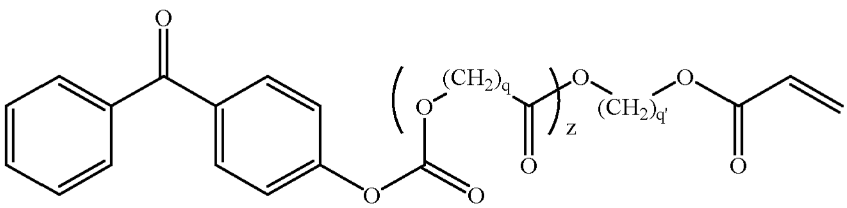

(II);

or

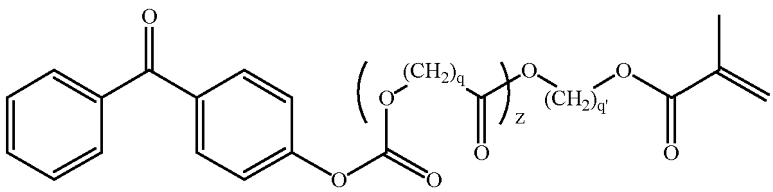

(III);

wherein:

$R^1$ is a linker group, wherein:

$R^1$ is arylene, cycloalkylenyl, $-[C(R^6)(R^7)]_{n'}-$, or $-\{[C(R^6)(R^7)]_{n'}C(O)\}_{x'}[O(C(R^6)(R^7))_y]_p-$;

each $R^6$ is individually H, $OR^{10}$, alkyl, aryl, or C(O)OH; each $R^7$ is individually H, $OR^{10}$, alkyl, or aryl;

each $R^{10}$ is individually H or alkyl;

n' is 1-12;

y is 1, 2, or 3;

p is 1, 2, or 3; and

x' is 1-10;

$R^2$ is H or alkyl;

E is O or $NR^5$

each $R^3$ is individually a substituent selected from the group consisting of halogen, alkyl, O-alkyl, cycloalkyl, and an alkyl group containing a heteroatom, a halogen, a carbonyl group, alkoxy, or amino group;

each $R^4$ is individually a substituent selected from the group consisting of halogen, alkyl, O-alkyl, cycloalkyl, and an alkyl group containing a heteroatom, a halogen, a carbonyl group, alkoxy, or amino group;

$R^5$ is H or alkyl;

n is 0-5;

x is 0-4; and
each of q, q', and z are individually 1-10.

In some embodiments, the heating a UV-curable hot melt adhesive composition to a molten state is at a temperature from 120 °C to 160 °C to provide a molten UV-curable hot melt adhesive.

**DETAILED DESCRIPTION**

Various embodiments are described hereinafter. It should be noted that the specific embodiments are not intended as an exhaustive description or as a limitation to the broader aspects discussed herein. One aspect described in conjunction with a particular embodiment is not necessarily limited to that embodiment and can be practiced with any other embodiment(s).

As used herein, especially in the Example section, "about" will be understood by persons of ordinary skill in the art and will vary to some extent depending upon the context in which it is used. If there are uses of the term which are not clear to persons of ordinary skill in the art, given the context in which it is used, "about" will mean up to plus or minus 10% of the particular term.

The use of the terms "a" and "an" and "the" and similar referents in the context of describing the elements (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the embodiments and does not pose a limitation on the scope of the claims unless otherwise stated. No language in the specification should be construed as indicating any non-claimed element as essential.

In general, "substituted" refers to an organic group *(e.g.,* an alkyl group) in which one or more bonds to a hydrogen atom contained therein are replaced by a bond to non-hydrogen or non-carbon atoms. Substituted groups also include groups in which one or more bonds to a carbon(s) or hydrogen(s) atom are replaced by one or more bonds, including double or triple bonds, to a heteroatom. The present disclosure is understood to include embodiments where, for instance a "substituted alkyl" optionally contains one or more alkene and/or alkyne. A substituted group will be substituted with one or more substituents, unless otherwise specified. In some embodiments, a substituted group is substituted with 1, 2, 3, 4, 5, or 6 substituents. Examples of substituent groups include: halogens (*i.e.,* F, Cl, Br, and I); alkyl; haloalkyl (such as, but not limited to, trifluoroalkyl); hydroxyls; alkoxy, alkenoxy, alkynoxy, aryloxy, aralkyloxy, heterocyclyloxy, and heterocyclylalkoxy groups; aryl groups; heteroaryl groups; cycloalkyl groups; heterocyclyl groups; carbonyls (oxo); carboxyls; esters; urethanes; oximes; carbamates, hydroxylamines; alkoxyamines; aralkoxyamines; thiols; sulfides; sulfoxides; sulfones; sulfonyls; sulfonamides; amines; N-oxides; hydrazines; hydrazides; hydrazones; azides; amides; ureas; amidines; guanidines; enamines; imides; isocyanates; isothiocyanates; cyanates; thiocyanates; imines; nitro groups; and nitriles (*i.e.,* CN).

Alkyl groups include straight chain and branched alkyl groups having from 1 to 20 carbon atoms, and typically from 1 to 12 carbons or, in some embodiments, from 1 to 8, 1 to 6, or 1 to 4 carbon atoms. Examples of straight chain alkyl groups include those with from 1 to 8 carbon atoms such as methyl, ethyl, n-propyl, n-butyl, n-pentyl, n-hexyl, n-heptyl, and n-octyl groups. Examples of branched alkyl groups include, but are not limited to, isopropyl, iso-butyl, sec-butyl, tert-butyl, neopentyl, isopentyl, and 2,2-dimethylpropyl groups. Representative substituted alkyl groups may be substituted one or more times with substituents such as those listed above.

Alkoxy groups are hydroxyl groups (-OH) in which the bond to the hydrogen atom is replaced by a bond to a carbon atom of a substituted or unsubstituted alkyl group as defined above. Examples of linear alkoxy groups include but are not limited to methoxy, ethoxy, propoxy, butoxy, pentoxy, hexoxy, and the like. Examples of branched alkoxy groups include but are not limited to isopropoxy, sec-butoxy, tert-butoxy, isopentoxy, and isohexoxy. Examples of cycloalkoxy groups include but are not limited to cyclopropyloxy, cyclobutyloxy, cyclopentyloxy, and cyclohexyloxy. Representative substituted alkoxy groups may be substituted one or more times with substituents such as those listed above.

Aryl groups are cyclic aromatic hydrocarbons that do not contain heteroatoms. Aryl groups include monocyclic, bicyclic and polycyclic ring systems. Thus, aryl groups include, but are not limited to, phenyl, azulenyl, heptalenyl, biphenylenyl, indacenyl, fluorenyl, phenanthrenyl, triphenylenyl, pyrenyl, naphthacenyl, chrysenyl, biphenyl, anthracenyl, indenyl, indanyl, pentalenyl, and naphthyl groups. In some embodiments, aryl groups contain 6-14 carbons, and in others from 6 to 12 or even 6-10 carbon atoms in the ring portions of the groups. Although the phrase "aryl groups" includes groups containing fused rings, such as fused aromatic-aliphatic ring systems (e.g., indanyl, tetrahydronaphthyl), it does not include aryl groups that have other groups, such as alkyl or halo groups, bonded to one of the ring members. Rather,

groups such as tolyl are referred to as substituted aryl groups. Representative substituted aryl groups may be mono-substituted or substituted more than once. For example, monosubstituted aryl groups include, but are not limited to, 2-, 3-, 4-, 5-, or 6-substituted phenyl or naphthyl groups, which may be substituted with substituents such as those listed above. In some embodiments, an aryl group is a monoradical or a diradical (i.e., an arylene group).

Cycloalkyl groups are cyclic alkyl groups such as, but not limited to, cyclopropyl, cyclobutyl, cyclopentyl, cyclohexyl, cycloheptyl, and cyclooctyl groups. In some embodiments, the cycloalkyl group has 3 to 8 ring members, whereas in other embodiments the number of ring carbon atoms range from 3 to 5, 3 to 6, or 3 to 7. Substituted cycloalkyl groups may be substituted one or more times with non-hydrogen and non-carbon groups as defined above. However, substituted cycloalkyl groups also include rings that are substituted with straight or branched chain alkyl groups as defined above. Representative substituted cycloalkyl groups may be mono-substituted or substituted more than once, such as, but not limited to, 2,2-, 2,3-, 2,4- 2,5- or 2,6-di-substituted cyclohexyl groups, which may be substituted with substituents such as those listed above. In some embodiments, a cycloalkyl group has one or more alkene bonds, but is not aromatic, such as a cycloalkylenyl group.

The term "UV-curable acrylic co-polymer refers to a radiation curable co-polymer derived from a (meth)acrylic co-polymer covalently bound to a photoreactive group. Mixtures or blends with other acrylic polymers may be used. In some embodiments, the UV-curable acrylic co-polymer contains an (meth)acrylic co-polymer backbone molecule that is modified with polymerized photoreactive groups, e.g., a modified benzophenone group that is chemically bonded to the acrylic polymer chain. The polymer is crosslinked by chemical grafting caused by the excitation of the photoinitiator by UV irradiation.

The term "UV-curable adhesive" as used herein means an adhesive composition which is curable upon exposure to actinic and/or ionizing radiation. The term "radiation" is used herein to include actinic radiation such as ultraviolet radiation and ionizing radiation created by the emission of electrons or highly accelerated nuclear particles such as neutrons, alpha-particles etc.

The term "(meth)acrylic" or "(meth)acrylate" refers to acrylic or methacrylic acid, esters of acrylic or methacrylic acid, and salts, amides, and other suitable derivatives of acrylic or methacrylic acid, and mixtures thereof.

In one aspect, an article of manufacture is provided containing: a floor covering element having an obverse face and a reverse face; an adhesive layer applied to the reverse face; and a release liner in adherence to the adhesive layer; wherein: the adhesive layer contains a UV-curable hot melt adhesive composition containing a UV-curable acrylic co-polymer derived from a (meth)acrylic co-polymer covalently bound to a compound of Formula (I), (II), or (III) through the olefinic moiety of the compound:

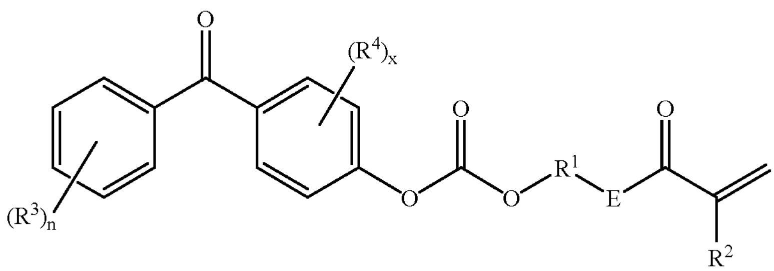

(I);

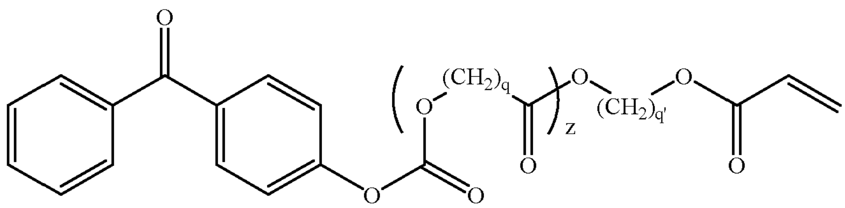

(II);

or

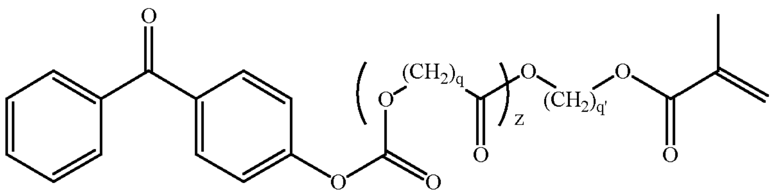

(III);

wherein:
$R^1$ is a linker group, wherein:

$R^1$ is arylene, cycloalkylenyl, $-[C(R^6)(R^7)]_{n'}-$, or $-\{[C(R^6)(R^7)]_{n'}C(O)\}_{x'}[O(C(R^6)(R^7))_y]_p-$;
each $R^6$ is individually H, $OR^{10}$, alkyl, aryl, or C(O)OH; each $R^7$ is individually H, $OR^{10}$, alkyl, or aryl;
each $R^{10}$ is individually H or alkyl;
n' is 1-12;
y is 1, 2, or 3;
p is 1, 2, or 3; and
x' is 1-10;
$R^2$ is H or alkyl;
E is O or $NR^5$;
each $R^3$ is individually a substituent selected from the group consisting of halogen, alkyl, O-alkyl, cycloalkyl, and an alkyl group containing a heteroatom, a halogen, a carbonyl group, alkoxy, or amino group;
each $R^4$ is individually a substituent selected from the group consisting of halogen, alkyl, O-alkyl, cycloalkyl, and an alkyl group containing a heteroatom, a halogen, a carbonyl group, alkoxy, or amino group;
$R^5$ is H or alkyl;
n is 0-5;
x is 0-4; and
each of q, q', and z are individually 1-10.

In some embodiments, the floor covering element is such as carpet, carpet tiles, luxury vinyl tiles (LVT), luxury modular floors (LMF), vinyl tiles, flexible floor tiles, rigid floor tiles, and ceramic tiles and have a protective release liner covering the adhesive to prevent premature application. This allows the user to remove the protective release liner covering the adhesive and install the desired floor covering to the desired place-"peel and stick flooring." This "peel and stick" flooring approach allows for the immediate use of the floor covering, avoids the drying time required with using solvent or water based adhesives, avoids the generation of volatile organic chemical (VOC) emissions, reduces time required for installation, has improved plasticizer and high temperature resistance over hot melt adhesives.

The UV-curable hot melt adhesive composition described herein is used for bonding floor covering elements to substrates made from wood, plastic or, in particular, mineral substrates, such as screeding concrete or ceramic tiles.

In some embodiments, the UV-curable hot melt adhesive composition is especially suitable as a flooring adhesive for bonding floor covering elements such as carpets or other floor coverings made, for example, from PVC (in configurations as multilayer coverings or homogeneous coverings), foam coverings with a textile backing (e.g., jute), polyester nonwoven, rubber coverings, textile coverings with, for example, various backings (such as polyurethane foam, styrene-butadiene foam, or a textile secondary backing), needlefelt floor coverings, polyolefin coverings or linoleum coverings, on substrates such as wood, screeding, concrete, ceramic tiles, or metal substrates.

### Floor Covering Elements

The UV-curable hot melt adhesive composition (the adhesive composition) may be utilized to secure a wide variety of floor covering elements to a sub-floor. Without limitation, the adhesive composition may be utilized to adhesively secure wooden floor covering elements, luxury modular floor (LMF), luxury vinyl tile (LVT), vinyl floor coverings (VCT), ceramic, and floor coverings. According to a certain illustrative embodiment, the adhesive composition may be utilized to adhesively bond a plurality of wooden floor covering elements to a floor substrate. Without limitation, the wooden floor elements include wooden parquet pieces, engineered wood plank, acrylic impregnated plank, prefinished and unfinished fiat milled solids and shorts, bamboo and other exotic wood species.

The floor covering elements may also include low weight bonded flooring material or item, such as, a carpet tile, broadloom carpet, wall to wall carpet, an area rug, carpet, rug, runner, mat, or broadloom.

The floor covering element may have an obverse face and a reverse face. In some variants, the adhesive layer may be applied to the reverse face of the floor covering element. In some variants, the release liner may be applied in adherence to the adhesive layer.

### Floor or Sub-Floor Substrates

The floor covering elements may be bonded to a wide variety of different base sub-floor substrates. Without limitation, for example, the floor covering elements maybe adhesively bonded to plywood sheathing, oriented strand board, particle board, wafer board, cork underlayments, existing vinyl tile and sheet flooring, cementitious underlayments, concrete, masonry, terrazzo, anhydrous underlayments, radiant heat subfloors where temperatures do not exceed 85 °F,

and like flooring substrates. According to certain variants, the floor covering elements may comprise wooden parquet pieces, carpet tile, ceramic tile, luxury vinyl tile, luxury modular floor that are adhesively bonded to a wooden sub-floor with the adhesive composition.

A method for constructing a floor may be described using the UV-curable hot melt adhesive composition in combination with floor covering elements. The method may include applying the UV-curable hot melt adhesive composition to at least a portion of the surface of the flooring substrate and applying the floor covering elements to the layer of adhesive on the surface of the flooring substrate.

**Release Liner**

The release liner may include a polymeric film or extrudate, or in other embodiments it may include a cellulosic substrate. Where the polymeric film and/or cellulosic substrate cannot be readily removed after being attached to the adhesive layer component, the polymeric film and/or cellulosic substrate can carry a coating or layer that allows the polymeric film and/or cellulosic substrate to be readily removed from the adhesive component after attachment. This polymeric film or extrudate may include a single polymeric layer or may include two or more polymeric layers laminated or coextruded to one another.

Suitable materials for forming a release liner is a polymeric film or extrudate include polypropylene, polyester, high-density polyethylene, medium-density polyethylene, low-density polyethylene, polystyrene, high-impact polystyrene, and silicone release coatings applied over a polymeric film. The coating, or layer applied to the film and/or cellulosic substrate, may include a silicon-containing or fluorine-containing coating. For example, a silicone oil or polysiloxane may be applied as a coating. In other embodiments, hydrocarbon waxes may be applied as a coating. The release liner can be applied to both planar surfaces of the film and/or cellulosic substrate. In other embodiments, the release liner need only be applied to the planar surface of the film and/or cellulosic substrate that is ultimately removably mated with the floor covering element.

In one or more embodiments, the release liner is characterized by a thickness of from 15 to 80 microns. This may include from 18 to 75 microns, or 20 to 50 microns. In some embodiments, the release layer is characterized by a thickness of 15 microns, 20 microns, 25 microns, 30 microns, 35 microns, 40 microns, 45 microns, 50 microns, 55 microns, 60 microns, 65 microns, 70 microns, 75 microns, or 80 microns.

**UV-Curable Hot Melt Adhesive Composition**

As indicated above, the UV-curable hot melt adhesive composition (the adhesive composition) contains a (meth) acrylic co-polymer. In some embodiments, the adhesive composition may also comprise a photoinitiator, wherein the photoinitiator is covalently bound to the (meth)acrylic co-polymer.

Examples of suitable photoinitiators which may be used include one or more of the following: benzophenone, benzyldimethyl ketal, isopropylthioxanthone, bis(2,6-dimethoxybenzoyl)(2,4,4-trimethylpentyl)phosphineoxide, 2-hydroxy-2-methyl-1-phenyl-1-propanone, diphenyl(2,4,6-trimethybenzoyl)phosphine oxides, 1-hydroxycyclohexyl phenyl ketone, 2-benzyl-2-(dimethylamino)-1-4-(4-morpholinyl)phenyl-1-butanone, $\alpha,\alpha$-dimethoxy-$\alpha$-phenylacetophenone, 2,2-diethoxyacetophenone, 2-methyl-1-4-(methylthio)phenyl-2-(4-morpholinyl)-1-propanone, 2-hydroxy-1-4-(hydroxyethoxy)phenyl-2-methyl-1-propanone.

The UV-curable acrylic co-polymer may be a radiation curable co-polymer derived from a (meth)acrylic co-polymer covalently bound to photoreactive group. Mixtures or blends with other acrylic polymers may be used. In some embodiments, the UV-curable acrylic co-polymer contains an (meth)acrylic co-polymer backbone molecule that is modified with polymerized photoreactive groups, e.g., a modified benzophenone group that is chemically bonded to the acrylic polymer chain. In some embodiments, the polymer is crosslinked by chemical grafting caused by the excitation of the photoinitiator by UV irradiation.

In some embodiments, the adhesive composition described herein contains from 50 wt% to 100 wt% of the UV-curable acrylic co-polymer. In some embodiments, the adhesive composition described herein contains 50 wt%, 55 wt%, 60 wt%, 65 wt%, 70 wt%, 75 wt%, 80 wt%, 85 wt%, 90 wt%, 95 wt%, or 100 wt % of the UV-curable acrylic co-polymer.

As indicagted above, the UV-curable hot melt adhesive composition contains a UV-curable acrylic co-polymer derived from a (meth)acrylic co-polymer covalently bound to a compound of Formula (I), (II), or (III) as described herein through the olefinic moiety of the compound.

The (meth)acrylic co-polymer may be derived from a (meth)acrylic monomer containing acrylic acid, methacrylic acid, methylmethacrylic acid, methylmethacrylate, ethylmethacrylate, a hydroxy vinyl ether, methyl acrylate, ethyl acrylate, n-propyl acrylate, isopropyl acrylate, n-butyl acrylate (BA), n-decyl acrylate, isobutyl acrylate, n-amyl acrylate, n-hexyl acrylate, isoamyl acrylate, 2-hydroxyethyl acrylate, 2-hydroxypropyl acrylate, N,N-dimethylaminoethyl acrylate, N,N-diethylaminoethyl acrylate, t-butylaminoethyl acrylate, 2-sulfoethyl acrylate, trifluoroethyl acrylate, glycidyl acrylate, benzyl acrylate, allyl acrylate, 2-n-butoxyethyl acrylate, 2-chloroethyl acrylate, sec-butyl-acrylate, tert-butyl acrylate, 2-ethylbutyl acrylate, cinnamyl acrylate, crotyl acrylate, cyclohexyl acrylate, cyclopentyl acrylate, 2-ethoxyethyl acrylate, furfuryl acrylate, hexafluoroisopropyl acrylate, methallyl acrylate, 3-methoxybutyl acrylate, 2-methoxybutyl acrylate, 2-nitro-2-methylpropyl acrylate, n-octylacrylate, 2-ethylhexyl acrylate, 2-phenoxyethyl acrylate, 2-phenylethyl acrylate, phenyl acrylate, propargyl acrylate, tetrahydrofurfuryl acrylate and tetrahydropyranyl acrylate, methyl methacrylate, ethyl methacrylate, n-propyl methacrylate, n-butyl methacrylate (BMA), isopropyl methacrylate, isobutyl methacrylate, n-amyl methacrylate, n-hexyl methacrylate, isoamyl methacrylate, 2-hydroxyethyl methacrylate, 2-hydroxypropyl methacrylate, N,N-dimethylaminoethyl methacrylate, N,N-diethylaminoethyl methacrylate, t-butylaminoethyl methacrylate, 2-sulfoethyl methacrylate, trifluoroethyl methacrylate, glycidyl methacrylate (GMA), benzyl methacrylate, allyl methacrylate, 2-n-butoxyethyl methacrylate, 2-chloroethyl methacrylate, sec-butyl-methacrylate, tert-butyl methacrylate, 2-ethylbutyl methacrylate, cinnamyl methacrylate, crotyl methacrylate, cyclohexyl methacrylate, cyclopentyl methacrylate, 2-ethoxyethyl methacrylate, furfuryl methacrylate, hexafluoroisopropyl methacrylate, methallyl methacrylate, 3-methoxybutyl methacrylate, 2-methoxybutyl methacrylate, 2-nitro-2-methylpropyl methacrylate, n-octylmethacrylate, 2-ethylhexyl methacrylate, 2-phenoxyethyl methacrylate, 2-phenylethyl methacrylate, phenyl methacrylate, propargyl methacrylate, tetrahydrofurfuryl methacrylate, tetrahydropyranyl methacrylate, hydroxyalkyl acrylates and methacrylates, acrylic acid and its salts, acrylonitrile, acrylamide, methyl alpha-chloroacrylate, methyl 2-cyanoacrylate, N-ethylacrylamide, N,N-diethylacrylamide, acrolein, methacrylic acid and its salts, methacrylonitrile, methacrylamide, N-methylmethacrylamide, N-ethylmethacrylamide, N,N-diethylmethacrylamide, N,N-dimethylmethacrylamide, N-phenylmethacrylamide, methacrolein, or a mixture of any two or more thereof.

The compounds of Formula (I), (II), and (III), as disclosed above, are polymerizable photoinitiators of the following structures:

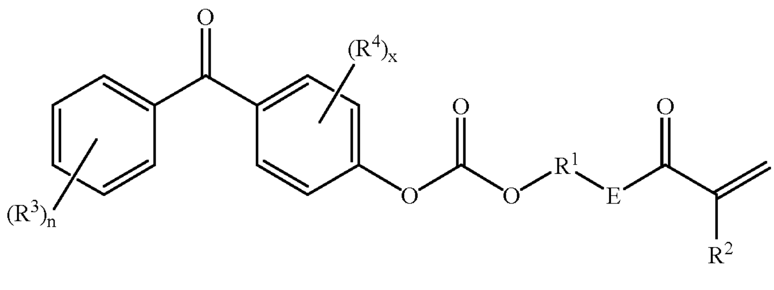

(I);

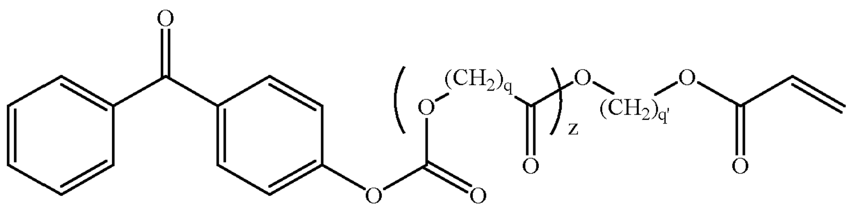

(II);

or

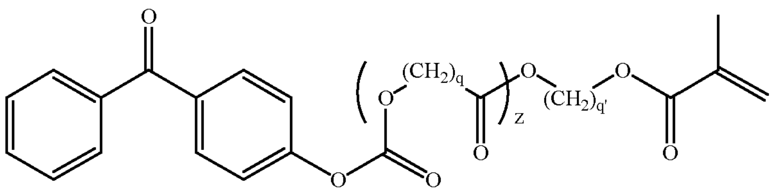

(III);

wherein:

$R^1$ is a linker group wherein:

- $R^1$ is arylene, cycloalkylenyl, $-[C(R^6)(R^7)]_{n'}-$, or $-\{[C(R^6)(R^7)]_{n'}C(O)\}_{x'}[O(C(R^6)(R^7))_y]_p-$;
- each $R^6$ is individually H, $OR^{10}$, alkyl, aryl, or C(O)OH;
- each $R^7$ is individually H, $OR^{10}$, alkyl, or aryl;
- each $R^{10}$ is individually H or alkyl;
- n' is 1-12;
- y is 1, 2, or 3;

p is 1, 2, or 3; and
x' is 1-10;
$R^2$ is H or alkyl;
E is O or $NR^5$;
each $R^3$ is individually a substituent selected from the group consisting of halogen, alkyl, O-alkyl, cycloalkyl, and an alkyl group containing a heteroatom, a halogen, a carbonyl group, alkoxy, or amino group;
each $R^4$ is individually a substituent selected from the group consisting of halogen, alkyl, O-alkyl, cycloalkyl, and an alkyl group containing a heteroatom, a halogen, a carbonyl group, alkoxy, or amino group;
$R^5$ is H or alkyl;
n is 0-5;
x is 0-4; and
each of q, q', and z are individually 1-10.

In some embodiments, $R^1$ is $-(CH_2)_{n'}-$, cyclohexan-1,4-yl, phenylen-1,4-yl, $-[(CH_2)_3C(O)]_2-O-(CH_2)_y-$, $-C(CH_3)(C(O)OH)-$, $-C(H)(phenyl)C(CH_3)(H)-$, or $-CH_2C(CH_3)_2CH_2-$.
In some embodiments, $R^1$ is $-(CH_2)_3-$; E is O; n is 0, x is 0, and $R^2$ is H or methyl.
In some embodiments, the compound of Formula (I), (II), or (III) is:

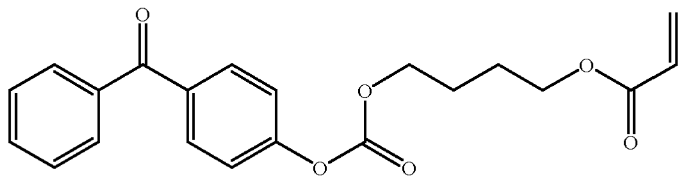

4-(((4-benzoylphenoxy)carbonyl)oxy)butyl acrylate,

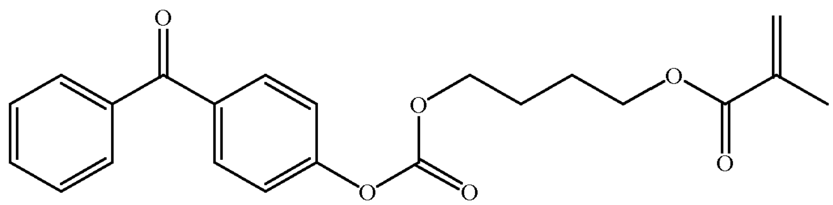

4-(((4-benzoylphenoxy)carbonyl)oxy)butyl methacrylate,

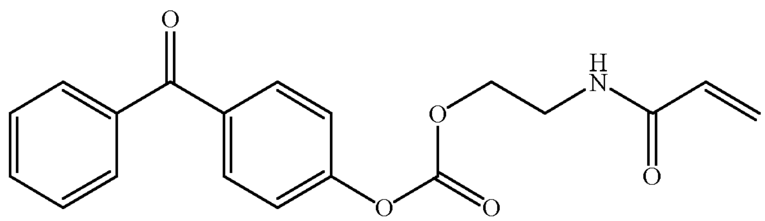

2-acrylamidoethyl (4-benzoylphenyl) carbonate,

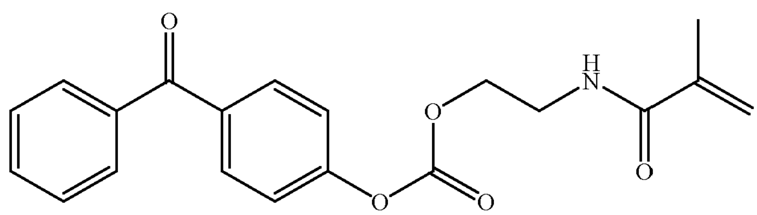

4-benzoylphenyl (2-methacrylamidoethyl) carbonate,

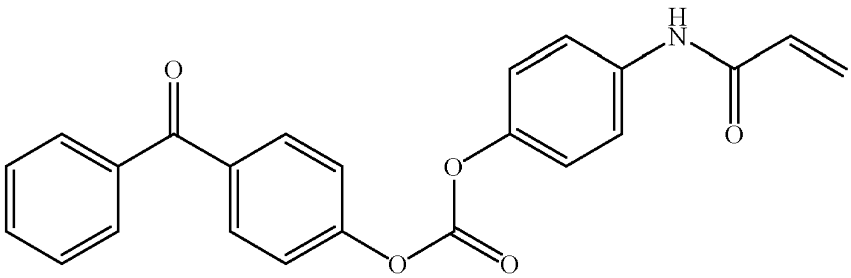

4-acrylamidophenyl (4-benzoylphenyl) carbonate,

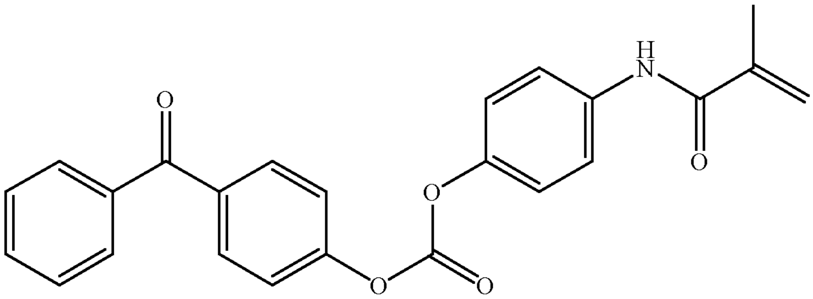

4-benzoylphenyl (4-methacrylamidophenyl) carbonate,

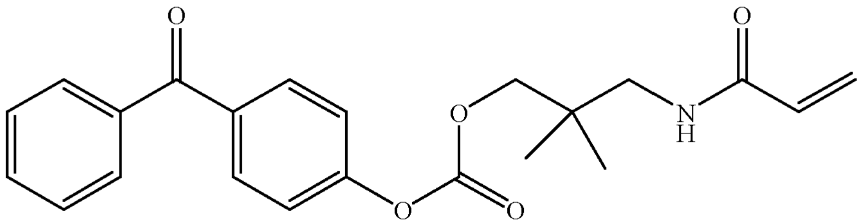

3-acrylamido-2,2-dimethylpropyl (4-benzoylphenyl) carbonate,

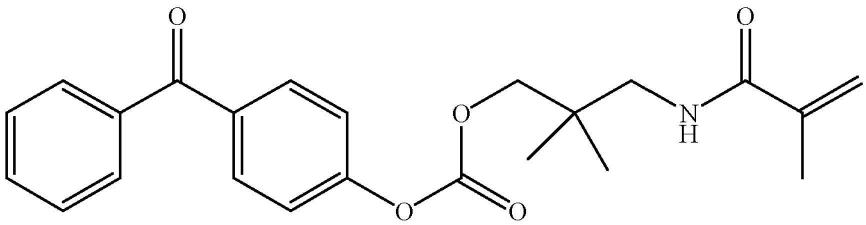

4-benzoylphenyl (3-methacrylamido-2,2-dimethylpropyl) carbonate,

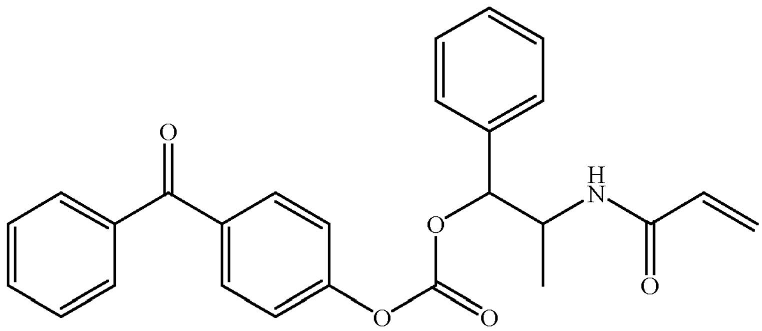

2-acrylamido-1-phenylpropyl (4-benzoylphenyl) carbonate,

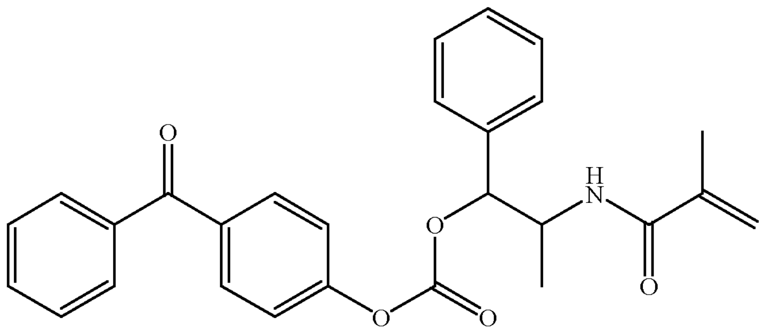

4-benzoylphenyl (2-methacrylamido-1-phenylpropyl) carbonate,

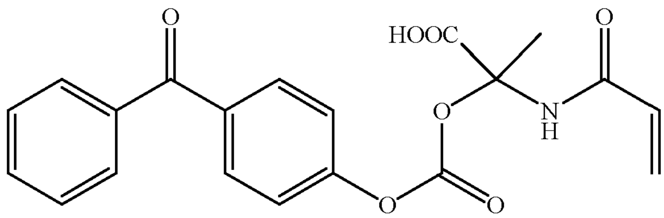

2-acrylamido-2-(((4-benzoylphenoxy)carbonyl)oxy)propanoic acid,

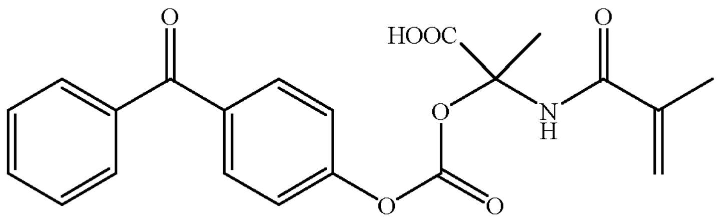

2-(((4-benzoylphenoxy)carbonyl)oxy)-2-methacrylamidopropanoic acid,

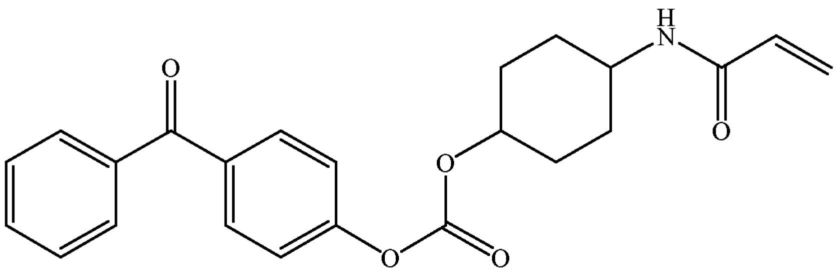

4-acrylamidocyclohexyl (4-benzoylphenyl) carbonate,

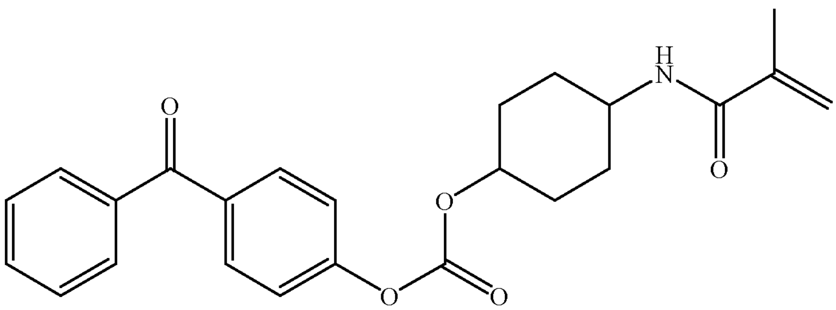

4-benzoylphenyl (4-methacrylamidocyclohexyl) carbonate,

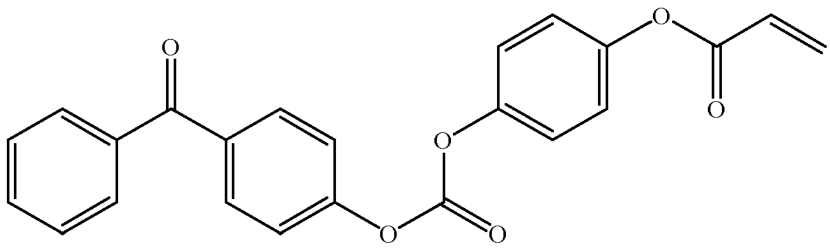

4-(((4-benzoylphenoxy)carbonyl)oxy)phenyl acrylate, or

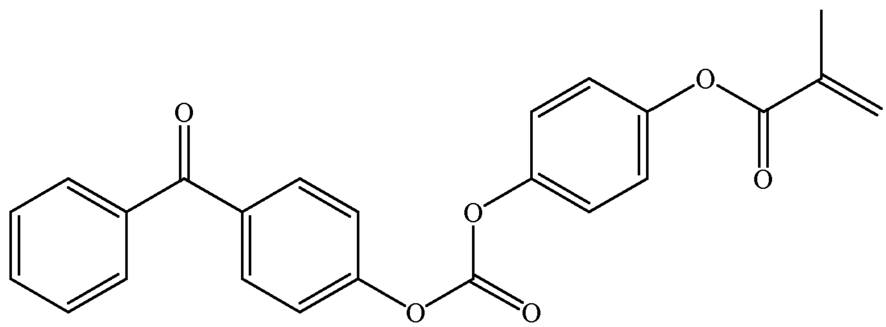

4-(((4-benzoylphenoxy)carbonyl)oxy)phenyl methacrylate.

The compound of Formula (I), (II), or (III) may be present from 0.01 wt% to 5.0 wt%, based upon the solids of the adhesive composition. In some embodiments, the compound of Formula (I), (II), or (III) is present from 0.1 wt% to 5.0 wt%, based upon the solids of the adhesive composition. In some embodiments, the compounds of Formula (I), (II), or (III) is present from 0.1 wt% to 3.0 wt%, based upon the solids of the adhesive composition. In some embodiments, the compounds of Formula (I), (II), and/or (III) is present from 0.4 wt% to 3.0 wt%, based upon the solids of the adhesive composition. In some embodiments, the compounds of Formula (I), (II), or (III) is present from 0.4 wt% to 2.0 wt%, based upon the solids of the adhesive composition. In some embodiments, the compound of Formula (I), (II), or (III) is present in 0.01 wt%, 0.05 wt%, 0.1 wt%, 0.2 wt%, 0.3 wt%, 0.4 wt%, 0.5 wt%, 0.6 wt%, 0.7 wt%, 0.8 wt%, 0.9 wt%, 1.0 wt%, 1.5 wt%, 2.0 wt%, 2.5 wt %, 3.0 wt%, 3.5 wt%, 4.0 wt%, 4.5 wt%, or 5.0 wt%, based upon the solids of the adhesive composition.

In some embodiments, the adhesive composition is essentially free of solvents and volatile components. As used herein, "essentially free" refers to less than 5 wt%, less than 4 wt%, less than 3 wt%, less than 2 wt%, less than 1 wt%, less than 0.5 wt%, less than 0.1 wt%, less than 0.05 wt%, less than 0.01 wt%, or free of detectable amounts of organic solvents and volatile components. Such solvents include, but are not limited to, hydrocarbon solvents (aliphatic and aromatic), oxygenated solvents (alcohols, ketones, aldehydes, glycol ethers, esters, glycol ether esters), halogenated solvents (chlorinated and brominated hydrocarbons), water, and mixtures of two or more.

Solvent or substance volatility is quantified by the tendency of the solvent or substance to vaporize. Volatility is directly related to a substance's vapor pressure. At a given temperature, a substance with higher vapor pressure vaporizes more readily than a substance with a lower vapor pressure.

In some embodiments, the adhesive composition contains one or more solvents or volatile compounds in no more than 2% by weight based on the total adhesive composition. In some embodiments, the adhesive composition contains one or more solvents or volatile compounds in 0% to 2%, 0% to 1%, or 0% to 0.5% by weight based on the total adhesive composition. In some embodiments, the adhesive composition contains one or more solvents or volatile compounds in less than 2%, less than 1%, less than 0.5%, less than 0.1% by weight based on the total adhesive composition.

## Co-polymer Characteristics

The co-polymers described herein may be characterized by the weight average molecular weight ($M_W$) or number average molecular weight ($M_n$). The weight average molecular weight ($M_W$) is defined by:

$$M_w = (\Sigma NiMi^2)/\Sigma Ni.$$

In some embodiments, the co-polymer has a weight average molecular weight ($M_W$) of from 30,000 g/mol to

300,000 g/mol. In some embodiments, the weight average molecular weight ($M_W$) is from 40,000 g/mol to 300,000 g/mol. In some embodiments, the weight average molecular weight ($M_W$) is from 50,000 g/mol to 300,000 g/mol. In some embodiments, the weight average molecular weight ($M_W$) is from 100,000 g/mol to 300,000 g/mol. In some embodiments, the co-polymer has a weight average molecular weight ($M_W$) of 30,000 g/mol, 40,000 g/mol, 50,000 g/mol, 60,000 g/mol, 70,000 g/mol, 80,000 g/mol, 90,000 g/mol, 100,000 g/mol, 125,000 g/mol, 150,000 g/mol, 175,000 g/mol, 200,000 g/mol, 225,000 g/mol, 250,000 g/mol, 270,000 g/mol, or 300,000 g/mol. The weight average molecular weight ($M_W$) is determined by GPC as defined herein in the Examples section.

The number average molecular weight ($M_n$) is the statistical average molecular weight of all the polymer chains in the polymer and is defined by:

$$M_n = (\Sigma NiMi)/\Sigma Ni,$$

where Mi is the molecular weight of a chain and Ni is the number of chains of that molecular weight. Compared to $M_n$, $M_w$ takes into account the molecular weight of a chain in determining contributions to the molecular weight average. The more massive the chain, the more the chain contributes to $M_w$.

In some embodiments, the co-polymer has a number average molecular weight of from 5,000 g/mol to 100,000 g/mol. In some embodiments, the co-polymer has a number average molecular weight of from 8,000 g/mol to 75,000 g/mol. In some embodiments, the co-polymer has a number average molecular weight of from 10,000 g/mol to 50,000 g/mol. In some embodiments, the co-polymer has a number average molecular weight of from 10,000 g/mol to 30,000 g/mol. In some embodiments, the co-polymer has a number average molecular weight of 5,000 g/mol, 6,000 g/mol, 7,000 g/mol, 8,000 g/mol, 9,000 g/mol, 10,000 g/mol, 20,000 g/mol, 30,000 g/mol, 40,000 g/mol, 50,000 g/mol, 60,000 g/mol, 70,000 g/mol, 80,000 g/mol, 90,000 g/mol, or 100,000 g/mol.

Also, the co-polymers described herein may be characterized by dispersity index or polydispersity index (PDI), which is a measure of the distribution of molecular mass in a given polymer sample. PDI of a polymer is calculated:

$$PDI = M_w/M_{n,}$$

where the weight average molecular weight and the statistical average molecular weight are defined above.

In some embodiments, the co-polymer has a K value of from 10 to 150 or from 15 to 100. In some embodiments, the co-polymer has a K value of from 25 to 55, from 60 to 100, or from 15 to 85. In some embodiments, the co-polymer has a K value of 10, 15, 20, 25, 30, 35, 40, 45, 50, 55, 60, 65, 70, 75, 80, 85, 90, 95, 100, 105, 110, 115, 120, 125, 130, 135, 140, 145, or 150. Determination of the K value is carried out, usually at 25 °C according to DIN ISO 1628-1, on a 1 wt % strength solution of the co-polymer in tetrahydrofuran.

The co-polymers described herein may exhibit glass transition temperatures of from -70 °C to 150 °C. In some embodiments, the glass transition temperature is from - 70 °C to +30 °C. In some embodiments, the glass transition temperature is from -70 °C to < +10 °C, from -50 °C to ≤+5 °C, or from -50 °C to ≤0 °C.

By the glass transition temperature Tg, it is meant the limiting value of the glass transition temperature which it approaches with increasing molecular weight as described by G. Kanig (Kolloid-zeitschrift & Zeitschrift fr Polymere, Vol. 190, page 1, equation 1). The glass transition temperature is determined by the DSC method (Differential Scanning Calorimetry, 20 K/min, mid-point reading, DIN 53,765).

According to Fox (T. G. Fox, Bull. Am. Phys. Soc. 1956 [Ser. II] 1, page 123 and according to Ullmanns Encyclopaedie der technischen Chemie, Vol. 19, page 18, 4th Edition, Verlag Chemie, Weinheim, 1980) the following applies to the glass transition temperature of not more than weakly crosslinked co-polymers, as a good approximation:

$$1/Tg = x^1/Tg^1 + x^2/Tg^2 + \ldots x^n/Tg^n,$$

in which $x^1$, $x^2$ ... $x^n$ denote the mass fractions of the monomers 1, 2 . . . n and $Tg^1$, $Tg^2$ . . . $Tg^n$ denote the glass transition temperatures of the polymers composed of, in each case, only one of the monomers 1, 2 . . . n, in degrees Kelvin. The Tg values for the homopolymers of most monomers are known and are listed, for example, in Ullmann's Encyclopedia of Industrial Chemistry, Vol. 5, Vol. A21, page 169, VCH Weinheim, 1992; further sources of glass transition temperatures of homopolymers are, e.g., J. Brandrup, E. H. Immergut, Polymer Handbook, 1.sup.st Ed., J. Wiley, New York 1966, 2.sup.nd Ed. J. Wiley, New York 1975, and 3rd Ed. J. Wiley, New York 1989).

## Additional Adhesive Components

The adhesive compositions described herein may include other additives to provide other desirable properties to the adhesives. These additives may include, but are not limited to, pigments, fillers, fluorescent additives, flow and leveling

additives, wetting agents, surfactants, antifoaming agents, rheology modifiers, stabilizers, and antioxidants. Other optional additives include unsaturated oligomers and multifunctional monomers containing acrylate or methacrylate functionality, such as SR 295, SR 355 and SR 350 available from Sartomer, and additional photoinitiators. Preferred additives are those which do not have appreciable absorption in the UVC wavelengths of interest (250-260 nm).

In some embodiments, the adhesive compositions described herein may further comprise an antioxidant. Antioxidants are added to protect the ingredients against degradation during preparation and use of the adhesive compositions and to ensure long-term thermal stability, however without interfering with the irradiation curing of the polymer.

Combinations of antioxidants are often more effective due to the different mechanisms of degradation to which various polymers are subject. Certain hindered phenols, organometallic compounds, aromatic amines, aromatic phosphites, and sulfur compounds are useful for this purpose. Examples of effective types of these materials include phenolic antioxidants, thio compounds, and tris(nonylated phenyl)phosphites.

In some embodiments, the adhesive composition contains no greater than 3% by weight of one or more antioxidants. In some embodiments, the adhesive composition contains from 0% to 3%, from 0.1% to 3%, 0% to 2%, from 0.1% to 2%, or from 0.4% to 2.0% by weight of one or more antioxidants.

In some embodiments, the antioxidant is a phenolic antioxidant. In some embodiments, the phenolic antioxidant includes an alkylated monophenol. Illustrative examples include, but are not limited to, 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(alpha-methylcyclohexyl)-4,6-dimethylphenol, 2,6-dioctadecyl-4-methylphenol, 2,4,6-tricyclohexylphenol, and 2,6-di-tert-butyl-4-methoxymethylphenol. In some embodiments, the alkylated monophenol is a nonylphenol, which is linear or branched in the side chains. Some non-limiting examples of a nonylphenol include, but are not limited to, 2,6-di-nonyl-4-methylphenol, 2,4-dimethyl-6-(1-methylundec-1-yl)phenol, 2,4-dimethyl-6-(1-methylheptadec-1-yl)phenol, 2,4-dimethyl-6-(1-methyltridec-1-yl)phenol and mixtures thereof.

In some embodiments, the phenolic antioxidant is an alkylthiomethylphenol. Illustrative examples include, but are not limited to, 2,4-dioctylthiomethyl-6-tertbutylphenol, 2,4-dioctylthiomethyl-6-methylphenol, 2,4-dioctylthiomethyl-6-ethylphenol, and 2,6-di-dodecylthiomethyl-4-nonylphenol.

In some embodiments, the phenolic antioxidant is a hydroquinones or an alkylated hydroquinone. Illustrative examples include but are not limited to 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, and bis-(3,5-di-tert-butyl-4-hydroxyphenyl) adipate.

In some embodiments, the phenolic antioxidant is a tocopherol. Illustrative examples include, but are not limited to, alpha-tocopherol, beta-tocopherol, gamma-tocopherol, delta-tocopherol and mixtures thereof (Vitamin E).

In some embodiments, the phenolic antioxidant is a hydroxylated thiodiphenyl ether. Illustrative examples include, but are not limited to, 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis-(3,6-di-sec-amylphenol), and 4,4'-bis(2,6-dimethyl-4-hydroxyphenyl)disulfide.

In some embodiments, the phenolic antioxidant is an alkylidenebisphenol. Examples of alkylidenebisphenols include, but are not limited to, 2,2'-methylenebis(6-tert-butyl-4-methylphenol), 2,2'-methylenebis(6-tert-butyl-4-ethylphenol), 2,2'-methylenebis[4-methyl-6-($\alpha$-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(alpha-methylbenzyl)-4-nonylphenol], 2,2'-methylenebis[6-(alpha, alpha-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3-tert-butyl-4-hydroxyphenyl)butyrate], bis(3-tert-butyl-4-hydroxy-5-methylphenyl)dicyclopentadiene, bis[2-(3'tert-butyl-2-hydroxy-5-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)-4-n-dodecylmercaptobutane, and 1,1,5,5-tetra-(5-tert-butyl-4-hydroxy-2-methylphenyl)pentane.

In some embodiments, the phenolic antioxidant is a benzyl compound. Some examples of benzyl compounds include, but are not limited to, 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, 1,3,5-tri-(3,5-di-tert-butyl-4-hydroxybenzyl)-2,4,6-trimethylbenzene, di-(3,5-di-tert-butyl-4-hydroxybenzyl) sulfide, 3,5-di-tert-butyl-4-hydroxybenzyl-mercapto-acetic acid isooctyl ester, bis-(4-tert-butyl-3-hydroxy-2,6-dimethylbenzyl)dithiol terephthalate, 1,3,5-tris-(3,5-di-tert-butyl-4-hydroxybenzyl) isocyanurate, 1,3,5-tris-(4-tert-butyl-3-hydroxy-2,6-dimethylbenzyl) isocyanurate, 3,5-di-tert-butyl-4-hydroxybenzyl-phosphoric acid dioctadecyl ester and the calcium salt of 3,5-di-tert-butyl-4-hydroxybenzyl-phosphoric acid monoethyl ester.

In some embodiments, the phenolic antioxidant is a hydroxybenzylated malonate. Illustrative examples include, but are not limited to, dioctadecyl-2,2-bis-(3,5-di-tert-butyl-2-hydroxybenzyl)-malonate, di-octadecyl-2-(3-tert-butyl-4-hydroxy-5-methylbenzyl)-malonate, di-dodecylmercaptoethyl-2,2-bis-(3,5-di-tert-butyl-4-hydroxybenzyl)malonate, and bis[4-(1,1,3,3-tetramethylbutyl)phenyl]-2,2-bis(3,5-di-tert-butyl-4-hydroxybenzyl)malonate.

In some embodiments, the phenolic antioxidant is an aromatic hydroxybenzyl compound. Illustrative examples include, but are not limited to, 1,3,5-tris-(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, and 2,4,6-tris(3,5-di-tert-butyl-4-hydroxybenzyl)phenol.

In some embodiments, the phenolic antioxidant is a triazine compound. Illustrative examples include, but are not limited to, 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, and 1,3,5-tris(3,5-dicyclohexyl-4-hydroxybenzyl)isocyanurate.

In some embodiments, the phenolic antioxidant is a benzylphosphonate. Illustrative examples include, but are not limited to, dimethyl-2,5-di-tert-butyl-4-hydroxybenzylphosphonate, diethyl-3,5-di-tert-butyl-4-hydroxybenzylphosphonate, dioctadecyl-3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.

In some embodiments, the phenolic antioxidant is an acylaminophenol. Illustrative examples include, but are not limited to, 4-hydroxy-lauric acid anilide, 4-hydroxy-stearic acid anilide, 2,4-bis-octylmercapto-6-(3,5-tert-butyl-4-hydroxyanilino)-s-triazine and octyl-N-(3,5-di-tert-butyl-4-hydroxyphenyl)-carbamate.

In some embodiments, the phenolic antioxidant is an ester of beta-(3,5-di-tert-butyl-4-hydroxyphenyl)propionic acid with mono- or poly- hydric alcohol, an ester of beta-(5-tert-butyl-4-hydroxy-3-methylphenyl)propionic acid with mono- or poly- hydric alcohol, an ester of beta-(3,5-dicyclohexyl-4-hydroxyphenyl)propionic acid with mono- or poly- hydric alcohol, or an ester of 3,5-di-tert-butyl-4-hydroxyphenyl acetic acid with mono- or poly- hydric alcohol. Examples of mono- or poly- hydric alcohols include, but are not limited to, methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, and 4-hydroxymethyl-1-phospha-2,6,7-trioxabicyclo[2.2.2] octane.

In some embodiments, the phenolic antioxidant is an amide of beta-(3,5-di-tert-butyl-4-hydroxyphenyl)propionic acid. Illustrative examples include, but are not limited to, N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl) hydrazide, and N,N'-bis[2-(3-[3,5-di-tert-butyl-4-hydroxyphenyl]propionyloxy)ethyl]oxamide (Naugard®XL-1 supplied by Uniroyal).

In some embodiments, the phenolic antioxidant includes, but is not limited to: n-octadecyl 3,5-di-tert-butyl-4-hydroxyhydrocinnamate; neopentanetetrayl tetrakis(3,5-di-tert-butyl-4-hydroxyhydrocinammate; di-n-octadecyl 3,5-di-tert-butyl-4-hydroxybenzylphosphonate; 1,3,5-tris(3,5-di-tert-butyl-4-hydroxybenzyl)isocyanurate; thiodiethylene bis(3,5-di-tert-butyl-4-hydroxyhydrocinnamate); 1,3,5-trimethyl-2,4,6-tris(3,5-di-tert-butyl-4-hydroxybenzyl)benzene; 3,6-dioxaoctamethylene bis(3-methyl-5-tert-butyl-4-hydroxyhydrocinnamate; 2,6-di-tert-butyl-p-cresol; 2,2'-ethylidene-bis(4,6-di-tert-butylphenol); 1,3,5-tris(2,6-dimethyl-4-tert-butyl-3-hydroxybenzyl)isocyanurate; 1,1,3,-tris(2-methyl-4-hydroxy-5-tert-butylphenyl)butane; 1,3,5-tris[2-(3,5-di-tert-butyl-4-hydroxyhydrocinnamoyloxy)ethyl] isocyanurate; 3,5-di-(3,5-di-tert-butyl-4-hydroxybenzyl)mesitol; hexamethylene bis(3,5-di-tert-butyl-4-hydroxyhydrocinnamate); 1-(3,5-di-tert-butyl-4-hydroxyanilino)-3,5-di(octylthio)-s-triazine; N,N'-hexamethylene-bis(3,5-di-tert-butyl-4-hydroxyhydrocinnamamide); calcium bis(ethyl 3,5-di-tert-butyl-4-hydroxybenzylphosphonate); ethylene bis[3,3-di(3-tert-butyl-4-hydroxyphenyl)butyrate]; octyl 3,5-di-tert-butyl-4-hydroxybenzylmercaptoacetate; bis(3,5-di-tert-butyl-4-hydroxyhydrocinnamoyl)hydrazide; N,N-di-($C_{12}$-$C_{24}$alkyl)-N-methyl-amine oxide; and N,N-dialkylhydroxylamine prepared from di(hydrogenated tallow)amine by direct oxidation.

In some embodiments, the adhesive compositions described herein further comprise a photoinitiator. Examples of suitable photoinitiators which may be used include one or more of the following: benzophenone, benzyldimethyl ketal, Isopropylthioxanthone, bis(2,6-dimethoxybenzoyl)(2,4,4-trimethylpentyl)phosphineoxide, 2-hydroxy-2-methyl-1-phenyl-1-propanone, diphenyl(2,4,6-trimethybenzoyl)phosphine oxides, 1-hydroxycyclohexyl phenyl ketone, 2-benzyl-2-(dimethylamino)-1-4-(4-morpholinyl)phenyl-1-butanone, alpha,alpha.-dimethoxy-alpha-phenylacetophenone, 2,2-diethoxyacetophenone, 2-methyl-1-4-(methylthio)phenyl-2-(4-morpholinyl)-1-propanone, 2-hydroxy-1-4-(hydroxyethoxy)phenyl-2-methyl-1-propanone.

In some embodiments, the adhesive compositions described herein further comprise a tackifier. The term "tackifier" as used herein means any composition which is useful to impart tack to the hot melt adhesive composition. ASTM D-1878-1T defines tack as "the property of a material which enables it to form a bond of measurable strength

immediately on contact with another surface".

In some embodiments, a suitable tackifer, as would be appreciated by the skilled artisan, is a tackifier that is able to mix with adhesive polymer, e.g., (meth)acrylic co-polymer. In one preferred embodiment, the tackifier is a resin-based tackifier, and more specifically rosin esters and rosin acids and hydrogenated versions thereof. Suitable examples include, but are not limited to, Foral 85 (Eastman), Pine Crystal KE 311 (Arakawa) and Staybelite Ester 10 (Hercules), as well as polyvinyl ethers, such as the Lutonal M40 grade from BASF. Other useful tackifiers include aliphatic and aromatic hydrocarbon resins, such as, for example, an alpha methyl styrene resin having a softening point of less than 110 °C. Examples include Kristalex 3085 (Kristalex F85), an alphamethyl styrene resin having a softening point of 85 °C., and which is commercially available from Eastman Chemical.

In some embodiments, the adhesive composition contains no more than 40 wt % of tackifier. In some embodiments, the adhesive composition contains from 30 wt % to 20 wt % of tackifier. In some embodiments, the adhesive composition contains 10 wt %, 15 wt%, 20 wt %, 25 wt%, 30 wt%, 35 wt%, or 40 wt% of tackifier.

**Uses**

For using, the adhesive composition containing the UV-curable acrylic co-polymers described herein may be heated at a suitable temperature to provide a molten state, wherein the adhesive composition may be spread and applied to the reverse face of the floor covering element. The suitable temperature may be from 80 °C to 180 °C. The suitable temperature may be from 80 °C to 160 °C. The suitable temperature may be from 120 °C to 160 °C. Then, the adhesive composition on the reverse face of the floor covering element, may be subjected to UV irradiation at a suitable wavelength to initiate photocuring. The suitable wavelength may be from 220 nm to 290 nm. The suitable wavelength may be from 240 nm to 270 nm. The suitable wavelength may be from 250 nm to 260 nm. After curing, the floor covering element may be allowed to cool to room temperature and the adhesive may then be covered with a release liner. The floor covering element can then be used to adhesively bond to a floor substrate by removing the release liner and directly applying the floor covering element to the desired floor substrate with the face containing the adhesive contacting the floor substrate.

Provided in another aspect of the invention is a method for preparing a floor covering element, the method containing:

heating a UV-curable hot melt adhesive composition to a molten state at a temperature from 80 °C to 160 °C to provide a molten UV-curable hot melt adhesive;
applying the molten UV-curable hot melt adhesive to a reverse face of the floor covering element to provide an adhesive-coated floor covering;
exposing the UV-curable hot melt adhesive on the reverse face of the floor covering to ultraviolet radiation having a wavelength of 250 nm to 260 nm to photoinitiate curing of the disposed UV-curable hot melt adhesive to the floor covering element to form a cured floor covering element having cured adhesive; and
applying a release liner to cured adhesive;
wherein:
the UV-curable hot melt adhesive composition contains a UV-curable acrylic co-polymer derived from a (meth)acrylic co-polymer covalently bound to a compound of Formula (I), (II), or (III) through the olefinic moiety of the compound:

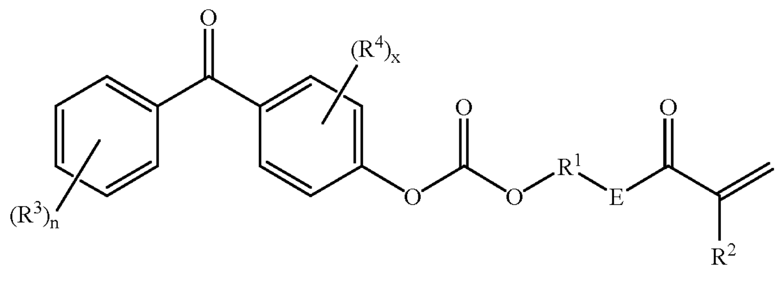
(I);

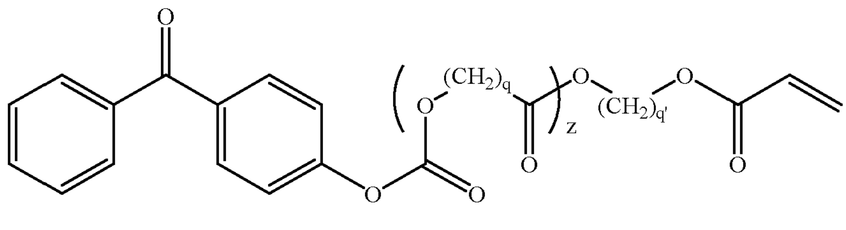
(II);

or

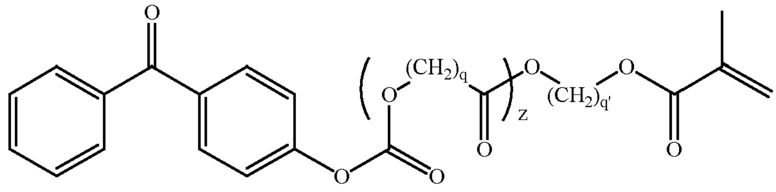

(III);

wherein:

$R^1$ is a linker group; wherein:

$R^1$ is arylene, cycloalkylenyl, $-[C(R^6)(R^7)]_{n'}-$, or $-\{[C(R^6)(R^7)]_{n'}C(O)\}_{x'}[O(C(R^6)(R^7))_y]_p-$;
each $R^6$ is individually H, $OR^{10}$, alkyl, aryl, or
C(O)OH; each $R^7$ is individually H, $OR^{10}$, alkyl, or aryl;
each $R^{10}$ is individually H or alkyl;
n' is 1-12;
y is 1, 2, or 3;
p is 1, 2, or 3; and
x' is 1-10;
$R^2$ is H or alkyl;
E is O or $NR^5$;
each $R^3$ is individually a substituent selected from the group consisting of halogen, alkyl, O-alkyl, cycloalkyl, and an alkyl group containing a heteroatom, a halogen, a carbonyl group, alkoxy, or amino group;
each $R^4$ is individually a substituent selected from the group consisting of halogen, alkyl, O-alkyl, cycloalkyl, and an alkyl group containing a heteroatom, a halogen, a carbonyl group, alkoxy, or amino group;
$R^5$ is H or alkyl;
n is 0-5;
x is 0-4; and
each of q, q', and z are individually 1-10.

In some embodiments of method for preparing a floor covering element, the heating a UV-curable hot melt adhesive composition to a molten state is at a temperature from 120 °C to 160 °C to provide a molten UV-curable hot melt adhesive. Further details and prefered embodiments of the olefinic moiety of the compound are as as described herein above in the section related to the article of manufacture and as described in the claims.

The present invention, thus generally described, will be understood more readily by reference to the following examples, which are provided by way of illustration and are not intended to be limiting of the present invention.

## EXAMPLES

### General Procedures

GPC spectra were acquired with a Waters 2695 instrument and were used to determine molecular weight of polymers using THF as the mobile phase at 40 °C and a RI detector. All samples were analyzed for $M_n$, $M_w$, and PDI using elution times calibrated against polystyrene molecular weight standards.

The K values are determined according to DIN 53,726 in 1% strength solution in tetrahydrofuran at 25 °C. The melt viscosities are measured using a plate-and-cone rheometer, for example Rotovisko RV 20 with a PK 100 measuring apparatus (Haake, Karlsruhe) (D=shear rate in 1/s).

### Example 1 - UV-Curable Hot Melt Adhesive Acrylate Co-polymer

One hundred fifty grams of a monomer mixture of 497 grams of n-butyl acrylate (BASF), 288.5 grams of 2-ethylhexyl acrylate (BASF), 184 grams of methyl acrylate (BASF), 25 g of acrylic acid (BASF) and 5.5 grams of 4-acryloxylbutylencarbonatobenzophenone are added to a mixture of 160 g of ethyl acetate, 50 g of tetrahydrofuran and 2 grams of tert-butyl peroxypivalate (Arkema).

The mixture is polymerized at 85 °C for 15 minutes. The remainder of the monomer mixture is added to the reaction mixture over the course of 2 hours and a solution of 2 g of tert-butyl peroxypivalate in 40 g of ethyl acetate is added

simultaneously over the course of 3 hours. After the end of the monomer addition, polymerization reaction is continued for an additional 5 hours at 85 °C.

An acrylate co-polymer having a benzophenone photoinitiator covalently attached to the polymer chain is obtained having a measured a K value of about 50. After the solvent and volatile components have been removed by vacuum distillation, the instant acrylate co-polymer has a melt viscosity of 52 Pa.s at 130 °C, Tg = -34 °C, Mn = 15,000 g/mole, and Mw = 203,000 g/mole.

**Example 2 - UV-Curable Hot Melt Adhesive Acrylate Co-polymer**

One hundred fifty grams of a monomer mixture of 900 grams of 2-ethylhexyl acrylate (BASF), 90 grams of methyl methacrylate (BASF), and 10 grams of 4-acryloxylbutylen-carbonatobenzophenone are added to a mixture of 160 g of ethyl acetate, 50 g of tetrahydrofuran and 2.5 grams of tert-butyl peroxypivalate (Arkema).

The mixture is polymerized at 85 °C for 15 minutes. The remainder of the monomer mixture is added to the reaction mixture over the course of 2 hours and a solution of 2.5 g of tert-butyl peroxypivalate in 40 g of ethyl acetate is added simultaneously over the course of 3 hours. After the end of the monomer addition, polymerization reaction is continued for an additional 5 hours at 85 °C.

An acrylate co-polymer having a benzophenone photoinitiator covalently attached to the polymer chain is obtained having a measured a K value of about 45. After the solvent and volatile components have been removed by vacuum distillation, the instant acrylate co-polymer has a melt viscosity of 25 Pa.s at 110 °C, Tg = -60 °C, Mn = 13,300 g/mole, and Mw = 234,000 g/mole.

**Example 3 - UV-Curable Hot Melt Adhesive Acrylate Co-polymer**

One hundred fifty grams of a monomer mixture of 947.3 grams of n-butyl acrylate (BASF), 50 grams of acrylic acid (BASF), and 2.7 grams of 4-acryloxylbutylencarbonatobenzophenone are added to a mixture of 160 g of ethyl acetate, 50 g of tetrahydrofuran and 2.4 grams of tert-butyl peroxypivalate (Arkema).

The mixture is polymerized at 85 °C for 15 minutes. The remainder of the monomer mixture is added to the reaction mixture over the course of 2 hours and a solution of 2.4 g of tert-butyl peroxypivalate in 40 g of ethyl acetate is added simultaneously over the course of 3 hours. After the end of the monomer addition, polymerization reaction is continued for an additional 5 hours at 85 °C.

An acrylate co-polymer having a benzophenone photoinitiator covalently attached to the polymer chain is obtained having a measured a K value of about 50. After the solvent and volatile components have been removed by vacuum distillation, the instant acrylate co-polymer has a melt viscosity of 83 Pa.s at 130 °C, Tg = -39 °C, Mn = 13,600 g/mole, and Mw = 211,000 g/mole.

**Example 4 - UV-Curable Hot Melt Adhesive Acrylate Co-polymer**

One hundred fifty grams of a monomer mixture of 948.2 grams of n-butyl acrylate (BASF), 50 grams of acrylic acid (BASF), and 1.8 grams of 4-acryloxylbutylencarbonatobenzophenone are added to a mixture of 160 g of ethyl acetate, 50 g of tetrahydrofuran and 1.75 grams of tert-butyl peroxypivalate (Arkema).

The mixture is polymerized at 85 °C for 15 minutes. The remainder of the monomer mixture is added to the reaction mixture over the course of 2 hours and a solution of 1.75 g of tert-butyl peroxypivalate in 40 g of ethyl acetate is added simultaneously over the course of 3 hours. After the end of the monomer addition, polymerization reaction is continued for an additional 5 hours at 85 °C.

An acrylate co-polymer having a benzophenone photoinitiator covalently attached to the polymer chain is obtained having a measured a K value of about 51. After the solvent and volatile components have been removed by vacuum distillation, the instant acrylate co-polymer has a melt viscosity of 88 Pa.s at 130 °C, Tg = -39 °C, Mn = 12,500 g/mole, and Mw = 212,000 g/mole.

**Example 5 - UV-Curable Hot Melt Adhesive Acrylate Co-polymer Application & Testing**

The UV-curable hot melt adhesive acrylate co-polymer described in Instant Example 4 was heated to about 120 °C and cast at 176.9 grams per square meter film onto a silicone release liner using a hot melt coater to create a free film of adhesive. The adhesive free films were then transferred, using a rubber roller, onto rigid vinyl tiles, flexible vinyl tiles, and carpet backed vinyl tiles. Adhesive films were photocured using medium pressure mercury arc lamps using an IST UV curing laboratory unit. The UVC dose was measured and recorded using an EIT Power Puck. The UVC wavelength used was between 250 and 260 nm and irradiation took place in air. A UVC dosage of 100 $mJ/cm^2$ and a UVC intensity 109 $mW/cm^2$ were used to photochemically cure the adhesive films to the substrate or floor covering element. After curing,

each tile was allowed to cool for approximately two hours before covering the adhesive with a release liner and then placement in a CTH room overnight for conditioning prior to testing. CTH Conditions = 50% Relative Humidity at 73 °F.

The tiles were cut into 1" X 5" testing strips with the 5" direction in the coating and curing direction. Fourteen-inch pieces of masking tape were attached to the test strip to allow the testing strip to reach the load cell of the peel testing equipment. Three testing strips of the flexible tile and the carpet backed tile were laminated to a placard of plywood with a 4.5 lb rubber roller at a speed of 12 in/min. The rigid tile test strips were laminated to 2 mil chemically treated polyethylene terephthalate (PET) film. Each testing panel was allowed to condition for 20 minutes prior to 180 degree peel testing on an Instron peel tester (similar to ASTM D3330). The plywood (or 2 mil PET) was loaded into the bottom jaw of the Instron holder. The masking tape attached to the testing strip was loaded into the upper jaw of the Instron. The testing strips were peeled at a speed of 12 in/min. The average peel force and the failure mode of each peel were recorded. One mil = 25.4 microns.

A second set of testing strips of the flexible tile and the carpet backed tile were laminated to a placard of plywood with a 4.5 lb rubber roller at a speed of 12 in/min. The rigid tile test strips were laminated to 2 mil chemically treated PET film. This set of samples were allowed to condition for 10 days at 120 °F. These samples were allowed to condition at CTH conditions for approximately 2 hours before 180 degree peel testing on the Instron equipment.

A third set of testing strips of the flexible tile and the carpet backed tile were aged on liner for 10 days at 120 °F. These samples on liner were allowed to condition at CTH conditions for approximately 2 hours before lamination. The flexible tile and carpet tile were laminated to plywood, while the rigid tile was laminated to 2 mil chemically treated PET. Each testing panel was allowed to condition for 20 minutes prior to 180 degree peel testing on an Instron peel tester.

Adhesive Failure = Adhesive remains bound to the tile that it was laminated to and no residue is found on either the plywood or 2 mil PET substrate.

Cohesive Failure = Adhesive film splits and part of the adhesive remains on the tile and part of it transfer to either the plywood or 2 mil PET substrate.

Adhesive Transfer = All of the adhesive transfers off of the tile and completely resides on either the plywood or 2 mil PET film.

Legging = Adhesive locally sticks to both the tile and either the plywood or 2 mil PET.

The values given in Tables 1-3 were averages of the results of three different tests.

**Table 1. Initial Adhesive Results - Flooring with no aging**

| 180 Degree Peel (20 min @ CTH) | Carpet Tile | Flexible Floor Tile | Rigid Floor Tile |
|---|---|---|---|
| Substrate | Plywood | Plywood | 2 mil PET |
| Average (lbs per linear inch) | 8.15 | 7.16 | 10.84 |
| Failure Mode | Cohesive/Adhesive Transfer | Cohesive | Cohesive |

**Table 2. Adhesive Results - Flooring with aging on liner**

| 180 Degree Peel (20 min @ CTH) - Aged on Liner | Carpet Tile | Flexible Floor Tile | Rigid Floor Tile |
|---|---|---|---|
| Substrate | Plywood | Plywood | 2 mil PET |
| Average (lbs per | 6.26 | 4.83 | 7.83 |
| linear inch) | | | |
| Failure Mode | Adhesive | Leggy Cohesive | Cohesive/Adhesive mix |

**Table 3. Adhesive Results - Flooring with aging on Substrate**

| 180 Degree Peel (20 min @ CTH) - Aged on Substrate | Carpet Tile | Flexible Floor Tile | Rigid Floor Tile |
|---|---|---|---|
| Substrate | Plywood | Plywood | 2 mil PET |
| Average (lbs per linear inch) | 10.68 | 5.76 | 10.02 |
| Failure Mode | Leggy Cohesive | Leggy Cohesive | Leggy Cohesive |

While certain embodiments have been illustrated and described, it should be understood that changes and modifications can be made therein in accordance with ordinary skill in the art without departing from the technology in its broader aspects as defined in the following claims.

The embodiments, illustratively described herein may suitably be practiced in the absence of any element or elements, limitation or limitations, not specifically disclosed herein. Thus, for example, the terms "comprising," "including," "containing," etc. shall be read expansively and without limitation. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the claimed technology. Additionally, the phrase "consisting essentially of" will be understood to include those elements specifically recited and those additional elements that do not materially affect the basic and novel characteristics of the claimed technology. The phrase "consisting of" excludes any element not specified.

The present disclosure is not to be limited in terms of the particular embodiments described in this application. Many modifications and variations can be made as will be apparent to those skilled in the art. Functionally equivalent methods and compositions within the scope of the disclosure, in addition to those enumerated herein, will be apparent to those skilled in the art from the foregoing descriptions. The present disclosure is to be limited only by the terms of the appended claims.

It is to be understood that this disclosure is not limited to particular methods, reagents, compounds compositions or biological systems, which can of course vary. It is also to be understood that the terminology used herein is for the purpose of describing particular embodiments only, and is not intended to be limiting.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, particularly in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, *etc.* As a non-limiting example, each range discussed herein can be readily broken down into a lower third, middle third and upper third, *etc.* As will also be understood by one skilled in the art all language such as "up to," "at least," "greater than," "less than,", include the number recited and refer to ranges which can be subsequently broken down into subranges as discussed above. Finally, as will be understood by one skilled in the art, a range includes each individual member.

## Claims

**1.** An article of manufacture comprising:

a floor covering element having an obverse face and a reverse face;
an adhesive layer applied to the reverse face; and
a release liner in adherence to the adhesive layer;
wherein:
the adhesive layer comprises a UV-curable hot melt adhesive composition comprising a UV-curable acrylic co-polymer derived from a (meth)acrylic co-polymer covalently bound to a compound of Formula (I), (II), or (III) through the olefinic moiety of the compound:

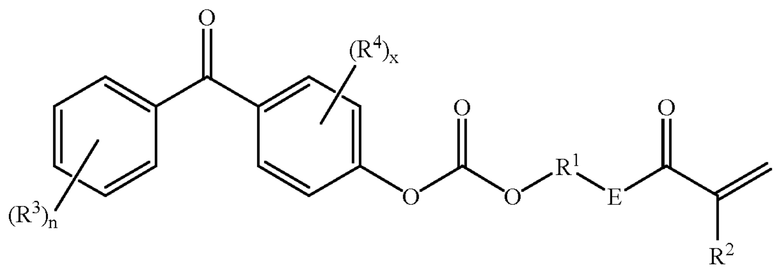

(I);

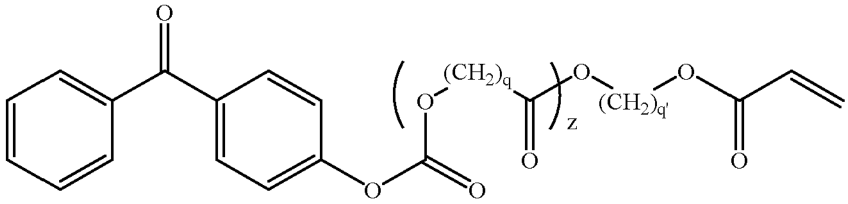

(II);

or

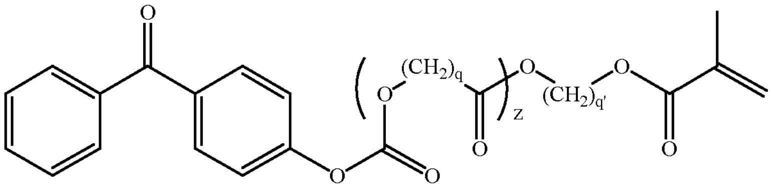

(III);

wherein:

$R^1$ is a linker group; wherein:

$R^1$ is arylene, cycloalkylenyl, $-[C(R^6)(R^7)]_{n'}-$, or $-\{[C(R^6)(R^7)]_{n'}C(O)\}_{x'}[O(C(R^6)(R^7))_y]_p-$;
each $R^6$ is individually H, $OR^{10}$, alkyl, aryl, or C(O)OH;
each $R^7$ is individually H, $OR^{10}$, alkyl, or aryl;
each $R^{10}$ is individually H or alkyl;
n' is 1-12;
y is 1, 2, or 3;
p is 1, 2, or 3; and
x' is 1-10;
$R^2$ is H or alkyl;
E is O or $NR^5$;
each $R^3$ is individually a substituent selected from the group consisting of halogen, alkyl, O-alkyl, cycloalkyl, and an alkyl group containing a heteroatom, a halogen, a carbonyl group, alkoxy, or amino group;
each $R^4$ is individually a substituent selected from the group consisting of halogen, alkyl, O-alkyl, cycloalkyl, and an alkyl group containing a heteroatom, a halogen, a carbonyl group, alkoxy, or amino group;
$R^5$ is H or alkyl;
n is 0-5;
x is 0-4; and
each of q, q', and z are individually 1-10.

**2.** The article of Claim 1, wherein $R^1$ is $-(CH_2)_{n'}-$, cyclohexan-1,4-yl, phenylen-1,4-yl, $-[(CH_2)_3C(O)]_2-O-(CH_2)_y-$, $-C(CH_3)(C(O)OH)-$, $-C(H)(phenyl)C(CH_3)(H)-$, or $-CH_2C(CH_3)_2CH_2-$.

**3.** The article of Claim 1 or Claim 2, wherein $R^1$ is $-(CH_2)_3-$; E is O; n is 0, x is 0, and $R^2$ is H or methyl.

**4.** The article of any one of Claims 1-3, wherein the compound of Formula (I), (II), or (III) is:

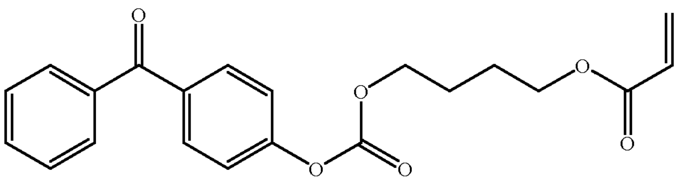

4-(((4-benzoylphenoxy)carbonyl)oxy)butyl acrylate;

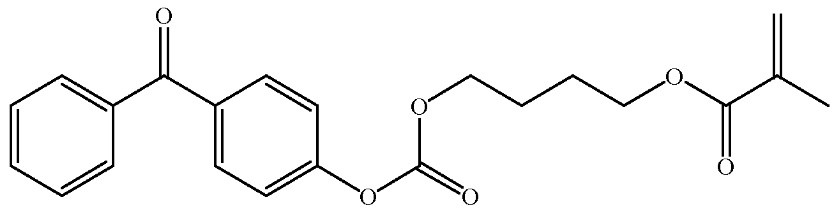

4-(((4-benzoylphenoxy)carbonyl)oxy)butyl methacrylate;

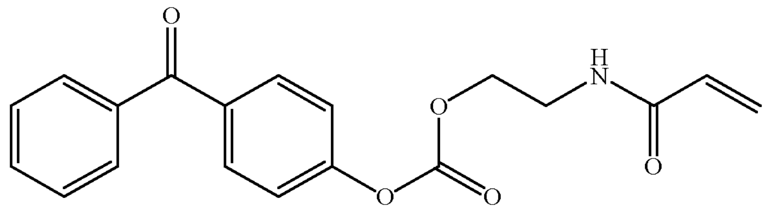

2-acrylamidoethyl (4-benzoylphenyl) carbonate;

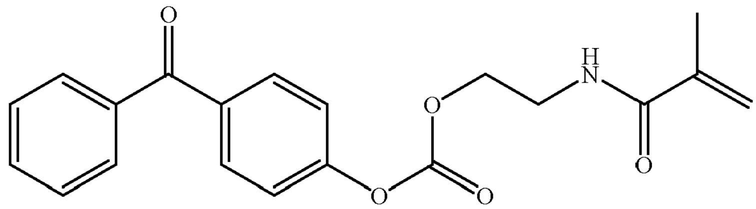

4-benzoylphenyl (2-methacrylamidoethyl) carbonate;

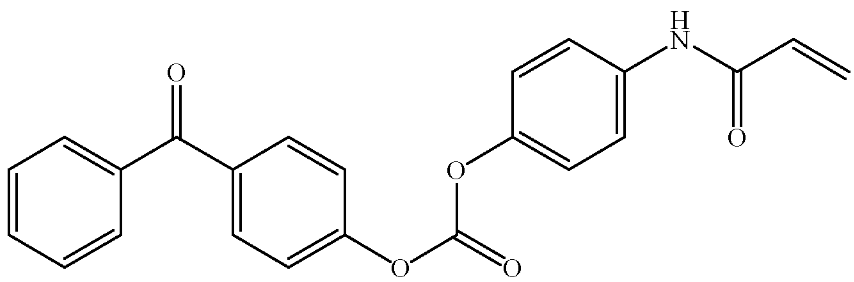

4-acrylamidophenyl (4-benzoylphenyl) carbonate;

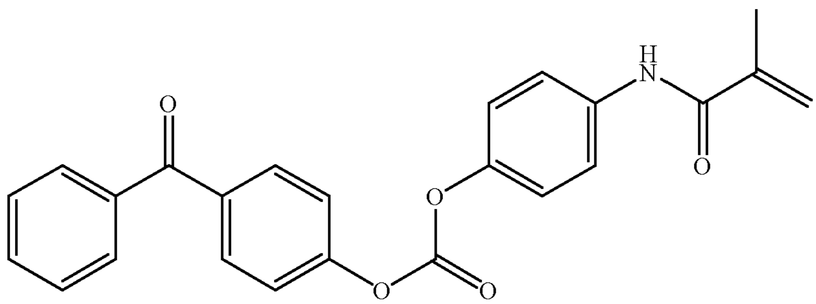

4-benzoylphenyl (4-methacrylamidophenyl) carbonate;

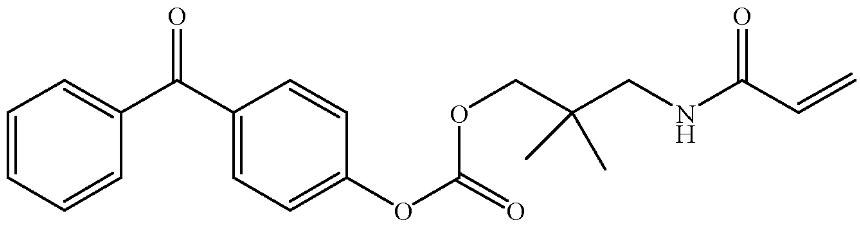

3-acrylamido-2,2-dimethylpropyl (4-benzoylphenyl) carbonate;

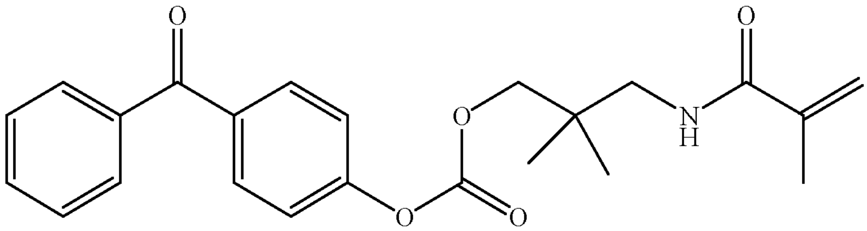

4-benzoylphenyl (3-methacrylamido-2,2-dimethylpropyl) carbonate;

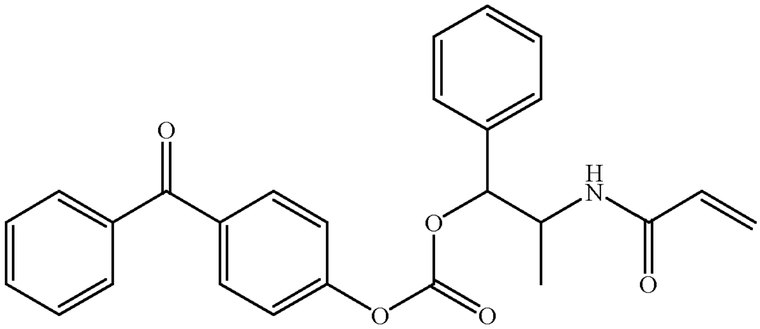

2-acrylamido-1-phenylpropyl (4-benzoylphenyl) carbonate;

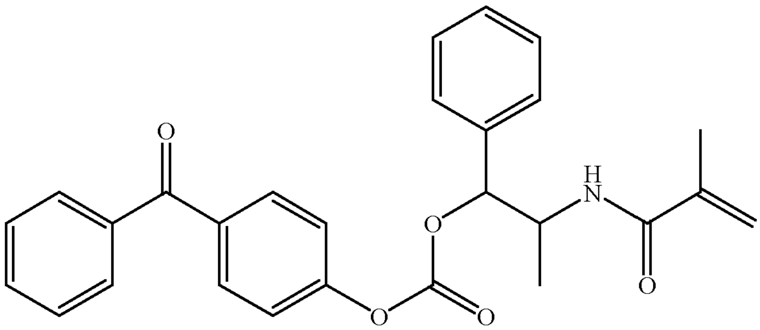

4-benzoylphenyl (2-methacrylamido-1-phenylpropyl) carbonate;

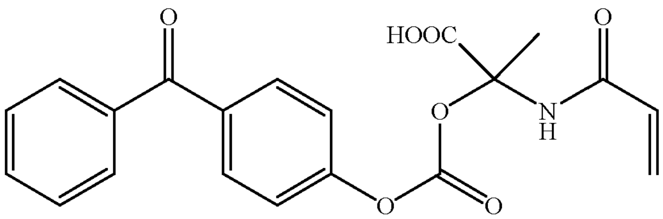

2-acrylamido-2-(((4-benzoylphenoxy)carbonyl)oxy)propanoic acid;

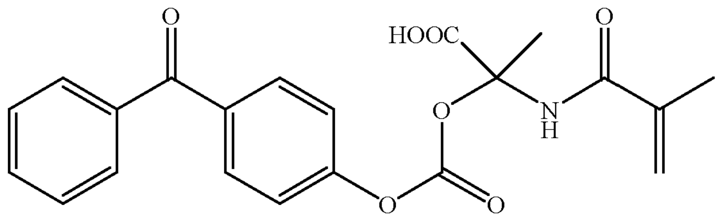

2-(((4-benzoylphenoxy)carbonyl)oxy)-2-methacrylamidopropanoic acid;

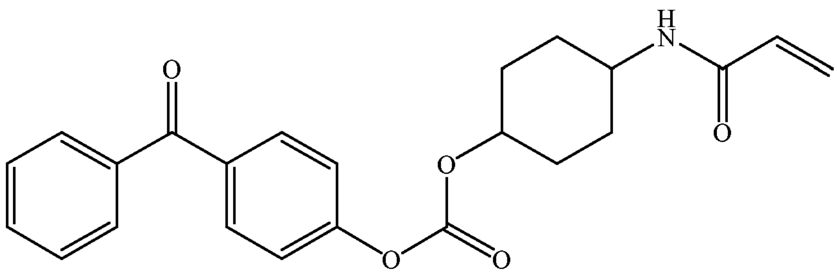

4-acrylamidocyclohexyl (4-benzoylphenyl) carbonate;

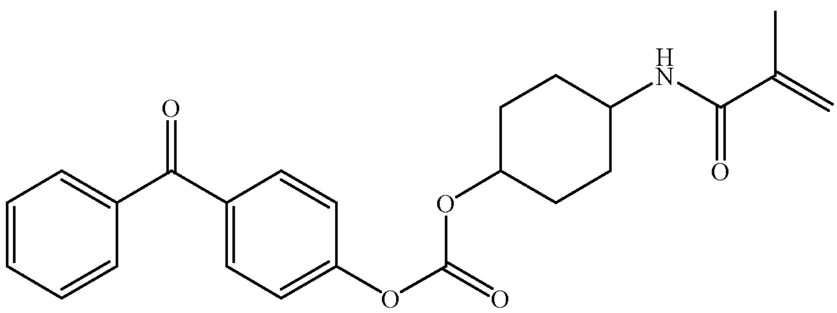

4-benzoylphenyl (4-methacrylamidocyclohexyl) carbonate;

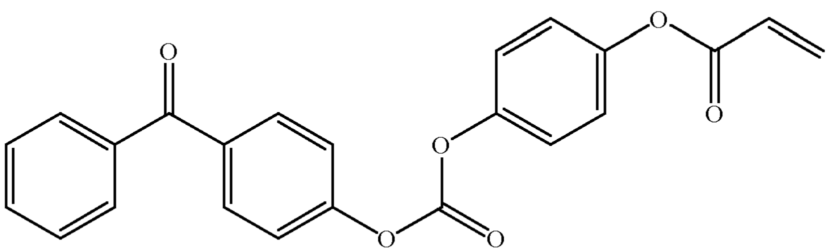

4-(((4-benzoylphenoxy)carbonyl)oxy)phenyl acrylate; or

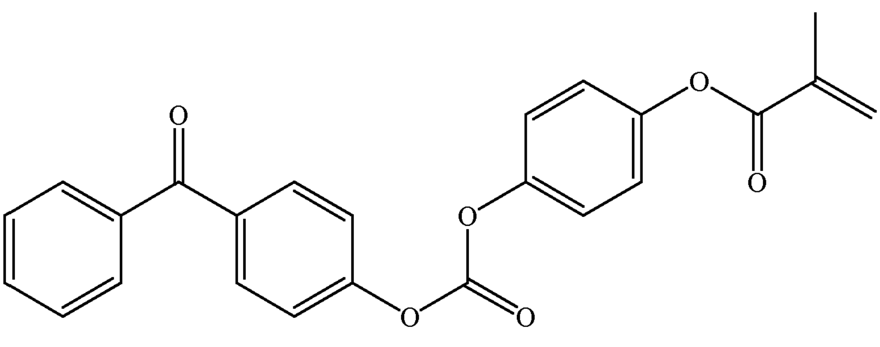

4-(((4-benzoylphenoxy)carbonyl)oxy)phenyl methacrylate.

**5.** The article of any one of Claims 1-4, wherein the compound of Formula (I), (II), or (III) is present from 0.01 wt% to 5 wt%, based on the solids of the UV-curable hot melt adhesive composition.

**6.** The article of any one of Claims 1-5, wherein the (meth)acrylic co-polymer is derived from a (meth)acrylic monomer containing acrylic acid, methacrylic acid, methylmethacrylic acid, methylmethacrylate, ethylmethacrylate, a hydroxy vinyl ether, methyl acrylate, ethyl acrylate, n-propyl acrylate, isopropyl acrylate, n-butyl acrylate (BA), n-decyl acrylate, isobutyl acrylate, n-amyl acrylate, n-hexyl acrylate, isoamyl acrylate, 2-hydroxyethyl acrylate, 2-hydroxypropyl acrylate, N,N-dimethylaminoethyl acrylate, N,N-diethylaminoethyl acrylate, t-butylaminoethyl acrylate, 2-sulfoethyl acrylate, trifluoroethyl acrylate, glycidyl acrylate, benzyl acrylate, allyl acrylate, 2-n-butoxyethyl acrylate, 2-chloroethyl acrylate, sec-butyl-acrylate, tert-butyl acrylate, 2-ethylbutyl acrylate, cinnamyl acrylate, crotyl acrylate, cyclohexyl acrylate, cyclopentyl acrylate, 2-ethoxyethyl acrylate, furfuryl acrylate, hexafluoroisopropyl acrylate, methallyl acrylate, 3-methoxybutyl acrylate, 2-methoxybutyl acrylate, 2-nitro-2-methylpropyl acrylate, n-octylacrylate, 2-ethylhexyl acrylate, 2-phenoxyethyl acrylate, 2-phenylethyl acrylate, phenyl acrylate, propargyl acrylate, tetrahydrofurfuryl acrylate and tetrahydropyranyl acrylate, methyl methacrylate, ethyl methacrylate, n-propyl methacrylate, n-butyl methacrylate (BMA), isopropyl methacrylate, isobutyl methacrylate, n-amyl methacrylate, n-hexyl methacrylate, isoamyl methacrylate, 2-hydroxyethyl methacrylate, 2-hydroxypropyl methacrylate, N,N-dimethylaminoethyl methacrylate, N,N-diethylaminoethyl methacrylate, t-butylaminoethyl methacrylate, 2-sulfoethyl methacrylate, trifluoroethyl methacrylate, glycidyl methacrylate (GMA), benzyl methacrylate, allyl methacrylate, 2-n-butoxyethyl methacrylate, 2-chloroethyl methacrylate, sec-butyl-methacrylate, tert-butyl methacrylate, 2-ethylbutyl methacrylate, cinnamyl methacrylate, crotyl methacrylate, cyclohexyl methacrylate, cyclopentyl methacrylate, 2-ethoxyethyl methacrylate, furfuryl methacrylate, hexafluoroisopropyl methacrylate, methallyl methacrylate, 3-methoxybutyl methacrylate, 2-methoxybutyl methacrylate, 2-nitro-2-methylpropyl methacrylate, n-octylmethacrylate, 2-ethylhexyl methacrylate, 2-phenoxyethyl methacrylate, 2-phenylethyl methacrylate, phenyl methacrylate, propargyl methacrylate, tetrahydrofurfuryl methacrylate, tetrahydropyranyl methacrylate, hydroxyalkyl acrylates and methacrylates, acrylic acid and its salts, acrylonitrile, acrylamide, methyl alpha-chloroacrylate, methyl 2-cyanoacrylate, N-ethylacrylamide, N,N-diethylacrylamide, acrolein, methacrylic acid and its salts, methacrylonitrile, methacrylamide, N-methylmethacrylamide, N-ethylmethacrylamide, N,N-diethylmethacrylamide, N,N-dimethylmethacrylamide, N-phenylmethacrylamide, methacrolein, or a mixture of any two or more thereof.

**7.** The article of any one of Claims 1-6, wherein the UV-curable acrylic polymer has a weight average molecular weight ($M_W$) is from 30,000 g/mol to 300,000 g/mol, determined by the GPC method defined in the description.

**8.** The article of any one of Claims 1-7, wherein the UV-curable hot melt adhesive composition further comprises an antioxidant.

**9.** The article of any one of Claims 1-8, wherein the UV-curable hot melt adhesive composition further comprises a tackifier.

**10.** The article of any one of Claims 1-9, wherein the UV-curable hot melt adhesive composition is essentially free of solvents and volatile components.

**11.** A method for preparing a floor covering element, the method comprising:

heating a UV-curable hot melt adhesive composition to a molten state at a temperature from 80 °C to 160 °C to provide a molten UV-curable hot melt adhesive;
applying the molten UV-curable hot melt adhesive to a reverse face of the floor covering element to provide an adhesive-coated floor covering;
exposing the UV-curable hot melt adhesive on the reverse face of the floor covering to ultraviolet radiation having a wavelength of 250 nm to 260 nm to photoinitiate curing of the disposed UV-curable hot melt adhesive to the floor covering element to form a cured floor covering element having cured adhesive; and
applying a release liner to cured adhesive;
wherein:
the UV-curable hot melt adhesive composition comprises a UV-curable acrylic co-polymer derived from a (meth) acrylic co-polymer covalently bound to a compound of Formula (I), (II), or (III) through the olefinic moiety of the compound:

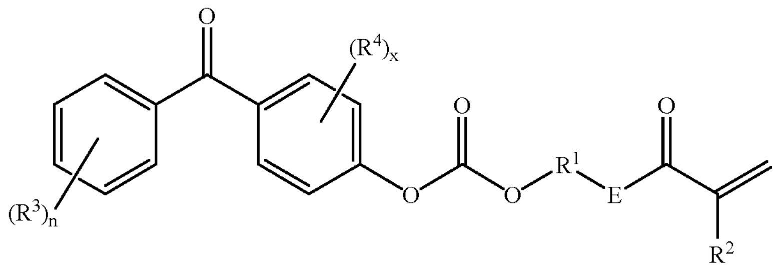

(I);

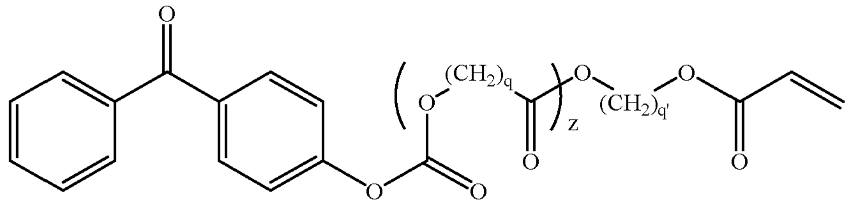

(II);

or

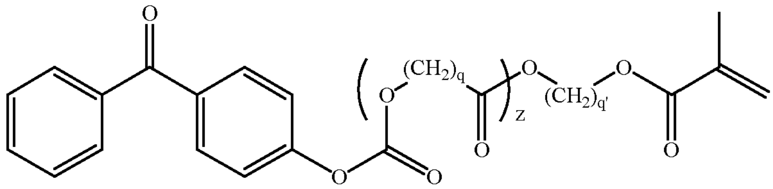

(III);

wherein:

$R^1$ is a linker group; wherein:

> $R^1$ is arylene, cycloalkylenyl, $-[C(R^6)(R^7)]_{n'}-$, or $-\{[C(R^6)(R^7)]_{n'}C(O)\}_{x'}[O(C(R^6)(R^7))_y]_p-$;
> each $R^6$ is individually H, $OR^{10}$, alkyl, aryl, or C(O)OH; each $R^7$ is individually H, $OR^{10}$, alkyl, or aryl;
> each $R^{10}$ is individually H or alkyl;
> n' is 1-12;
> y is 1, 2, or 3;
> p is 1, 2, or 3; and
> x' is 1-10;
> $R^2$ is H or alkyl;
> E is O or $NR^5$
> each $R^3$ is individually a substituent selected from the group consisting of halogen, alkyl, O-alkyl, cycloalkyl, and an alkyl group containing a heteroatom, a halogen, a carbonyl group, alkoxy, or amino group;
> each $R^4$ is individually a substituent selected from the group consisting of halogen, alkyl, O-alkyl, cycloalkyl, and an alkyl group containing a heteroatom, a halogen, a carbonyl group, alkoxy, or amino group;
> $R^5$ is H or alkyl;
> n is 0-5;
> x is 0-4; and
> each of q, q', and z are individually 1-10.

**12.** The method of Claim 11, wherein the heating a UV-curable hot melt adhesive composition to a molten state is at a temperature from 120 °C to 160 °C to provide a molten UV-curable hot melt adhesive.

**13.** The method of Claim 11 or Claim 12, wherein $R^1$ is $-(CH_2)_{n'}-$, cyclohexan-1,4-yl, phenylen-1,4-yl, $-[(CH_2)_3C(O)]_2-O-(CH_2)y-$, $-C(CH_3)(C(O)OH)-$, $-C(H)(phenyl)C(CH_3)(H)-$, or $-CH_2C(CH_3)_2CH_2-$.

**14.** The method of any one of Claims 11-13, wherein $R^1$ is $-(CH_2)_3-$; E is O; n is 0, x is 0, and $R^2$ is H or methyl.

**15.** The method of any one of Claims 11-14, wherein the compound of Formula (I), (II), or (III) is:

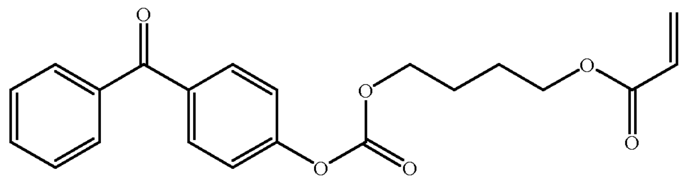

4-(((4-benzoylphenoxy)carbonyl)oxy)butyl acrylate;

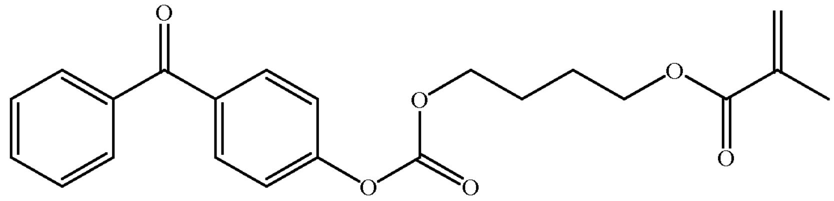

4-(((4-benzoylphenoxy)carbonyl)oxy)butyl methacrylate;

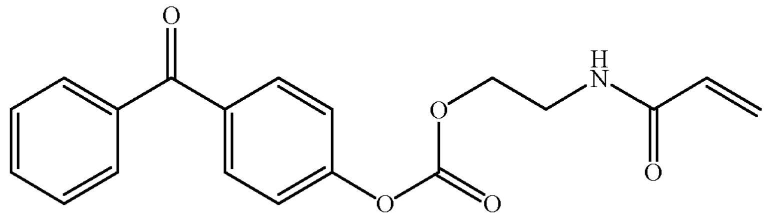

2-acrylamidoethyl (4-benzoylphenyl) carbonate;

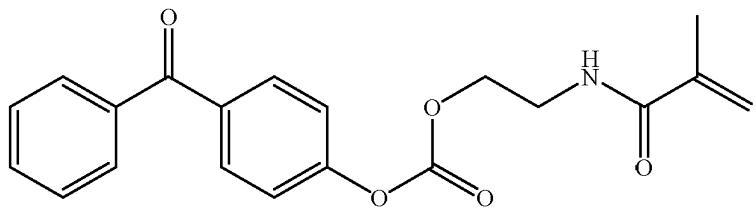

4-benzoylphenyl (2-methacrylamidoethyl) carbonate;

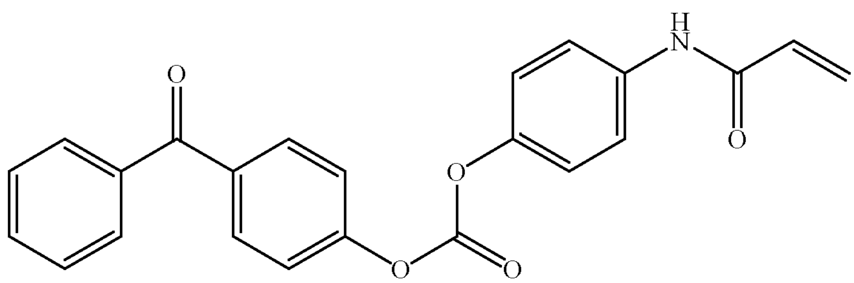

4-acrylamidophenyl (4-benzoylphenyl) carbonate;

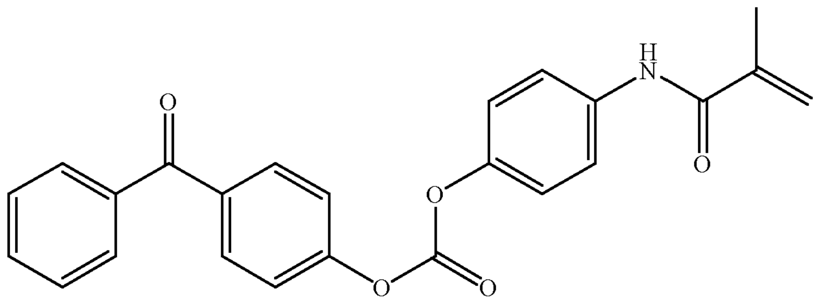

4-benzoylphenyl (4-methacrylamidophenyl) carbonate;

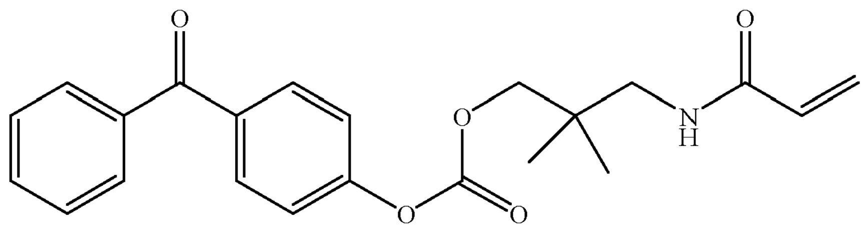

3-acrylamido-2,2-dimethylpropyl (4-benzoylphenyl) carbonate;

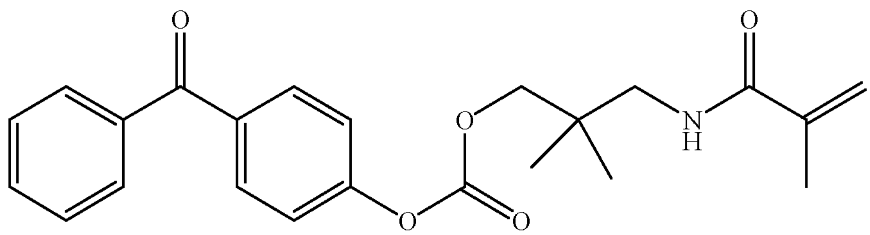

4-benzoylphenyl (3-methacrylamido-2,2-dimethylpropyl) carbonate;

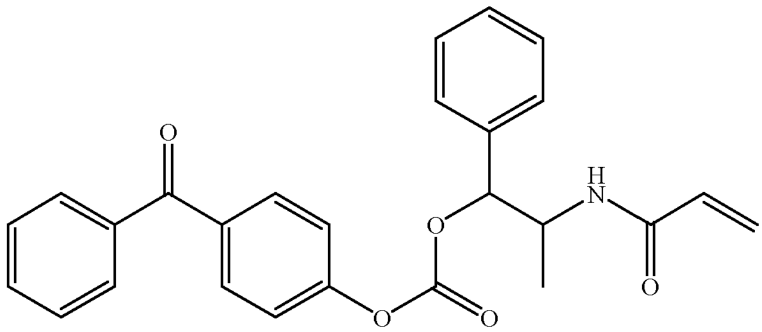

2-acrylamido-1-phenylpropyl (4-benzoylphenyl) carbonate;

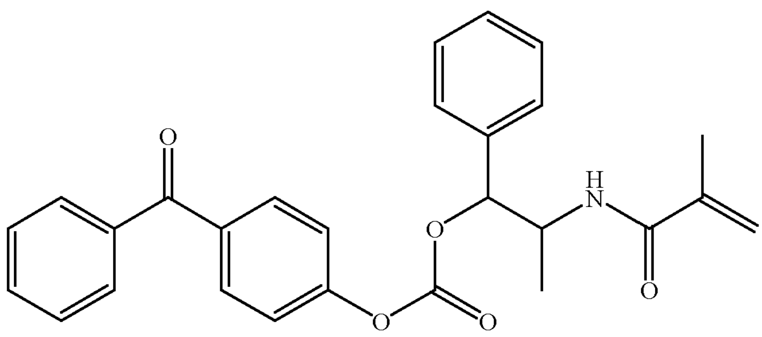

4-benzoylphenyl (2-methacrylamido-1-phenylpropyl) carbonate;

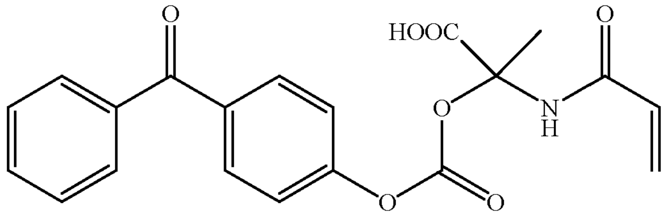

2-acrylamido-2-(((4-benzoylphenoxy)carbonyl)oxy)propanoic acid;

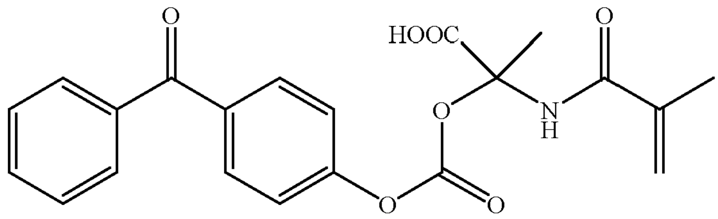

2-(((4-benzoylphenoxy)carbonyl)oxy)-2-methacrylamidopropanoic acid;

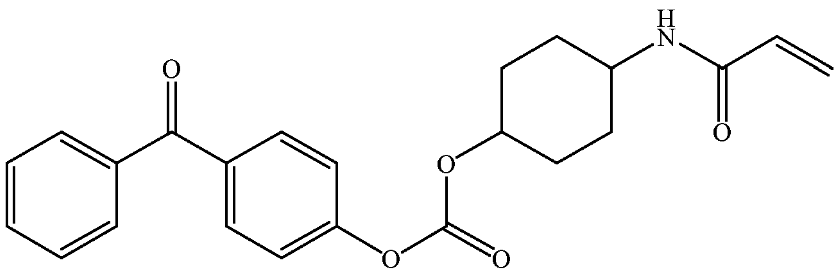

4-acrylamidocyclohexyl (4-benzoylphenyl) carbonate;

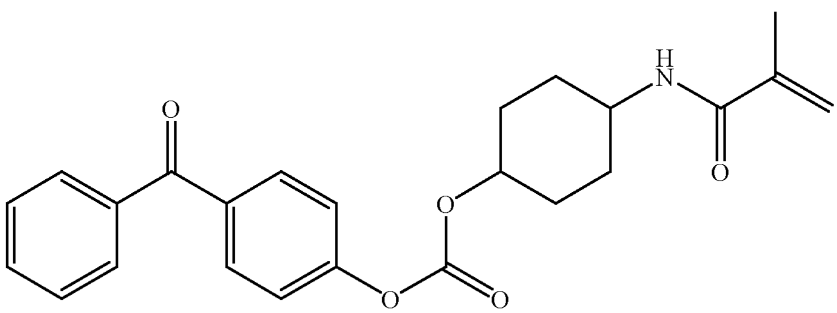

4-benzoylphenyl (4-methacrylamidocyclohexyl) carbonate;

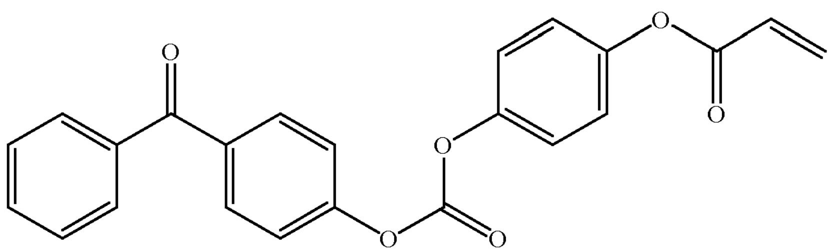

4-(((4-benzoylphenoxy)carbonyl)oxy)phenyl acrylate; or

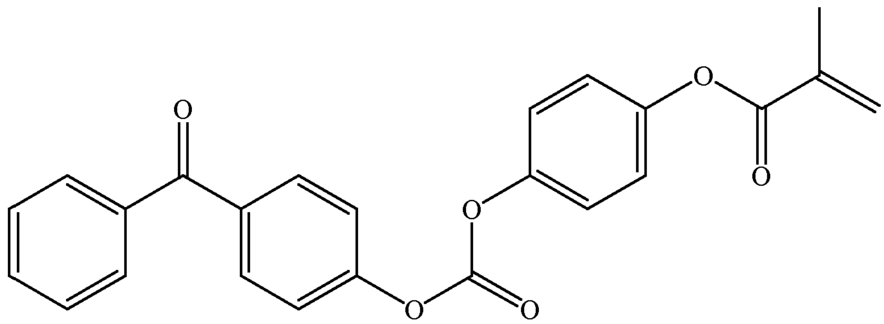

4-(((4-benzoylphenoxy)carbonyl)oxy)phenyl methacrylate.

**16.** The method of any one of Claims 11-15, wherein the compound of Formula (I), (II), or (III) is present from 0.01 wt% to 5 wt%, based on the solids of the UV-curable hot melt adhesive composition.

**17.** The method of any one of Claims 11-16, wherein the (meth)acrylic co-polymer is derived from a (meth)acrylic monomer containing acrylic acid, methacrylic acid, methylmethacrylic acid, methylmethacrylate, ethylmethacrylate, a hydroxy vinyl ether, methyl acrylate, ethyl acrylate, n-propyl acrylate, isopropyl acrylate, n-butyl acrylate (BA), n-decyl acrylate, isobutyl acrylate, n-amyl acrylate, n-hexyl acrylate, isoamyl acrylate, 2-hydroxyethyl acrylate, 2-hydroxypropyl acrylate, N,N-dimethylaminoethyl acrylate, N,N-diethylaminoethyl acrylate, t-butylaminoethyl acrylate, 2-sulfoethyl acrylate, trifluoroethyl acrylate, glycidyl acrylate, benzyl acrylate, allyl acrylate, 2-n-butoxyethyl acrylate, 2-chloroethyl acrylate, sec-butyl-acrylate, tert-butyl acrylate, 2-ethylbutyl acrylate, cinnamyl acrylate, crotyl acrylate, cyclohexyl acrylate, cyclopentyl acrylate, 2-ethoxyethyl acrylate, furfuryl acrylate, hexafluoroisopropyl acrylate, methallyl acrylate, 3-methoxybutyl acrylate, 2-methoxybutyl acrylate, 2-nitro-2-methylpropyl acrylate, n-octylacrylate, 2-ethylhexyl acrylate, 2-phenoxyethyl acrylate, 2-phenylethyl acrylate, phenyl acrylate, propargyl acrylate, tetrahydrofurfuryl acrylate and tetrahydropyranyl acrylate, methyl methacrylate, ethyl methacrylate, n-propyl methacrylate, n-butyl methacrylate (BMA), isopropyl methacrylate, isobutyl methacrylate, n-amyl methacrylate, n-hexyl methacrylate, isoamyl methacrylate, 2-hydroxyethyl methacrylate, 2-hydroxypropyl methacrylate, N,N-dimethylaminoethyl methacrylate, N,N-diethylaminoethyl methacrylate, t-butylaminoethyl methacrylate, 2-sulfoethyl methacrylate, trifluoroethyl methacrylate, glycidyl methacrylate (GMA), benzyl methacrylate, allyl methacrylate, 2-n-butoxyethyl methacrylate, 2-chloroethyl methacrylate, sec-butyl-methacrylate, tert-butyl methacrylate, 2-ethylbutyl methacrylate, cinnamyl methacrylate, crotyl methacrylate, cyclohexyl methacrylate, cyclopentyl methacrylate, 2-ethoxyethyl methacrylate, furfuryl methacrylate, hexafluoroisopropyl methacrylate, methallyl methacrylate, 3-methoxybutyl methacrylate, 2-methoxybutyl methacrylate, 2-nitro-2-methylpropyl methacrylate, n-octylmethacrylate, 2-ethylhexyl methacrylate, 2-phenoxyethyl methacrylate, 2-phenylethyl methacrylate, phenyl methacrylate, propargyl methacrylate, tetrahydrofurfuryl methacrylate, tetrahydropyranyl methacrylate, hydroxyalkyl acrylates and methacrylates, acrylic acid and its salts, acrylonitrile, acrylamide, methyl alpha-chloroacrylate, methyl 2-cyanoacrylate, N-ethylacrylamide, N,N-diethylacrylamide, acrolein, methacrylic acid and its salts, methacrylonitrile, methacrylamide, N-methylmethacrylamide, N-ethylmethacrylamide, N,N-diethylmethacrylamide, N,N-dimethylmethacrylamide, N-phenylmethacrylamide, methacrolein, or a mixture of any two or more thereof.

**18.** The method of any one of Claims 11-17, wherein the UV-curable acrylic polymer has a weight average molecular weight ($M_W$) is from 30,000 g/mol to 300,000 g/mol, determined by the GPC method defined in the description.

**19.** The method of any one of Claims 11-18, wherein the UV-curable hot melt adhesive composition further comprises an antioxidant.

**20.** The method of any one of Claims 11-19, wherein the UV-curable hot melt adhesive composition further comprises a tackifier.

**21.** The method of any one of Claims 11-20, wherein the UV-curable hot melt adhesive composition is essentially free of solvents and volatile components.

**Patentansprüche**

**1.** Fertigungserzeugnis, umfassend:

ein Fußbodenbelagelement, das eine Vorderfläche und eine Rückfläche aufweist;
eine Haftschicht, die auf der Rückfläche aufgebracht ist; und
eine Trennlage, die sich in Haftung mit der Haftschicht befindet;
wobei:
die Haftschicht eine UV-härtbare Heißschmelzhaftmittelzusammensetzung, umfassend ein UV-härtbares Acryl-Copolymer, das von einem (Meth)acryl-Copolymer abgeleitet ist, das an eine Verbindung von Formel (I), (II) oder (III) über den Olefinrest der Verbindung kovalent gebunden ist:

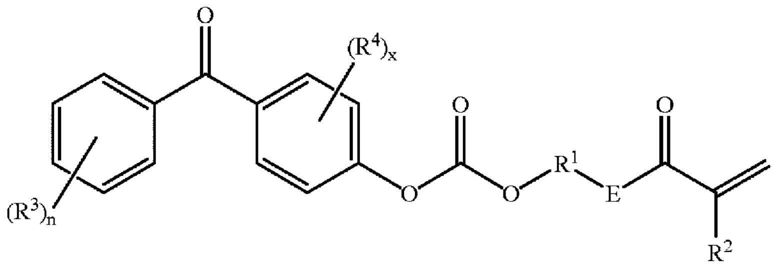
(I);

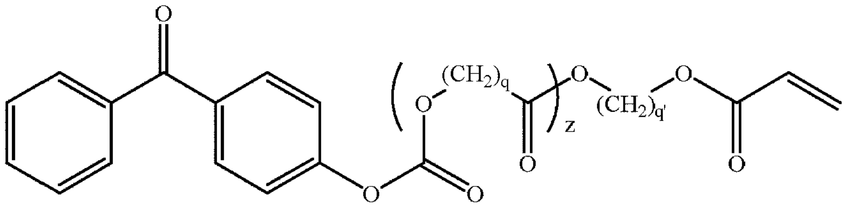
(II);

oder

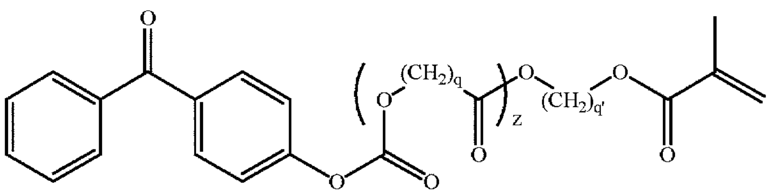
(III);

wobei:
$R^1$ eine Linkergruppe ist; wobei:

$R^1$ Arylen, Cycloalkylenyl, $-[C(R^6)(R^7)]_{n'}-$ oder - $([C(R^6)(R^7)]_{n'}C(O)\}_{x'}[O(C(R^6)(R^7))_y]_p-$ ist;
jedes $R^6$ unabhängig voneinander H, $OR^{10}$, Alkyl, Aryl oder C(O)OH ist;
jedes $R^7$ unabhängig voneinander H, $OR^{10}$, Alkyl oder Aryl ist;
jedes $R^{10}$ unabhängig voneinander H oder Alkyl ist;
n' 1-12 ist;
y 1, 2 oder 3 ist;
p 1, 2 oder 3 ist; und
x' 1-10 ist;
$R^2$ H oder Alkyl ist;
E O oder $NR^5$ ist;
jedes $R^3$ unabhängig voneinander ein Substituent ist, der aus der Gruppe ausgewählt ist, bestehend aus Halogen, Alkyl, O-Alkyl, Cycloalkyl und einer Alkylgruppe, die ein Heteroatom, ein Halogen, eine Carbonylgruppe, Alkoxy oder eine Aminogruppe enthält;
jedes $R^4$ unabhängig voneinander ein Substituent ist, der aus der Gruppe ausgewählt ist, bestehend aus Halogen, Alkyl, O-Alkyl, Cycloalkyl und einer Alkylgruppe, die ein Heteroatom, ein Halogen, eine Carbonylgruppe, Alkoxy oder eine Aminogruppe enthält;
$R^5$ H oder Alkyl ist;
n 0-5 ist;
x 0-4 ist; und

jedes von q, q' und z unabhängig voneinander 1-10 ist.

2. Erzeugnis nach Anspruch 1, wobei $R^1$ $-(CH_2)_{n'}-$, Cyclohexan-1,4-yl, Phenylen-1,4-yl, $-[(CH_2)_{3C}(O)]_2-O-(CH_2)_y-$, $-C(CH_3)(C(O)OH)-$, $-C(H)(Phenyl)C(CH_3)(H)-$ oder $-CH_2C(CH_3)_2CH_2-$ ist.

3. Erzeugnis nach Anspruch 1 oder 2, wobei $R^1$ $-(CH_2)_3-$ ist; E O ist; n 0 ist, x 0 ist und $R^2$ H oder Methyl ist.

4. Erzeugnis nach einem der Ansprüche 1 bis 3, wobei die Verbindung von Formel (I), (II) oder (III) ist:

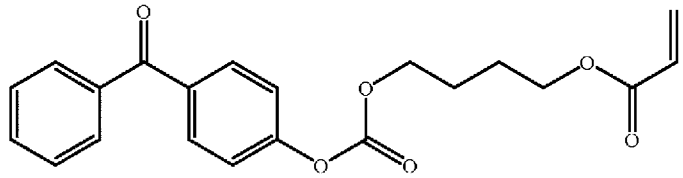

4-(((4-Benzoylphenoxy)carbonyl)oxy)butylacrylat;

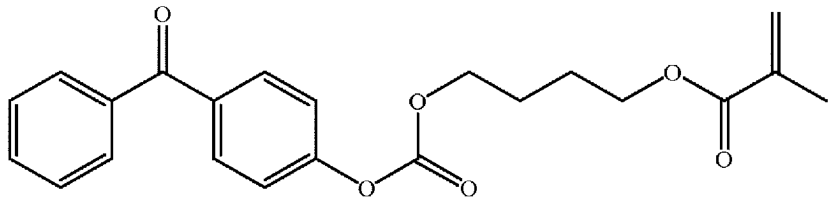

4-(((4-Benzoylphenoxy)carbonyl)oxy)butylmethacrylat;

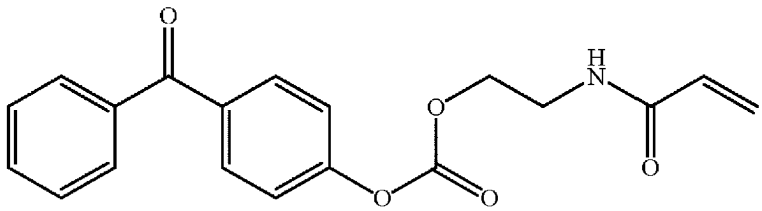

2-Acrylamidoethyl-(4-benzoylphenyl)carbonat;

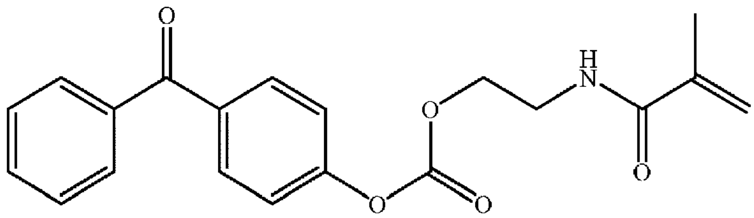

4-Benzoylphenyl-(2-methacrylamidoethyl)carbonat;

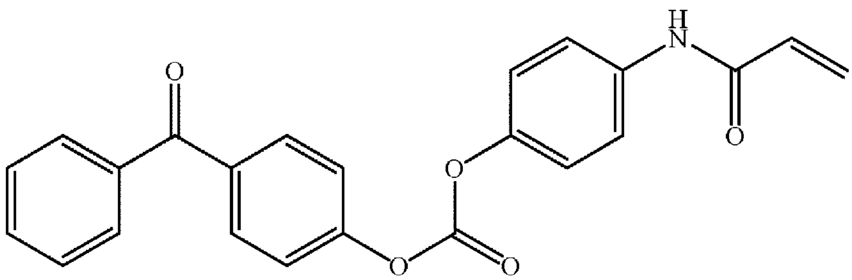

4-Acrylamidophenyl-(4-benzoylphenyl)carbonat;

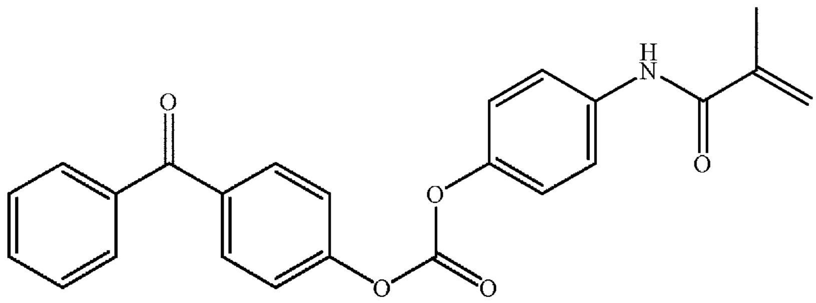

4-Benzoylphenyl-(4-methacrylamidophenyl)carbonat;

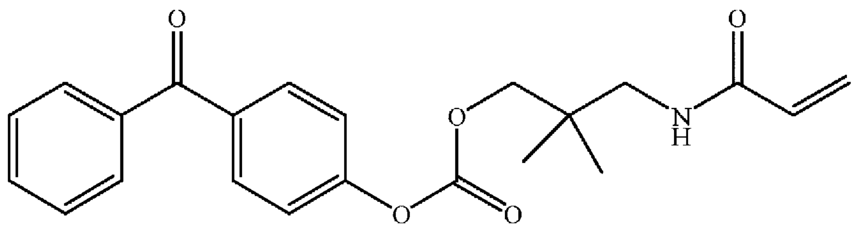

3-Acrylamido-2,2-dimethylpropyl-(4-benzoylphenyl)carbonat;

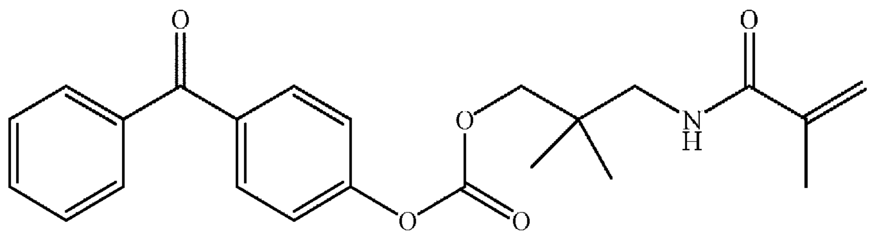

4-Benzoylphenyl-(3-methacrylamido-2,2-dimethylpropyl)carbonat;

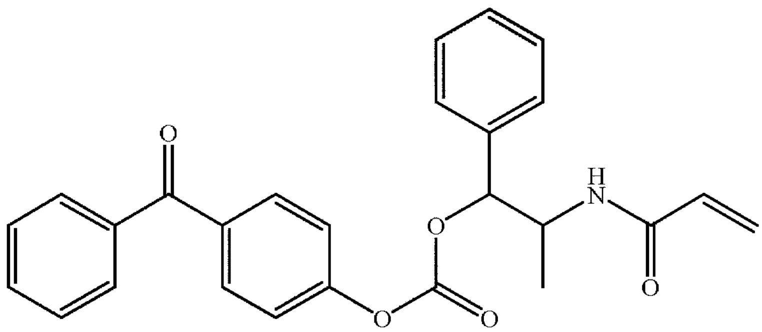

2-Acrylamido-1-phenylpropyl-(4-benzoylphenyl)carbonat;

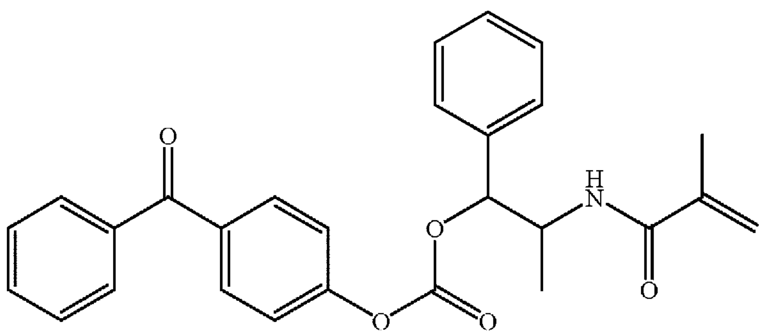

4-Benzoylphenyl-(2-methacrylamido-1-phenylpropyl)carbonat;

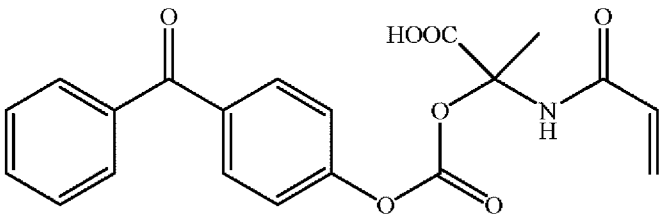

2-Acrylamido-2-(((4-benzoylphenoxy)carbonyl)oxy)propansäure;

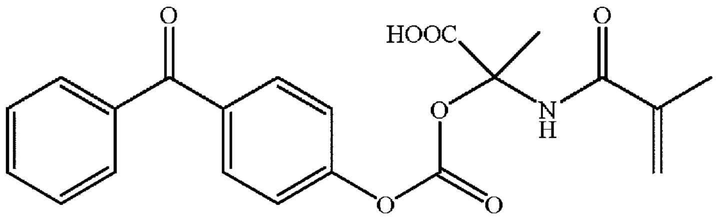

2-(((4-Benzoylphenoxy)carbonyl)oxy)-2-methacrylamidopropansäure;

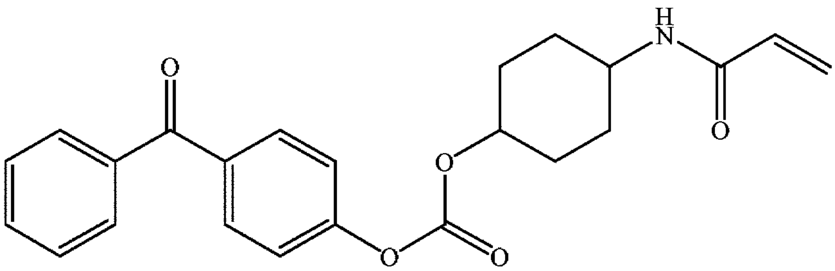

4-Acrylamidocyclohexyl-(4-benzoylphenyl)carbonat;

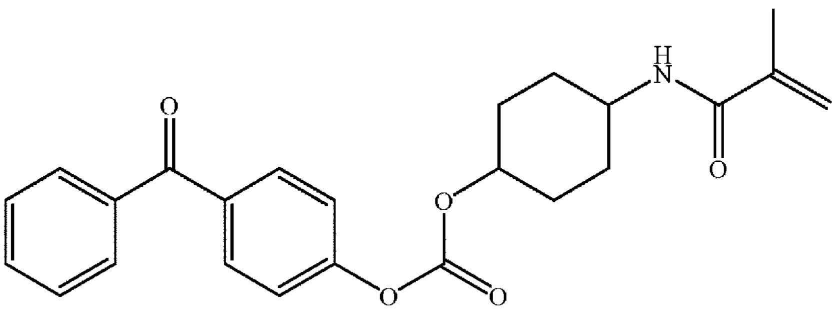

4-Benzoylphenyl-(4-methacrylamidocyclohexyl)carbonat;

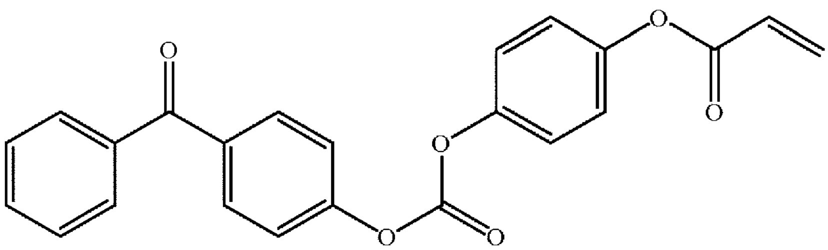

4-(((4-Benzoylphenoxy)carbonyl)oxy)phenylacrylat; oder

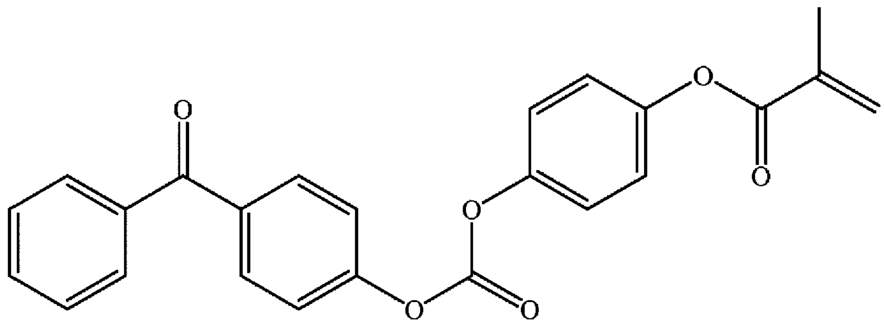

4-(((4-Benzoylphenoxy)carbonyl)oxy)phenylmethacrylat.

5. Erzeugnis nach einem der Ansprüche 1 bis 4, wobei die Verbindung von Formel (I), (II) oder (III) von zu 0,01 Gew.-% bis 5 Gew.-%, basierend auf den Feststoffen der UV-härtbaren Heißschmelzhaftmittelzusammensetzung, vorhanden ist.

6. Erzeugnis nach einem der Ansprüche 1 bis 5, wobei das (Meth)acryl-Copolymer von einem (Meth)acrylmonomer abgeleitet ist, das Acrylsäure, Methacrylsäure, Methylmethacrylsäure, Methylmethacrylat, Ethylmethacrylat, einen Hydroxyvinylether, Methylacrylat, Ethylacrylat, n-Propylacrylat, Isopropylacrylat, n-Butylacrylat (BA), n-Decylacrylat, Isobutylacrylat, n-Amylacrylat, n-Hexylacrylat, Isoamylacrylat, 2-Hydroxyethylacrylat, 2-Hydroxypropylacrylat, N,N-Dimethylaminoethylacrylat, N,N-Diethylaminoethylacrylat, t-Butylaminoethylacrylat, 2-Sulfoethylacrylat, Trifluorethylacrylat, Glycidylacrylat, Benzylacrylat, Allylacrylat, 2-n-Butoxyethylacrylat, 2-Chlorethylacrylat, sec-Butylacrylat, tert-Butylacrylat, 2-Ethylbutylacrylat, Cinnamylacrylat, Crotylacrylat, Cyclohexylacrylat, Cyclopentylacrylat, 2-Ethoxyethylacrylat, Furfurylacrylat, Hexafluorisopropylacrylat, Methallylacrylat, 3-Methoxybutylacrylat, 2-Methoxybutylacrylat, 2-Nitro-2-methylpropylacrylat, n-Octylacrylat, 2-Ethylhexylacrylat, 2-Phenoxyethylacrylat, 2-Phenylethylacrylat, Phenylacrylat, Propargylacrylat, Tetrahydrofurfurylacrylat und Tetrahydropyranylacrylat, Methylmethacrylat, Ethylmethacrylat, n-Propylmethacrylat, n-Butylmethacrylat (BMA), Isopropylmethacrylat, Isobutylmethacrylat, n-Amylmethacrylat, n-Hexylmethacrylat, Isoamylmethacrylat, 2-Hydroxyethylmethacrylat, 2-Hydroxypropylmethacrylat, N,N-Dimethylaminoethylmethacrylat, N,N-Diethylaminoethylmethacrylat, t-Butylaminoethylmethacrylat, 2-Sulfoethylmethacrylat, Trifluorethylmethacrylat, Glycidylmethacrylat (GMA), Benzylmethacrylat, Allylmethacrylat, 2-n-Butoxyethylmethacrylat, 2-Chlorethylmethacrylat, sec-Butylmethacrylat, tert-Butylmethacrylat, 2-Ethylbutylmethacrylat, Cinnamylmethacrylat, Crotylmethacrylat, Cyclohexylmethacrylat, Cyclopentylmethacrylat, 2-Ethoxyethylmethacrylat, Furfurylmethacrylat, Hexafluorisopropylmethacrylat, Methallylmethacrylat, 3-Methoxybutylmethacrylat, 2-Methoxybutylmethacrylat, 2-Nitro-2-methylpropylmethacrylat, n-Octylmethacrylat, 2-Ethylhexylmethacrylat, 2-Phenoxyethylmethacrylat, 2-Phenylethylmethacrylat, Phenylmethacrylat, Propargylmethacrylat, Tetrahydrofurfurylmethacrylat, Tetrahydropyranylmethacrylat, Hydroxyalkylacrylate und -methacrylate, Acrylsäure und ihre Salze, Acrylnitril, Acrylamid, Methyl-alpha-chloracrylat, Methyl-2-cyanacrylat, N-Ethylacrylamid, N,N-Diethylacrylamid, Acrolein, Methacrylsäure und ihre Salze, Methacrylnitril, Methacrylamid, N-Methylmethacrylamid, N-Ethylmethacrylamid, N,N-Diethylmethacrylamid, N,N-Dimethylmethacrylamid, N-Phenylmethacrylamid, Methacrolein oder eine Mischung aus zwei beliebigen oder mehr davon enthält.

7. Erzeugnis nach einem der Ansprüche 1 bis 6, wobei das UV-härtbare Acrylpolymer ein Gewichtsmittel des Molekulargewichts (Mw), das von 30.000 g/mol bis 300.000 g/mol beträgt, aufweist, bestimmt durch das in der Beschreibung definierte GPC-Verfahren.

8. Erzeugnis nach einem der Ansprüche 1 bis 7, wobei die UV-härtbare Heißschmelzhaftmittelzusammensetzung ferner ein Antioxidans umfasst.

9. Erzeugnis nach einem der Ansprüche 1 bis 8, wobei die UV-härtbare Heißschmelzhaftmittelzusammensetzung ferner einen Klebrigmacher umfasst.

10. Erzeugnis nach einem der Ansprüche 1 bis 9, wobei die UV-härtbare Heißschmelzhaftmittelzusammensetzung im Wesentlichen frei von Lösemitteln und flüchtigen Bestandteilen ist.

11. Verfahren zum Herstellen eines Fußbodenbelagelements, das Verfahren umfassend:

Erhitzen einer UV-härtbaren Heißschmelzhaftmittelzusammensetzung bis zu einem geschmolzenen Zustand

bei einer Temperatur von 80 °C bis 160 °C, um ein geschmolzenes UV-härtbares Heißschmelzhaftmittel bereitzustellen;

Aufbringen des geschmolzenen, UV-härtbaren Heißschmelzhaftmittels auf eine Rückfläche des Fußbodenbelagelements, um einen mit Haftmittel beschichteten Fußbodenbelag bereitzustellen;

Aussetzen des UV-härtbaren Heißschmelzhaftmittels auf der Rückfläche des Fußbodenbelags gegenüber ultravioletter Strahlung, die eine Wellenlänge von 250 nm bis 260 nm aufweist, um eine Aushärtung des eingerichteten UV-härtbaren Heißschmelzhaftmittels auf dem Fußbodenbelagelement zu fotoinitiieren, um ein ausgehärtetes Fußbodenbelagelement auszubilden, das ein ausgehärtetes Haftmittel aufweist; und

Aufbringen einer Trennlage auf das ausgehärtete Haftmittel;

wobei:

die UV-härtbare Heißschmelzhaftmittelzusammensetzung ein UV-härtbares Acryl-Copolymer umfasst, das von einem (Meth)acryl-Copolymer abgeleitet ist, das an eine Verbindung von Formel (I), (II) oder (III) über den Olefinrest der Verbindung kovalent gebunden ist:

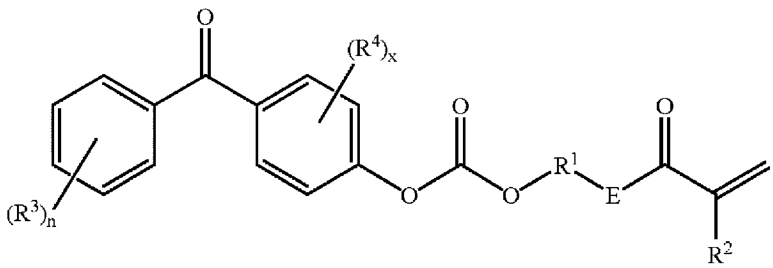

(I);

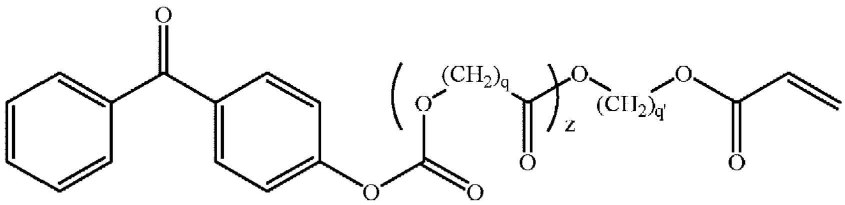

(II);

oder

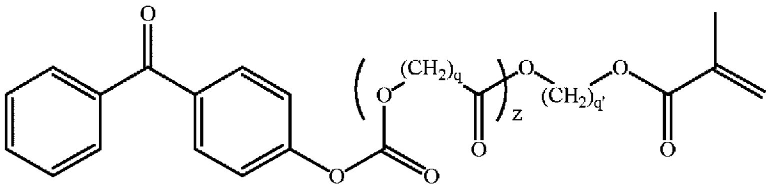

(III);

wobei:

$R^1$ eine Linkergruppe ist; wobei:

$R^1$ Arylen, Cycloalkylenyl, $-[C(R^6)(R^7)]_{n'}-$ oder $-([C(R^6)(R^7)]_{n'}C(O)\}_{x'}[O(C(R^6)(R^7))_y]_p-$ ist;
jedes $R^6$ unabhängig voneinander H, $OR^{10}$, Alkyl, Aryl oder C(O)OH ist;
jedes $R^7$ unabhängig voneinander H, $OR^{10}$, Alkyl oder Aryl ist;
jedes $R^{10}$ unabhängig voneinander H oder Alkyl ist;
n' 1-12 ist;
y 1, 2 oder 3 ist;
p 1, 2 oder 3 ist; und
x' 1-10 ist;
$R^2$ H oder Alkyl ist;
E O oder $NR^5$ ist;
jedes $R^3$ unabhängig voneinander ein Substituent ist, der aus der Gruppe ausgewählt ist, bestehend aus Halogen, Alkyl, O-Alkyl, Cycloalkyl und einer Alkylgruppe, die ein Heteroatom, ein Halogen, eine Carbonylgruppe, Alkoxy oder eine Aminogruppe enthält;

jedes $R^4$ unabhängig voneinander ein Substituent ist, der aus der Gruppe ausgewählt ist, bestehend aus Halogen, Alkyl, O-Alkyl, Cycloalkyl und einer Alkylgruppe, die ein Heteroatom, ein Halogen, eine Carbonylgruppe, Alkoxy oder eine Aminogruppe enthält;
$R^5$ H oder Alkyl ist;
n 0-5 ist;
x 0-4 ist; und
jedes von q, q' und z unabhängig voneinander 1-10 ist.

**12.** Verfahren nach Anspruch 11, wobei das Erhitzen einer UV-härtbaren Heißschmelzhaftmittelzusammensetzung bis zu einem geschmolzenen Zustand bei einer Temperatur von 120 °C bis 160 °C erfolgt, um ein geschmolzenes UV-härtbares Heißschmelzhaftmittel bereitzustellen.

**13.** Verfahren nach Anspruch 11 oder 12, wobei $R^1$ $-(CH_2)_{n'}-$, Cyclohexan-1,4-yl, Phenylen-1,4-yl, $-[(CH_2)_3C(O)]_2-O-(CH_2)_y-$, $-C(CH_3)(C(O)OH)-$, $-C(H)(Phenyl)C(CH_3)(H)-$ oder $-CH_2C(CH_3)_2CH_2-$ ist.

**14.** Verfahren nach einem der Ansprüche 11 bis 13, wobei $R^1$ $-(CH_2)_3-$ ist; E O ist; n 0 ist, x 0 ist und $R^2$ H oder Methyl ist.

**15.** Verfahren nach einem der Ansprüche 11 bis 14, wobei die Verbindung von Formel (I), (II) oder (III) ist:

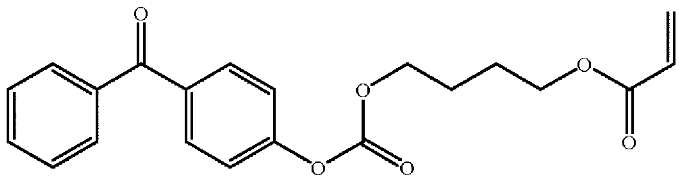

4-(((4-Benzoylphenoxy)carbonyl)oxy)butylacrylat;

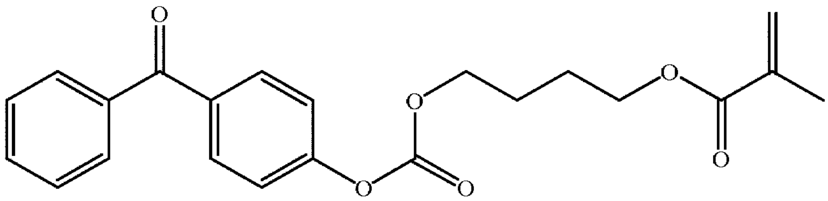

4-(((4-Benzoylphenoxy)carbonyl)oxy)butylmethacrylat;

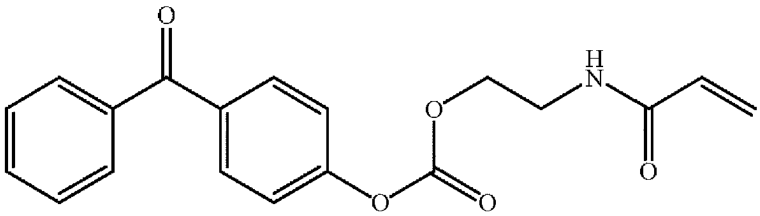

2-Acrylamidoethyl-(4-benzoylphenyl)carbonat;

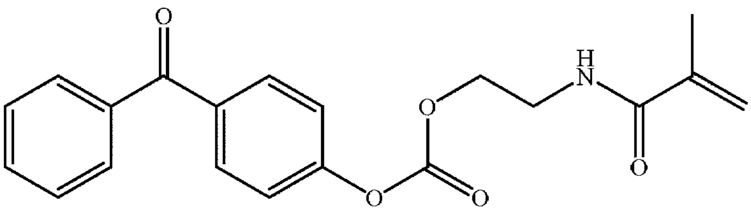

4-Benzoylphenyl-(2-methacrylamidoethyl)carbonat;

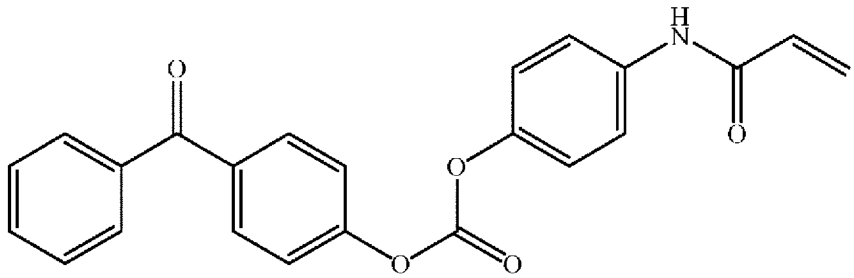

4-Acrylamidophenyl-(4-benzoylphenyl)carbonat;

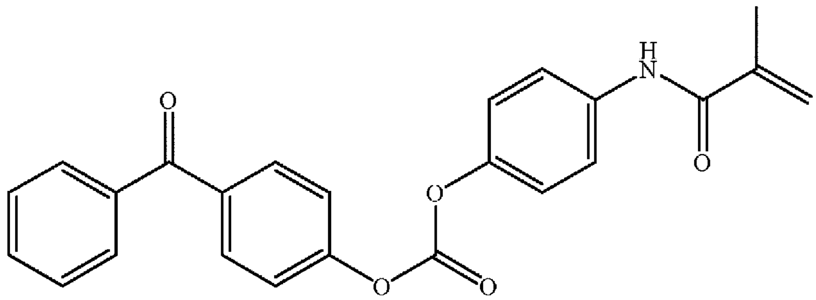

4-Benzoylphenyl-(4-methacrylamidophenyl)carbonat;

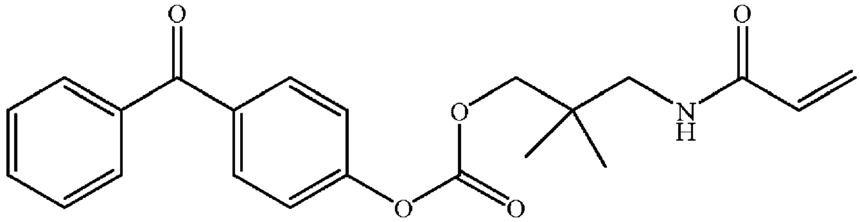

3-Acrylamido-2,2-dimethylpropyl-(4-benzoylphenyl)carbonat;

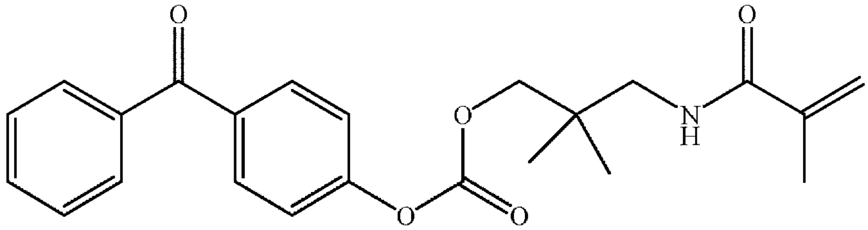

4-Benzoylphenyl-(3-methacrylamido-2,2-dimethylpropyl)carbonat;

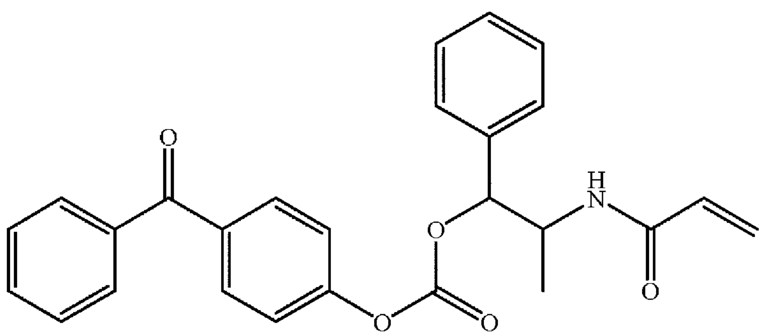

2-Acrylamido-1-phenylpropyl-(4-benzoylphenyl)carbonat;

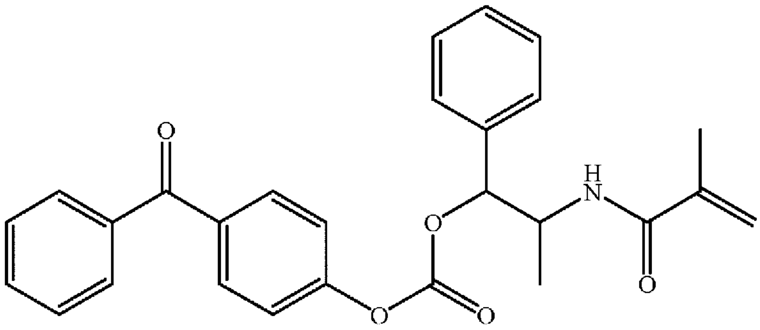

4-Benzoylphenyl-(2-methacrylamido-1-phenylpropyl)carbonat;

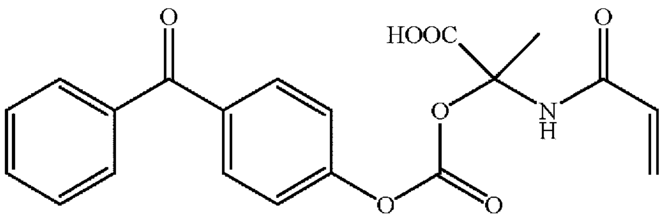

2-Acrylam ido-2-(((4-benzoylphenoxy)carbonyl)oxy)propansäure;

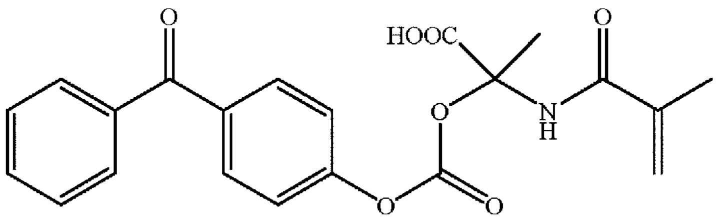

2-(((4-Benzoylphenoxy)carbonyl)oxy)-2-methacrylamidopropansäure;

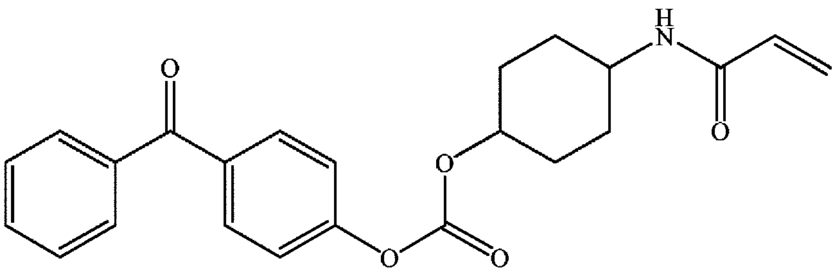

4-Acrylamidocyclohexyl-(4-benzoylphenyl)carbonat;

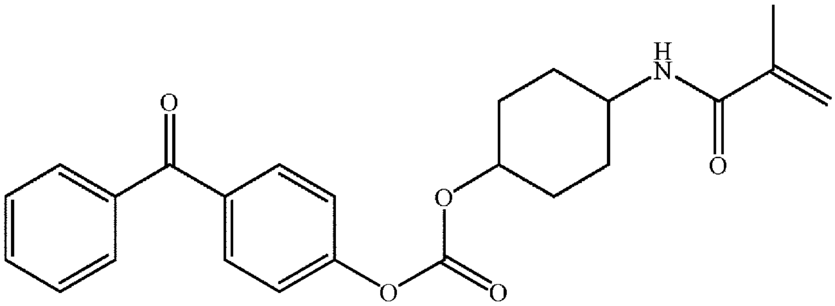

4-Benzoylphenyl-(4-methacrylamidocyclohexyl)carbonat;

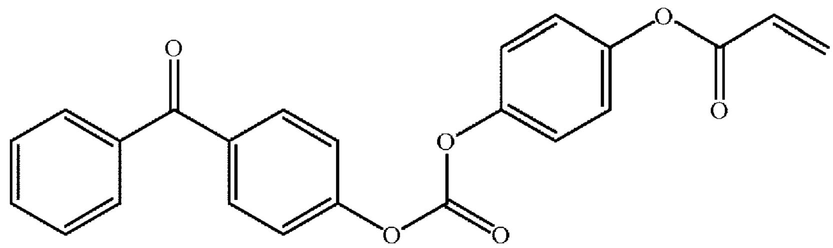

4-(((4-Benzoylphenoxy)carbonyl)oxy)phenylacrylat; oder

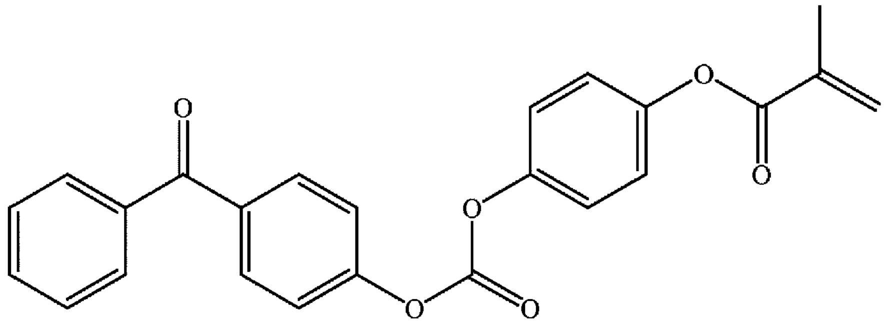

4-(((4-Benzoylphenoxy)carbonyl)oxy)phenylmethacrylat.

**16.** Verfahren nach einem der Ansprüche 11 bis 15, wobei die Verbindung von Formel (I), (II) oder (III) von zu 0,01 Gew.-% bis 5 Gew.-%, basierend auf den Feststoffen der UV-härtbaren Heißschmelzhaftmittelzusammensetzung, vorhanden ist.

**17.** Verfahren nach einem der Ansprüche 11 bis 16, wobei das (Meth)acryl-Copolymer von einem (Meth)acrylmonomer abgeleitet ist, das Acrylsäure, Methacrylsäure, Methylmethacrylsäure, Methylmethacrylat, Ethylmethacrylat, einen Hydroxyvinylether, Methylacrylat, Ethylacrylat, n-Propylacrylat, Isopropylacrylat, n-Butylacrylat (BA), n-Decylacrylat, Isobutylacrylat, n-Amylacrylat, n-Hexylacrylat, Isoamylacrylat, 2-Hydroxyethylacrylat, 2-Hydroxypropylacrylat, N,N-Dimethylaminoethylacrylat, N,N-Diethylaminoethylacrylat, t-Butylaminoethylacrylat, 2-Sulfoethylacrylat, Trifluorethylacrylat, Glycidylacrylat, Benzylacrylat, Allylacrylat, 2-n-Butoxyethylacrylat, 2-Chlorethylacrylat, sec-Butylacrylat, tert-Butylacrylat, 2-Ethylbutylacrylat, Cinnamylacrylat, Crotylacrylat, Cyclohexylacrylat, Cyclopentylacrylat, 2-Ethoxyethylacrylat, Furfurylacrylat, Hexafluorisopropylacrylat, Methallylacrylat, 3-Methoxybutylacrylat, 2-Methoxybutylacrylat, 2-Nitro-2-methylpropylacrylat, n-Octylacrylat, 2-Ethylhexylacrylat, 2-Phenoxyethylacrylat, 2-Phenylethylacrylat, Phenylacrylat, Propargylacrylat, Tetrahydrofurfurylacrylat und Tetrahydropyranylacrylat, Methylmethacrylat, Ethylmethacrylat, n-Propylmethacrylat, n-Butylmethacrylat (BMA), Isopropylmethacrylat, Isobutylmethacrylat, n-Amylmethacrylat, n-Hexylmethacrylat, Isoamylmethacrylat, 2-Hydroxyethylmethacrylat, 2-Hydroxypropylmethacrylat, N,N-Dimethylaminoethylmethacrylat, N,N-Diethylaminoethylmethacrylat, t-Butylaminoethylmethacrylat, 2-Sulfoethylmethacrylat, Trifluorethylmethacrylat, Glycidylmethacrylat (GMA), Benzylmethacrylat, Allylmethacrylat, 2-n-Butoxyethylmethacrylat, 2-Chlorethylmethacrylat, sec-Butylmethacrylat, tert-Butylmethacrylat, 2-Ethylbutylmethacrylat, Cinnamylmethacrylat, Crotylmethacrylat, Cyclohexylmethacrylat, Cyclopentylmethacrylat, 2-Ethoxyethylmethacrylat, Furfurylmethacrylat, Hexafluorisopropylmethacrylat, Methallylmethacrylat, 3-Methoxybutylmethacrylat, 2-Methoxybutylmethacrylat, 2-Nitro-2-methylpropylmethacrylat, n-Octylmethacrylat, 2-Ethylhexylmethacrylat, 2-Phenoxyethylmethacrylat, 2-Phenylethylmethacrylat, Phenylmethacrylat, Propargylmethacrylat, Tetrahydrofurfurylmethacrylat, Tetrahydropyranylmethacrylat, Hydroxyalkylacrylate und -methacrylate, Acrylsäure und ihre Salze, Acrylnitril, Acrylamid, Methyl-alpha-chloracrylat, Methyl-2-cyanacrylat, N-Ethylacrylamid, N,N-Diethylacrylamid, Acrolein, Methacrylsäure und ihre Salze, Methacrylnitril, Methacrylamid, N-Methylmethacrylamid, N-Ethylmethacrylamid, N,N-Diethylmethacrylamid, N,N-Dimethylmethacrylamid, N-Phenylmethacrylamid, Methacrolein oder eine Mischung aus zwei beliebigen oder mehr davon enthält.

**18.** Verfahren nach einem der Ansprüche 11 bis 17, wobei das UV-härtbare Acrylpolymer ein Gewichtsmittel des Molekulargewichts (Mw), das von 30.000 g/mol bis 300.000 g/mol beträgt, aufweist, bestimmt durch das in der Beschreibung definierte GPC-Verfahren.

**19.** Verfahren nach einem der Ansprüche 11 bis 18, wobei die UV-härtbare Heißschmelzhaftmittelzusammensetzung

ferner ein Antioxidans umfasst.

**20.** Verfahren nach einem der Ansprüche 11 bis 19, wobei die UV-härtbare Heißschmelzhaftmittelzusammensetzung ferner einen Klebrigmacher umfasst.

**21.** Verfahren nach einem der Ansprüche 11 bis 20, wobei die UV-härtbare Heißschmelzhaftmittelzusammensetzung im Wesentlichen frei von Lösemitteln und flüchtigen Bestandteilen ist.

## Revendications

**1.** Article de fabrication comprenant :

un élément de revêtement de sol ayant une face avers et une face revers ;
une couche adhésive appliquée sur la face revers ; et
une doublure détachable adhérant à la couche adhésive ;
dans lequel :
la couche adhésive comprend une composition adhésive thermofusible durcissable aux UV comprenant un copolymère acrylique durcissable aux UV dérivé d'un copolymère (méth)acrylique lié par covalence à un composé de la formule (I), (II) ou (III) par la fraction oléfinique du composé :

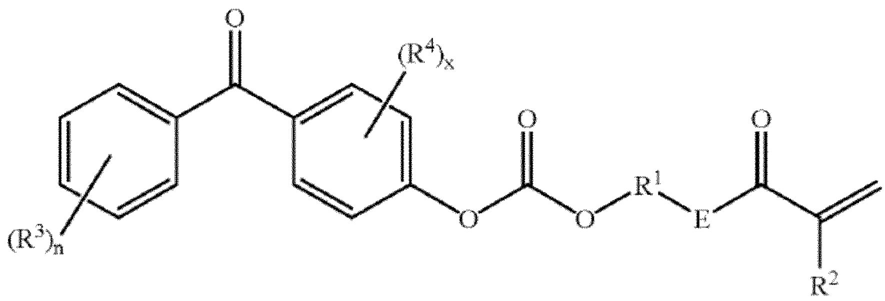

(I) ;

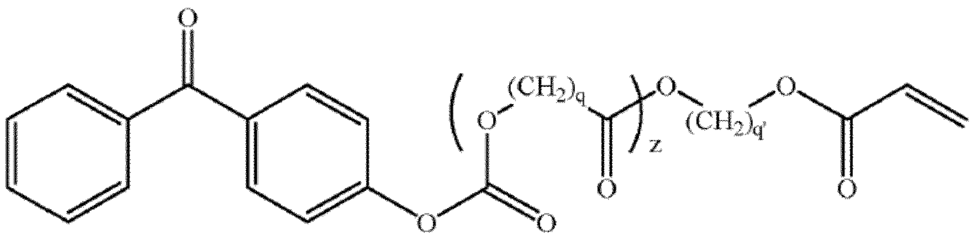

(II) ;

ou

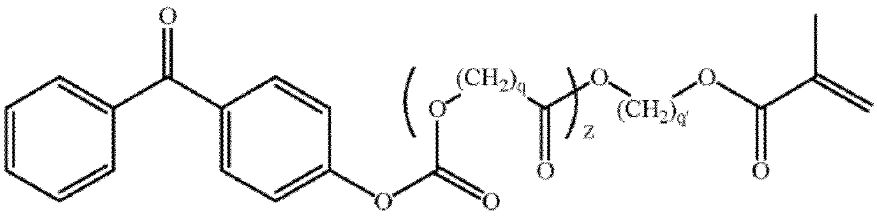

(III) ;

où :
$R^1$ est un groupe coupleur ; où :

$R^1$ est arylène, cycloalkylényle, $-[C(R^6)(R^7)_{n'}-$, ou $- ([C(R^6)(R^7)]_{n'}C(O)\}_{x'}[O(C(R^6)(^{R7}))_y]_p-$ ;
chaque $R^6$ est individuellement H, $OR^{10}$, alkyle, aryle ou C(O)OH ;

chaque $R^7$ est individuellement H, $OR^{10}$, alkyle ou aryle ;
chaque $R^{10}$ est individuellement H ou alkyle ;
n' va de 1 à 12 ;
y est 1, 2 ou 3 ;
p est 1, 2 ou 3 ; et
x' va de 1 à 10 ;
$R^2$ est H ou alkyle ;
E est O ou $NR^5$ ;
chaque $R^3$ est individuellement un substituant choisi dans le groupe constitué d'halogène, alkyle, O-alkyle, cycloalkyle et un groupe alkyle contenant un hétéroatome, halogène, groupe carbonyle, alcoxy ou groupe amino ;
chaque $R^4$ est individuellement un substituant choisi dans le groupe constitué d'halogène, alkyle, O-alkyle, cycloalkyle et un groupe alkyle contenant un hétéroatome, halogène, groupe carbonyle, alcoxy ou groupe amino ;
$R^5$ est H ou alkyle ;
n' va de 0 à 5 ;
x va de 0 à 4 ; et
chacun parmi q, q' et z va individuellement de 1 à 10.

**2.** Article selon la revendication 1, où $R^1$ est $-(CH_2)_{n'}-$, cyclohéxan-1,4-yle, phénylén-1,4-yle, $-[(CH_2)_3C(O)]_2-O-(CH_2)_y-$, $-C(CH_3)(C(O)OH)-$, - C(H)(phényle)$C(CH_3)(H)-$, ou $-CH_2C(CH_3)_2CH_2-$.

**3.** Article selon la revendication 1 ou la revendication 2, dans lequel $R^1$ est $-(CH_2)_3-$ ; E est O ; n est 0, x est 0 et $R^2$ est H ou méthyle.

**4.** Article selon l'une quelconque des revendications 1 à 3, dans lequel le composé de la formule (I), (II) ou (III) est :

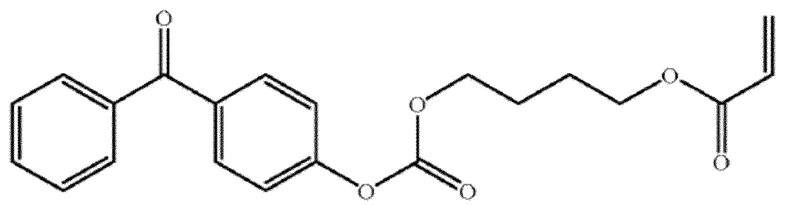

acrylate de 4-(((4-benzoylphénoxy)carbonyl)oxy)butyle ;

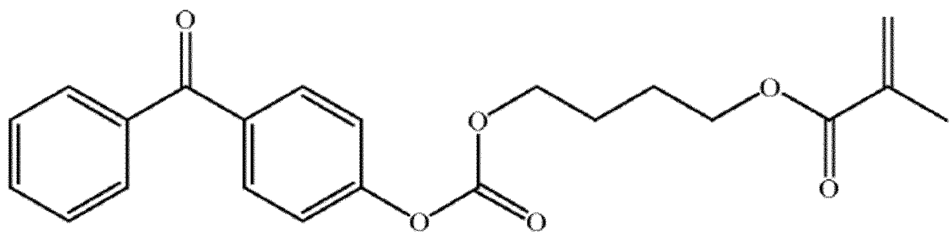

méthacrylate de 4-(((4-benzoylphénoxy)carbonyl)oxy)butyle ;

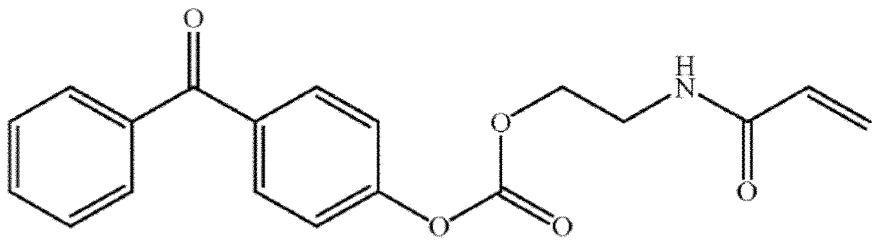

carbonate de 2-acrylamidoéthyl (4-benzoylphényle) ;

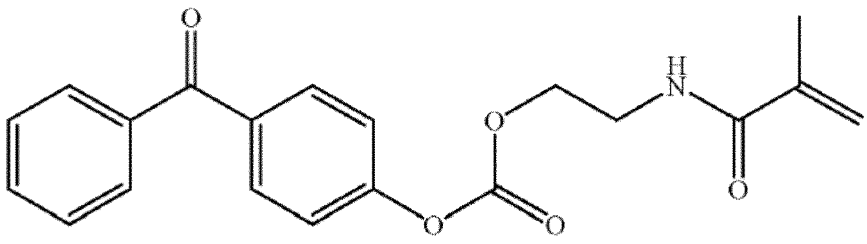

carbonate de 4-benzoylphényl (2-méthacrylamidoéthyle) ;

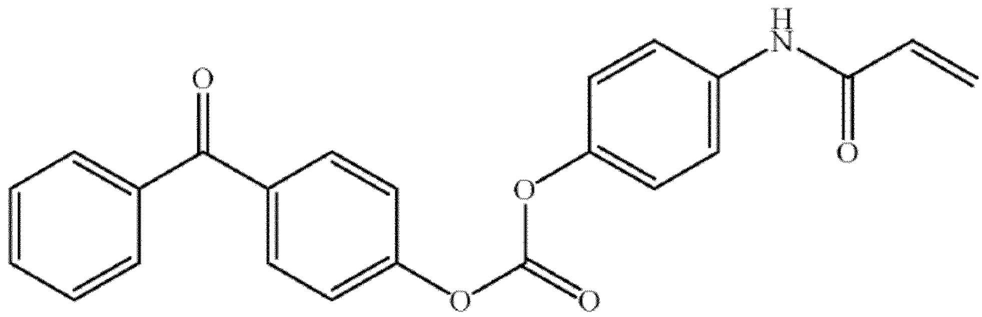

carbonate de 4-acrylamidophényl (4-benzoylphényle) ;

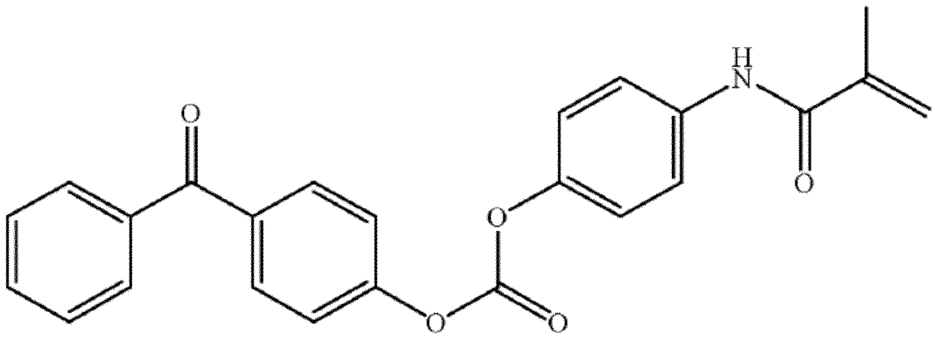

carbonate de 4-benzoylphényl (4-méthacrylamidophényle) ;

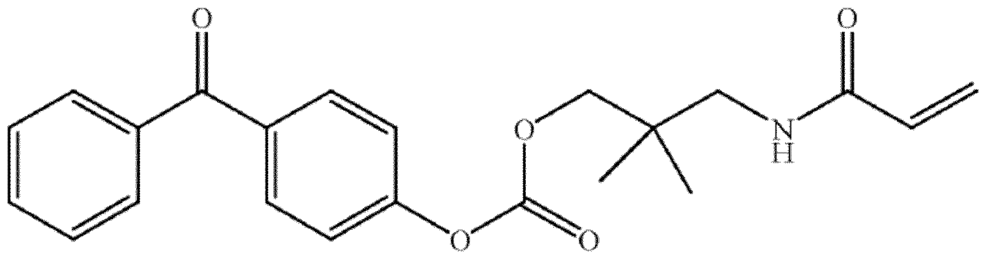

carbonate de 3-acrylamido-2,2-diméthylpropyl (4-benzoylphényle) ;

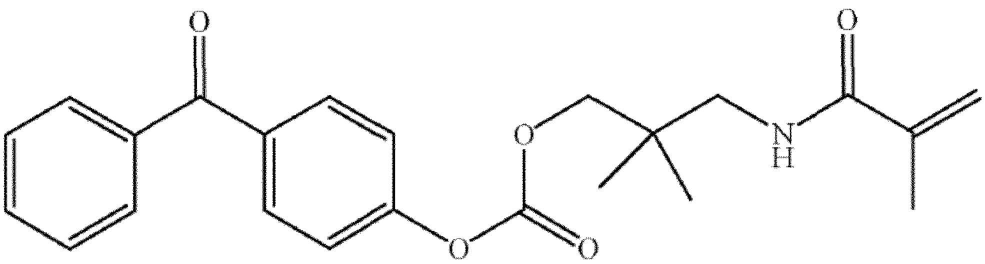

carbonate de 4-benzoylphényl (3-méthacrylamido-2,2-diméthylpropyle) ;

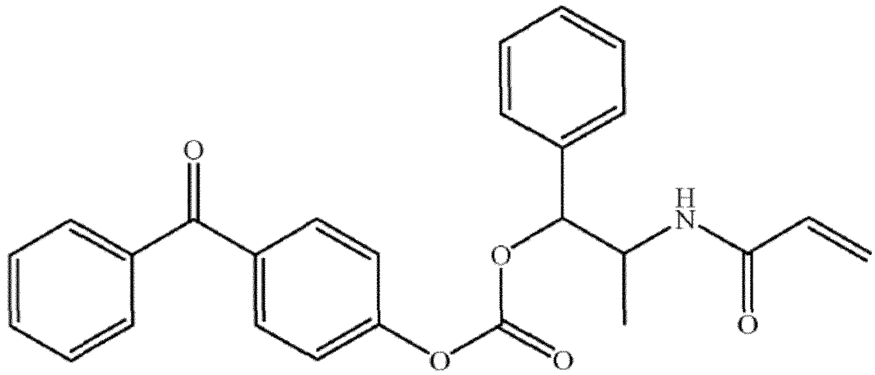

carbonate de 2-acrylamido-1-phénylpropyl (4-benzoylphényle) ;

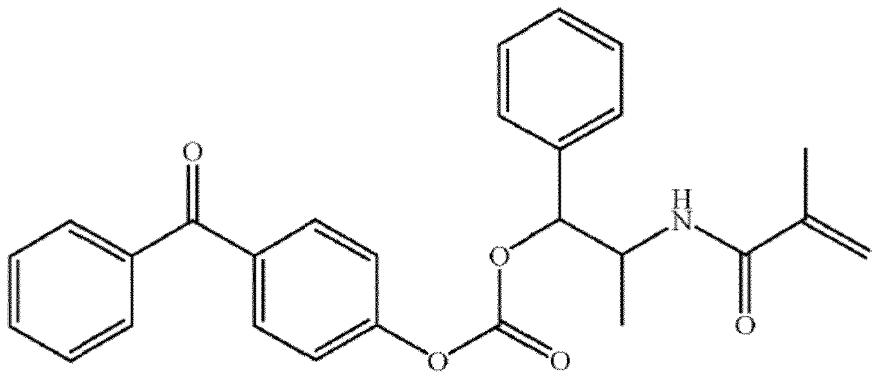

carbonate de 4-benzoylphényl (2-méthacrylamido-1-phénylpropyle) ;

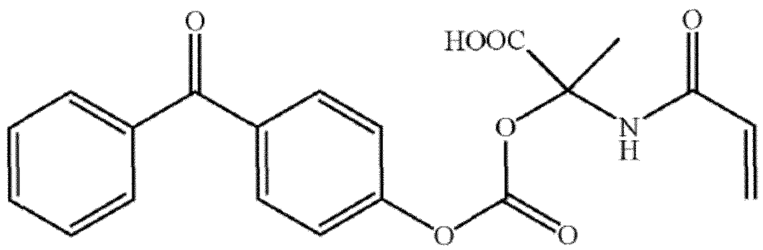

acide 2-acrylamido-2-(((4-benzoylphénoxy)carbonyl)oxy)propanoïque ;

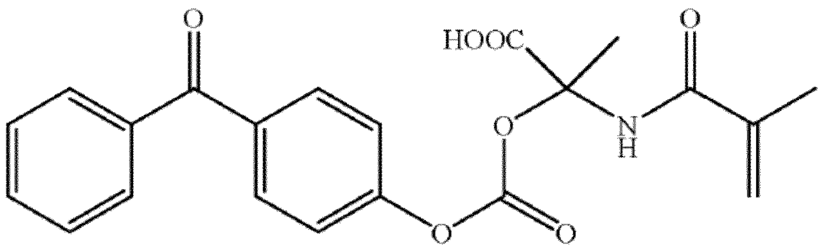

acide 2-(((4-benzoylphénoxy)carbonyl)oxy)-2-méthacrylamidopropanoïque ;

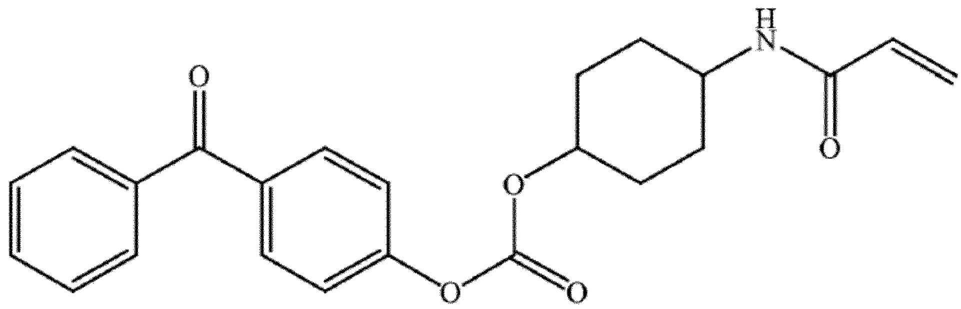

carbonate de 4-acrylamidocyclohexyl (4-benzoylphényle) ;

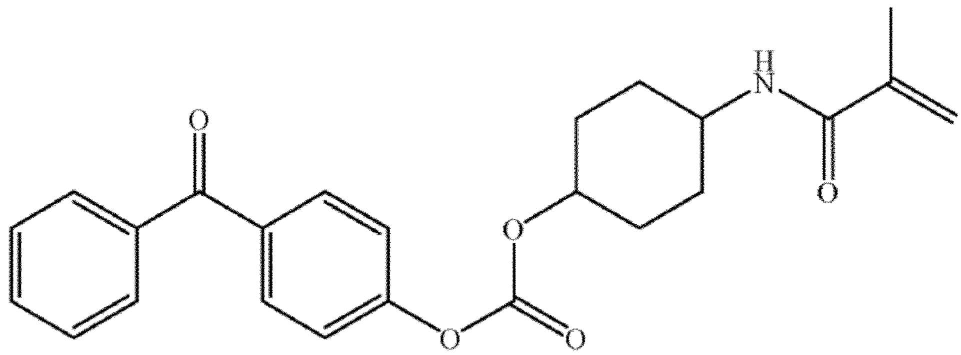

carbonate de 4-benzoylphényl (4-méthacrylamidocyclohexyle) ;

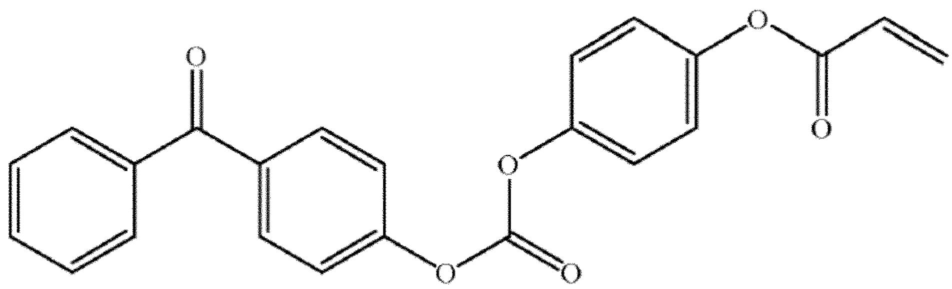

acrylate de 4-(((4-benzoylphénoxy)carbonyl)oxy)phényle ; ou

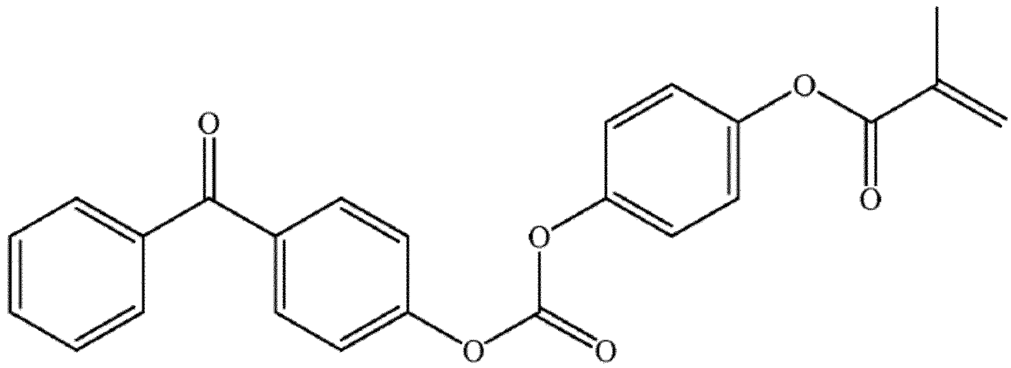

méthacrylate de 4-(((4-benzoylphénoxy)carbonyl)oxy)phényle.

**5.** Article selon l'une quelconque des revendications 1 à 4, dans lequel le composé de la formule (I), (II) ou (III) est présent de 0,01 % en poids à 5 % en poids, sur la base des matières solides de la composition adhésive thermofusible durcissable aux UV.

6. Article selon l'une quelconque des revendications 1 à 5, dans lequel le copolymère (méth)acrylique est dérivé d'un monomère (méth)acrylique contenant de l'acide acrylique, acide méthacrylique, acide méthylméthacrylique, méthylméthacrylate, éthylméthacrylate, éther d'hydroxyvinyle, acrylate de méthyle, acrylate d'éthyle, acrylate de n-propyle, acrylate d'isopropyle, acrylate de n-butyle (BA), acrylate de n-décyle, acrylate d'isobutyle, acrylate de n-amyle, acrylate de n-hexyle, acrylate d'isoamyle, acrylate de 2-hydroxyéthyle, acrylate de 2-hydroxypropyle, acrylate de N,N-diméthylaminoéthyle, acrylate de N,N-diéthylaminoéthyle, acrylate de t-butylaminoéthyle, acrylate de 2-sulfoéthyle, acrylate de trifluoroéthyle, acrylate de glycidyle, acrylate de benzyle, acrylate d'allyle, acrylate de 2-n-butoxyéthyle, acrylate de 2-chloroéthyle, acrylate de sec-butyle, acrylate de tert-butyle, acrylate de 2-éthylbutyle, acrylate de cinnamyle, acrylate de crotyle, acrylate de cyclohexyle, acrylate de cyclopentyle, acrylate de 2-éthoxyéthyle, acrylate de furfuryle, acrylate d'hexafluoroisopropyle, acrylate de méthallyle, acrylate de 3-méthoxybutyle, acrylate de 2-méthoxybutyle, acrylate de 2-nitro-2-méthylpropyle, acrylate de n-octyle, acrylate de 2-éthylhexyle, acrylate de 2-phénoxyéthyle, acrylate de 2-phényléthyle, acrylate de phényle, acrylate de propargyle, acrylate de tétrahydrofurfuryle et acrylate de tétrahydropyranyle, méthacrylate de méthyle, méthacrylate d'éthyle, méthacrylate de n-propyle, méthacrylate de n-butyle (BMA), méthacrylate d'isopropyle, méthacrylate d'isobutyle, méthacrylate de n-amyle, méthacrylate de n-hexyle, méthacrylate d'isoamyle, méthacrylate de 2-hydroxyéthyle, méthacrylate de 2-hydroxypropyle, méthacrylate de N,N-diméthylaminoéthyle, méthacrylate de N,N-diéthylaminoéthyle, méthacrylate de t-butylaminoéthyle, méthacrylate de 2-sulfoéthyle, méthacrylate de trifluoroéthyle, méthacrylate de glycidyle (GMA), méthacrylate de benzyle, méthacrylate d'allyle, méthacrylate de 2-n-butoxyéthyle, méthacrylate de 2-chloroéthyle, méthacrylate de sec-butyle, méthacrylate de tert-butyle, méthacrylate de 2-éthylbutyle, méthacrylate de cinnamyle, méthacrylate de crotyle, méthacrylate de cyclohexyle, méthacrylate de cyclopentyle, méthacrylate de 2-éthoxyéthyle, méthacrylate de furfuryle, méthacrylate d'hexafluoroisopropyle, méthacrylate de méthallyle, méthacrylate de 3-méthoxybutyle, méthacrylate de 2-méthoxybutyle, méthacrylate de 2-nitro-2-méthylpropyle, méthacrylate de n-octyle, méthacrylate de 2-éthylhexyle, méthacrylate de 2-phénoxyéthyle, méthacrylate de 2-phényléthyle, méthacrylate de phényle, méthacrylate de propargyle, méthacrylate de tétrahydrofurfuryle, méthacrylate de tétrahydropyranyle, acrylates et méthacrylates d'hydroxyalkyle, acide acrylique et ses sels, acrylonitrile, acrylamide, alpha-chloroacrylate de méthyle, 2-cyanoacrylate de méthyle, acrylamide de N-éthyle, acrylamide de N,N-diéthyle, acroléine, acide méthacrylique et ses sels, méthacrylonitrile, méthacrylamide, méthacrylamide de N-méthyle, méthacrylamide de N-éthyle, méthacrylamide de N,N-diéthyle, méthacrylamide de N,N-diméthyle, méthacrylamide de N-phényle, méthacroléine, ou un mélange de deux quelconques de ceux-ci ou plus.

7. Article selon l'une quelconque des revendications 1 à 6, dans lequel le polymère acrylique durcissable aux UV a une masse moléculaire moyenne en poids (Mw) allant de 30 000 g/mol à 300 000 g/mol, déterminée par le procédé GPC défini dans la description.

8. Article selon l'une quelconque des revendications 1 à 7, dans lequel la composition adhésive thermofusible durcissable aux UV comprend en outre un antioxydant.

9. Article selon l'une quelconque des revendications 1 à 8, dans lequel la composition adhésive thermofusible durcissable aux UV comprend en outre un agent poisseux.

10. Article selon l'une quelconque des revendications 1 à 9, dans lequel la composition adhésive thermofusible durcissable aux UV est essentiellement exempte de solvants et de composants volatils.

11. Procédé permettant la préparation d'un élément de revêtement de sol, le procédé comprenant :

le chauffage d'une composition adhésive thermofusible durcissable aux UV jusqu'à un état fondu à une température allant de 80 °C à 160 °C pour fournir un adhésif thermofusible durcissable aux UV fondu ;
l'application de l'adhésif thermofusible durcissable aux UV fondu sur une face revers de l'élément de revêtement de sol pour fournir un revêtement de sol recouvert d'adhésif ;
l'exposition de l'adhésif thermofusible durcissable aux UV sur la face revers du revêtement de sol à un rayonnement ultraviolet ayant une longueur d'onde allant de 250 nm à 260 nm pour photoamorcer le durcissement de l'adhésif thermofusible durcissable aux UV disposé sur l'élément de revêtement de sol afin de former un élément de revêtement de sol durci ayant un adhésif durci ; et
l'application d'une doublure détachable sur un adhésif durci ;
dans lequel :
la composition adhésive thermofusible durcissable aux UV comprend un copolymère acrylique durcissable aux UV dérivé d'un copolymère (méth)acrylique lié par covalence à un composé de la formule (I), (II) ou (III) par la fraction oléfinique du composé :

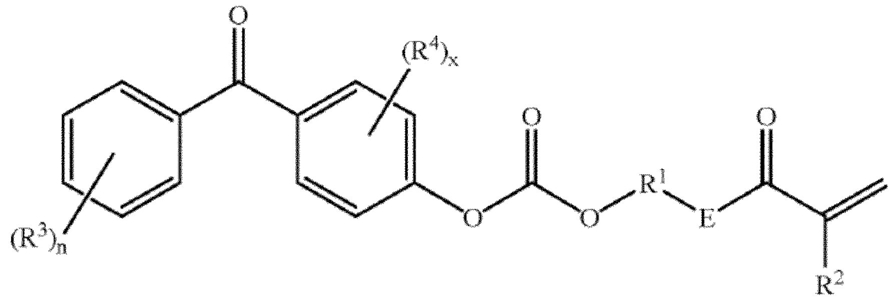

(I) ;

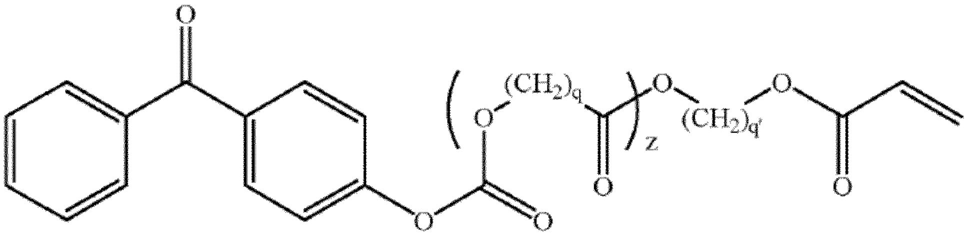

(II) ;

ou

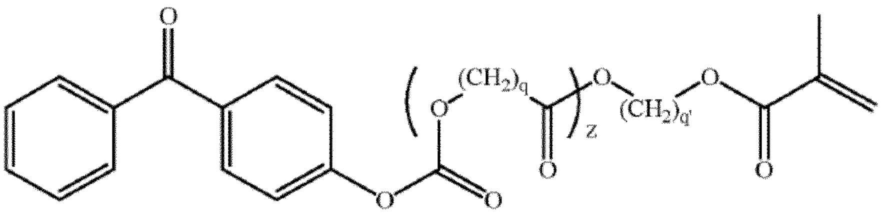

(III) ;

où :

$R^1$ est un groupe coupleur ; où :

$R^1$ est arylène, cycloalkylényle, $-[C(R^6)(R^7)]_{n'}-$, ou $-([C(R^6)(R^7)]_{n'}C(O)\}_{x'}[O(C(R^6)(R^7))_y]_p-$ ;
chaque $R^6$ est individuellement H, $OR^{10}$, alkyle, aryle ou
C(O)OH ; chaque $R^7$ est individuellement H, $OR^{10}$, alkyle ou aryle ;
chaque $R^{10}$ est individuellement H ou alkyle ;
n' va de 1 à 12 ;
y est 1, 2 ou 3 ;
p est 1, 2 ou 3 ; et
x' va de 1 à 10 ;
$R^2$ est H ou alkyle ;
E est O ou $NR^5$ ;
chaque $R^3$ est individuellement un substituant choisi dans le groupe constitué d'halogène, alkyle, O-alkyle, cycloalkyle et un groupe alkyle contenant un hétéroatome, halogène, groupe carbonyle, alcoxy ou groupe amino ;
chaque $R^4$ est individuellement un substituant choisi dans le groupe constitué d'halogène, alkyle, O-alkyle, cycloalkyle et un groupe alkyle contenant un hétéroatome, halogène, groupe carbonyle, alcoxy ou groupe amino ;
$R^5$ est H ou alkyle ;
n' va de 0 à 5 ;
x va de 0 à 4 ; et
chacun parmi q, q' et z va individuellement de 1 à 10.

**12.** Procédé selon la revendication 11, dans lequel le chauffage d'une composition adhésive thermofusible durcissable aux UV jusqu'à un état fondu est effectué à une température allant de 120 °C et 160 °C pour fournir un adhésif

thermofusible durcissable aux UV fondu.

**13.** Procédé selon la revendication 11 ou la revendication 12, où $R^1$ est - $(CH_2)_{n'}$-, cyclohéxan-1,4-yle, phénylén-1,4-yle, -$[(CH_2)_3C(O)]_2$-O-$(CH_2)_y$-, - $C(CH_3)(C(O)OH)$-, -C(H)(phényle)$C(CH_3)(H)$-, ou -$CH_2C(CH_3)_2CH_2$-.

**14.** Procédé selon l'une quelconque des revendications 11 à 13, où $R^1$ est - $(CH_2)_3$- ; E est O ; n est 0, x est 0 et $R^2$ est H ou méthyle.

**15.** Procédé selon l'une quelconque des revendications 11 à 14, dans lequel le composé de la formule (I), (II) ou (III) est :

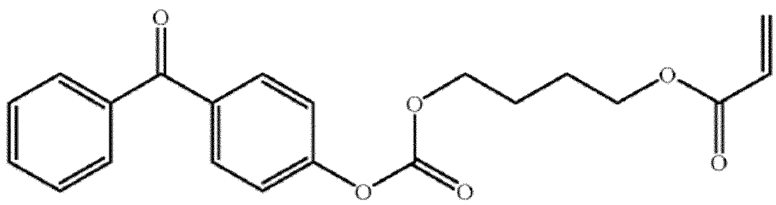

acrylate de 4-(((4-benzoylphénoxy)carbonyl)oxy)butyle ;

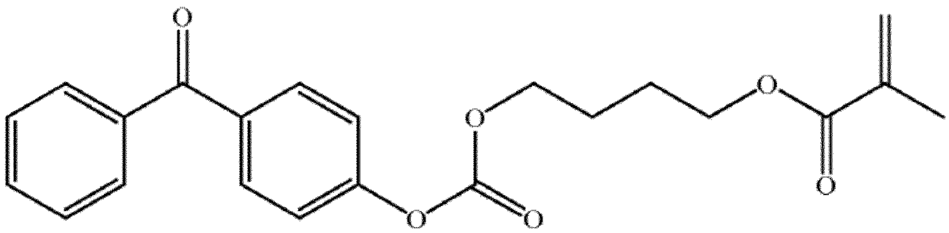

méthacrylate de 4-(((4-benzoylphénoxy)carbonyl)oxy)butyle ;

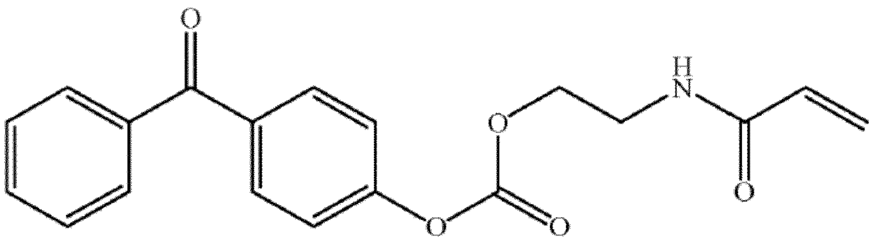

carbonate de 2-acrylamidoéthyl (4-benzoylphényle) ;

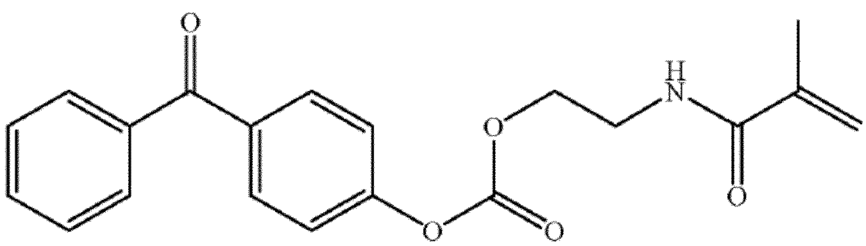

carbonate de 4-benzoylphényl (2-méthacrylamidoéthyle) ;

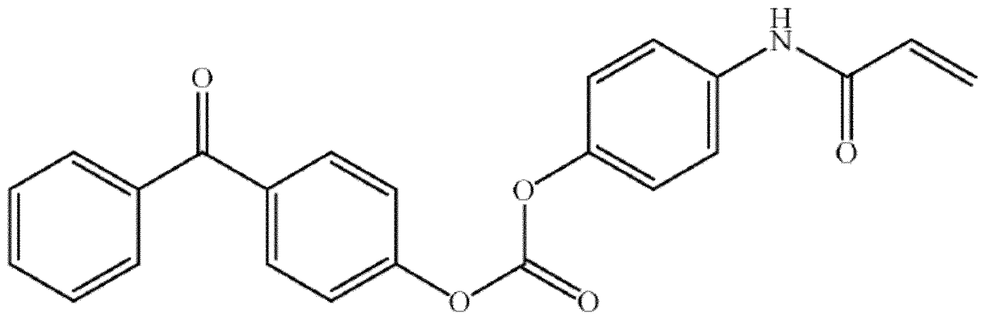

carbonate de 4-acrylamidophényl (4-benzoylphényle) ;

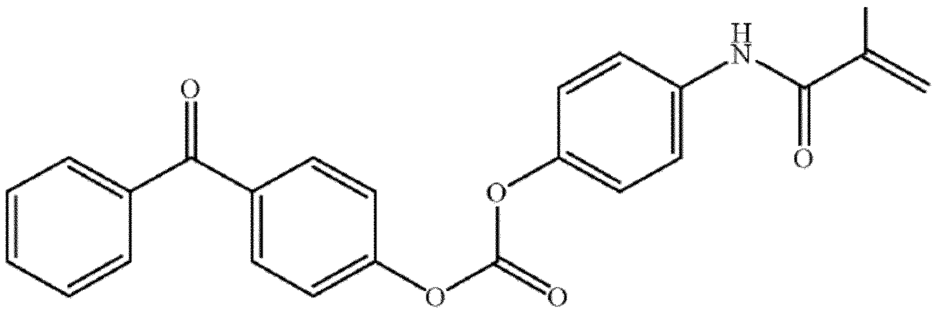

carbonate de 4-benzoylphényl (4-méthacrylamidophényle) ;

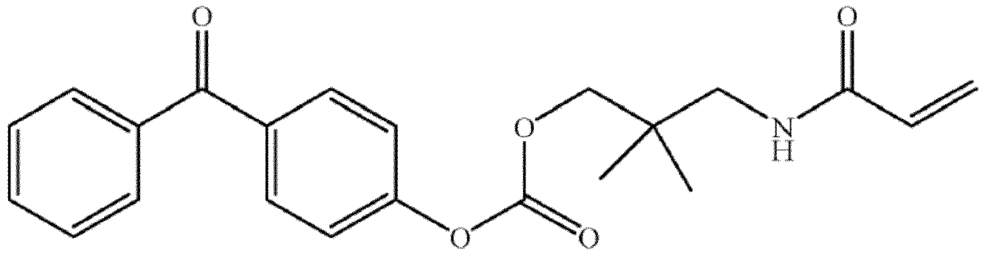

carbonate de 3-acrylamido-2,2-diméthylpropyl (4-benzoylphényle) ;

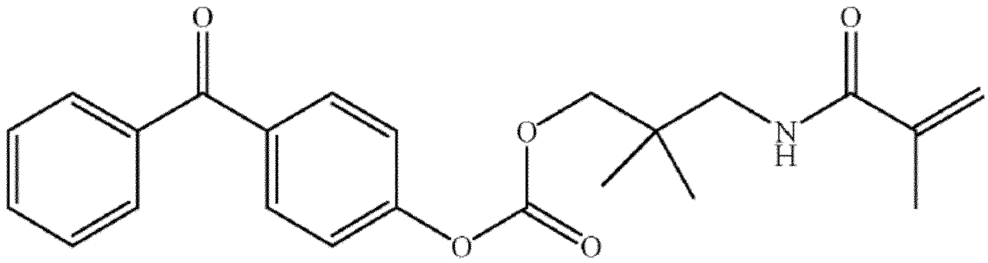

carbonate de 4-benzoylphényl (3-méthacrylamido-2,2-diméthylpropyle) ;

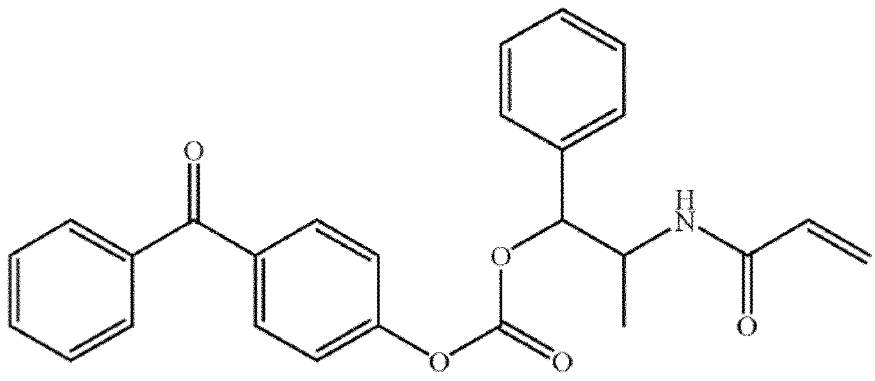

carbonate de 2-acrylamido-1-phénylpropyl (4-benzoylphényle) ;

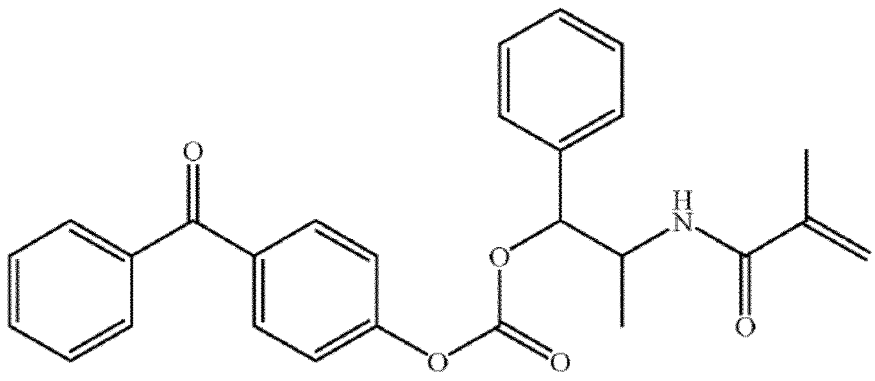

carbonate de 4-benzoylphényl (2-méthacrylamido-1-phénylpropyle) ;

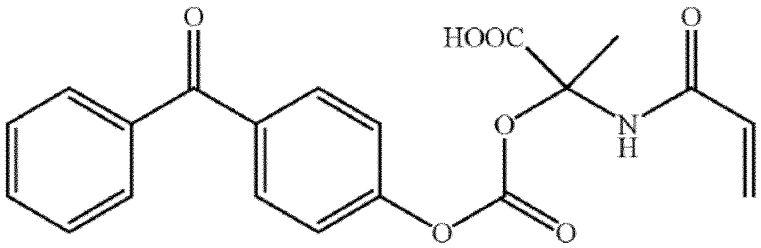

acide 2-acrylamido-2-(((4-benzoylphénoxy)carbonyl)oxy)propanoïque ;

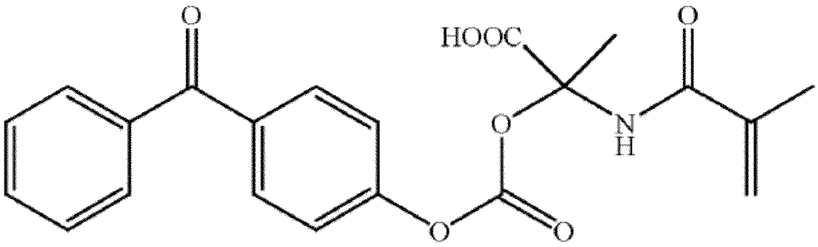

acide 2-(((4-benzoylphénoxy)carbonyl)oxy)-2-méthacrylamidopropanoïque ;

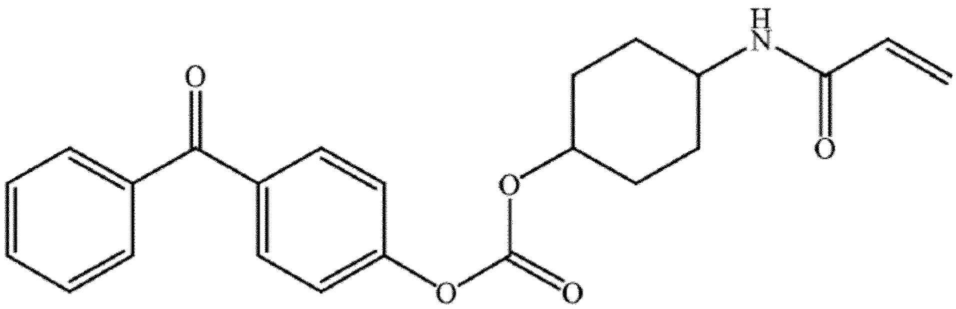

carbonate de 4-acrylamidocyclohexyl (4-benzoylphényle) ;

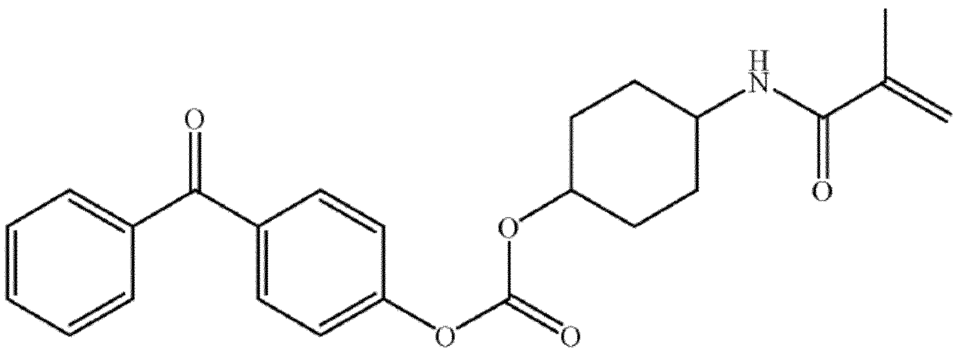

carbonate de 4-benzoylphényl (4-méthacrylamidocyclohexyle) ;

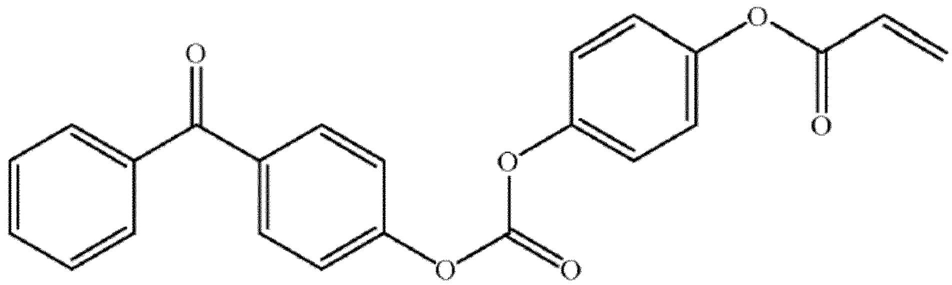

acrylate de 4-(((4-benzoylphénoxy)carbonyl)oxy)phényle ; ou

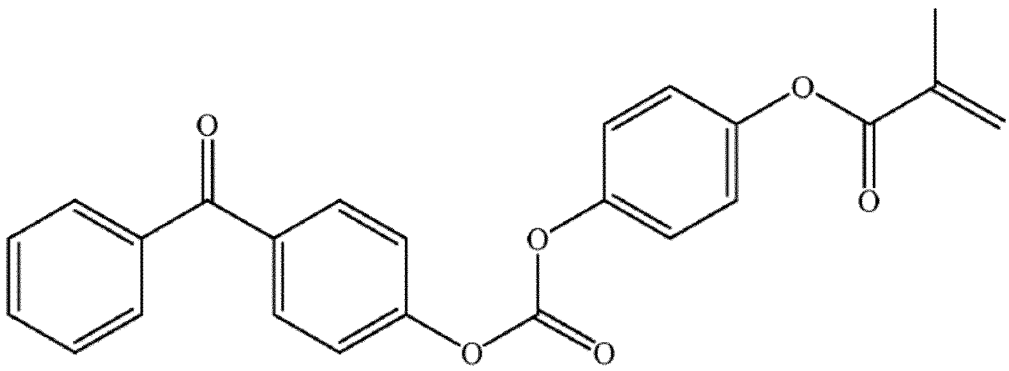

méthacrylate de 4-(((4-benzoylphénoxy)carbonyl)oxy)phényle.

**16.** Procédé selon l'une quelconque des revendications 11 à 15, dans lequel le composé de la formule (I), (II) ou (III) est présent de 0,01 % en poids à 5 % en poids, sur la base des matières solides de la composition adhésive thermofusible durcissable aux UV.

**17.** Procédé selon l'une quelconque des revendications 11 à 16, dans lequel le copolymère (méth)acrylique est dérivé d'un monomère (méth)acrylique contenant de l'acide acrylique, acide méthacrylique, acide méthylméthacrylique, méthylméthacrylate, éthylméthacrylate, éther d'hydroxyvinyle, acrylate de méthyle, acrylate d'éthyle, acrylate de n-propyle, acrylate d'isopropyle, acrylate de n-butyle (BA), acrylate de n-décyle, acrylate d'isobutyle, acrylate de n-amyle, acrylate de n-hexyle, acrylate d'isoamyle, acrylate de 2-hydroxyéthyle, acrylate de 2-hydroxypropyle, acrylate de N,N-diméthylaminoéthyle, acrylate de N,N-diéthylaminoéthyle, acrylate de t-butylaminoéthyle, acrylate de 2-sulfoéthyle, acrylate de trifluoroéthyle, acrylate de glycidyle, acrylate de benzyle, acrylate d'allyle, acrylate de 2-n-butoxyéthyle, acrylate de 2-chloroéthyle, acrylate de sec-butyle, acrylate de tert-butyle, acrylate de 2-éthylbutyle, acrylate de cinnamyle, acrylate de crotyle, acrylate de cyclohexyle, acrylate de cyclopentyle, acrylate de 2-éthoxyéthyle, acrylate de furfuryle, acrylate d'hexafluoroisopropyle, acrylate de méthallyle, acrylate de 3-méthoxybutyle, acrylate de 2-méthoxybutyle, acrylate de 2-nitro-2-méthylpropyle, acrylate de n-octyle, acrylate de 2-éthylhexyle, acrylate de 2-phénoxyéthyle, acrylate de 2-phényléthyle, acrylate de phényle, acrylate de propargyle, acrylate de tétrahydrofurfuryle et acrylate de tétrahydropyranyle, méthacrylate de méthyle, méthacrylate d'éthyle, méthacrylate de n-propyle, méthacrylate de n-butyle (BMA), méthacrylate d'isopropyle, méthacrylate d'isobutyle, méthacrylate de n-amyle, méthacrylate de n-hexyle, méthacrylate d'isoamyle, méthacrylate de 2-hydroxyéthyle, méthacrylate de 2-hydroxypropyle, méthacrylate de N,N-diméthylaminoéthyle, méthacrylate de N,N-diéthylaminoéthyle, méthacrylate de t-butylaminoéthyle, méthacrylate de 2-sulfoéthyle, méthacrylate de trifluoroéthyle, méthacrylate de glycidyle (GMA), méthacrylate de benzyle, méthacrylate d'allyle, méthacrylate de 2-n-butoxyéthyle, méthacrylate de 2-chloroéthyle, méthacrylate de sec-butyle, méthacrylate de tert-butyle, méthacrylate de 2-éthylbutyle, méthacrylate de cinnamyle, méthacrylate de crotyle, méthacrylate de cyclohexyle, méthacrylate de cyclopentyle, méthacrylate de 2-éthoxyéthyle, méthacrylate de furfuryle, méthacrylate d'hexafluoroisopropyle, méthacrylate de méthallyle, méthacrylate de 3-méthoxybutyle, méthacrylate de 2-méthoxybutyle, méthacrylate de 2-nitro-2-méthylpropyle, méthacrylate de n-octyle, méthacrylate de 2-éthylhexyle, méthacrylate de 2-phénoxyéthyle, méthacrylate de 2-phényléthyle, méthacrylate de phényle, méthacrylate de propargyle, méthacrylate de tétrahydrofurfuryle, méthacrylate de tétrahydropyranyle, acrylates et méthacrylates d'hydroxyalkyle, acide acrylique et ses sels, acrylonitrile, acrylamide, alpha-chloroacrylate de méthyle, 2-cyanoacrylate de méthyle, acrylamide de N-éthyle, acrylamide de N,N-diéthyle, acroléine, acide méthacrylique et ses sels, méthacrylonitrile, méthacrylamide, méthacrylamide de N-méthyle, méthacrylamide de N-éthyle, méthacrylamide de N,N-diéthyle, méthacrylamide de N,N-diméthyle, méthacrylamide de N-phényle, méthacroléine, ou un mélange de deux quelconques de ceux-ci ou plus.

**18.** Procédé selon l'une quelconque des revendications 11 à 17, dans lequel le polymère acrylique durcissable aux UV a une masse moléculaire moyenne en poids (Mw) allant de 30 000 g/mol à 300 000 g/mol, déterminée par le procédé GPC défini dans la description.

**19.** Procédé selon l'une quelconque des revendications 11 à 18, dans lequel la composition adhésive thermofusible durcissable aux UV comprend en outre un antioxydant.

**20.** Procédé selon l'une quelconque des revendications 11 à 19, dans lequel la composition adhésive thermofusible durcissable aux UV comprend en outre un agent poisseux.

**21.** Procédé selon l'une quelconque des revendications 11 à 20, dans lequel la composition adhésive thermofusible durcissable aux UV est essentiellement exempte de solvants et de composants volatils.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5128386 A


### Non-patent literature cited in the description


- **G. KANIG**. *Kolloid-zeitschrift & Zeitschrift fr Polymere*, vol. 190, 1
- **T. G. FOX**. *Bull. Am. Phys. Soc.*, 1956, vol. 1, 123
- Ullmanns Encyclopaedie der technischen Chemie. Verlag Chemie, 1980, vol. 19, 18
- Ullmann's Encyclopedia of Industrial Chemistry. VCH Weinheim, 1992, vol. 5,A21, 169
- **J. BRANDRUP** ; **E. H. IMMERGUT**. Polymer Handbook. J. Wiley, 1966
- **J. BRANDRUP,E.H. IMMERGUT**. Polymer Handbook. J. Wiley, 1975
- **J. BRANDRUP,E.H. IMMERGUT**. Polymer Handbook. J. Wiley, 1989